# EUROPEAN PATENT APPLICATION

(11) **EP 4 614 307 A1**
(43) Date of publication of application: **10.09.2025**
(21) Application number: 25724421.0
(22) Date of filing: 22.01.2025
(51) Int. Cl.: G06F 3/14, G06F 9/451, G06F 21/84, G06F 1/16

(54) **ELECTRONIC DEVICE AND OPERATING METHOD THEREFOR**

(30) Priority: 23.01.2024 KR 20240009936; 05.03.2024 KR 20240031565
(71) Applicant: Samsung Electronics Co., Ltd, Suwon-si, Gyeonggi-do 16677 (KR)
(72) Inventor: CHOI, Jinug, Suwon-si, Gyeonggi-do 16677 (KR); RYU, Jooyeol, Suwon-si, Gyeonggi-do 16677 (KR); SHIN, Huijong, Suwon-si, Gyeonggi-do 16677 (KR); CHANG, Seho, Suwon-si, Gyeonggi-do 16677 (KR); CHUN, Jinwook, Suwon-si, Gyeonggi-do 16677 (KR); CHOI, Wonsun, Suwon-si, Gyeonggi-do 16677 (KR)
(74) Representative: Gulde & Partner
(86) International application number: PCT/KR2025/001258
(87) International publication number: WO 2025/159509

(57) **Abstract**

The invention relates to displaying images with information on a second display (540) of an electronic device (400, 500). In order to provide that the image is displayed in a useful manner, the image is displayed in dependence of whether a status of the electronic device (400, 500) fulfils a first condition. Further, to avoid that information of the image is displayed in an unwanted manner, displaying the information is prevented or a suit-cover image is displayed on the image, in case the state of the electronic device (400, 500) fulfils a second condition.

## Description

### [Technical Field]

Embodiments of the disclosure relate to an electronic device and an operation method thereof, wherein an image on a display capable of maintaining a screen without power (e.g., a non-volatile display, an electronic ink (E-ink) display, an electrophoretic display) may be updated.

### [Background Art]

Electronic devices may refer to devices that perform a designated function according to the programs installed therein, such as electronic products, electronic notebooks, portable multimedia players, mobile communication terminals, tablet PCs, audio/video devices, desktop/laptop computers, or vehicle navigation systems. The electronic devices may provide various functions, such as call functions and multimedia file playback functions. The electronic devices are gradually becoming slimmer, more rigid, and more design-oriented while functional elements thereof are being developed to be differentiated.

A typical display may consume power to maintain a screen. A display capable of maintaining a screen without power may maintain a final displayed image (e.g., a final screen) for a predetermined period of time and consume substantially no power to maintain the screen. Electronic devices may include a display capable of maintaining a screen without power (e.g., a non-volatile display, an E-ink display, an electrophoretic display). The display capable of maintaining a screen without power may be applied to a device that maintains the same screen for a predetermined period of time, such as an e-book device. A display capable of maintaining a screen without power may be applied as a sub-display that is placed outside of an electronic device.

The above-described contents are presented as background information only to assist with an understanding of the disclosure. No determination and no assertion have been made as to whether any of the above might be applicable as prior art with regard to the disclosure.

### [Disclosure of Invention]

### [Solution to Problem]

When a display capable of maintaining a screen without power (e.g., a non-volatile display, an E-ink display, an electrophoretic display) is applied to an electronic device, a final displayed image (e.g., a final screen) may be maintained for a predetermined period of time without power consumption. When a battery of the electronic device is discharged, a final image (e.g., a final screen) displayed on the display capable of maintaining a screen without power may not be changed. When an image is updated on the display capable of maintaining a screen without power, substantially no power is required to maintain the final image (e.g., the final screen). Even when the battery of the electronic device is discharged, the final image (e.g., the final screen) on the display capable of maintaining a screen without power may remain displayed. For example, when the final image (e.g., the final screen) displayed on the display capable of maintaining a screen without power contains the user's sensitive information, personal information, and/or invalid information, the user's sensitive information, personal information, and/or invalid information may be exposed to the outside.

An embodiment of the disclosure may provide an electronic device and an operation method thereof, wherein an image on a display capable of maintaining a screen without power (e.g., a non-volatile display, an E-ink display, an electrophoretic display) may be updated (e.g., changed) according to a configured condition.

An embodiment of the disclosure may provide an electronic device and an operation method thereof, wherein when a final image (e.g., a final screen) displayed on a display capable of maintaining a screen without power (e.g., a non-volatile display, an E-ink display, an electrophoretic display) contains the user's sensitive information, personal information, and/or invalid information, the final image may be updated (e.g., changed) to a different image.

According to an embodiment of the disclosure, when a final image (e.g., a final screen) displayed on a display capable of maintaining a screen without power (e.g., a non-volatile display, an E-ink display, an electrophoretic display) contains the user's sensitive information, personal information, and/or invalid information, the user's sensitive information, personal information, and/or invalid information, contained in the image may be concealed (blinded) (e.g., blocked).

The technical problems to be achieved in this document are not limited to the technical problems mentioned above and may be expanded in various ways within the scope of the disclosure. Other technical problems not mentioned may be clearly understood by a person having ordinary knowledge in the technical field to which this document belongs from the description below.

An electronic device according to an embodiment of the disclosure may include a housing, a hinge unit, a first display, a second display, a battery, at least one processor, and a memory. The housing may include a first housing and a second housing. The hinge unit may rotatably connect the first housing and the second housing to each other. The first display may be disposed on a first surface of the first housing and a first surface of the second housing. The second display may be disposed on a second surface of the first housing and/or a second surface of the second housing. The battery may supply power to the first display and the second display. The memory may store instructions. When the instructions are individually or collectively executed by the at least one processor, the electronic device may determine whether state information of the electronic device satisfies a first specific condition. The electronic device may display a first image on the second display, based on that state information of the electronic device satisfies the first specific condition. The electronic device may determine whether state information of the electronic device satisfies a second specific condition, while displaying the first image on the second display. The electronic device may prevent at least a part of the first image from being displayed, based on that state information of the electronic device satisfies the second specific condition.

In an operation method of an electronic device according to an embodiment of the disclosure, the electronic device may include a housing including a first housing and a second housing, a hinge unit configured to rotatably connect the first housing and the second housing to each other, a first display disposed on a first surface of the first housing and a first surface of the second housing, a second display disposed on a second surface of the first housing and/or a second surface of the second housing, a battery configured to supply power to the first display and the second display, at least one processor, and a memory configured to store instructions. The operation method may include determining whether state information of the electronic device satisfies a first specific condition. Based on that state information of the electronic device satisfies the first specific condition, a first image may be displayed on the second display. The operation method may include determining whether the state information of the electronic device satisfies a second specific condition while the first image is displayed on the second display. The operation method may include preventing at least a part of the first image from being displayed, based on that state information of the electronic device satisfies the second specific condition.

In a non-transitory computer-readable recording medium storing instructions readable by the processor of an electronic device, the instructions, when executed by the processor, may cause the electronic device to determine whether state information of the electronic device satisfies a first specific condition. The instructions, when executed by the processor, may cause the electronic device to display a first image on a second display, based on that state information of the electronic device satisfies the first specific condition. The instructions, when executed by the processor, may cause the electronic device to determine whether state information of the electronic device satisfies a second specific condition while the first image is displayed on the second display. Based on that state information of the electronic device satisfies the second specific condition, the instructions, when executed by the processor, may cause the electronic device to prevent at least a part of the first image from being displayed.

According to an aspect of the disclosure, an electronic device may include a housing, a first display (330) disposed on a first portion of the housing, wherein the first display comprising OLED or LCD, a second display (540) disposed on a second portion of the housing, wherein after an image on the second display has been updated, no power is required to maintain the image on the second display, wherein the second display comprising electronic ink and electrophoretic display, a battery (189), and at least one processor (510). a memory (130) configured to store instructions that, when executed by the at least one processor (510) individually or collectively, cause the electronic device (400, 500) to identify if state information of the electronic device (400, 500) satisfies a defined condition. a memory (130) configured to store instructions that, when executed by the at least one processor (510) individually or collectively, cause the electronic device (400, 500) to control the second display to change at least a portion of the first image, based on identifying that the state information of the electronic device (400, 500) satisfies the defined condition.

In an electronic device and an operation method thereof according to an embodiment of the disclosure, an image on a display capable of maintaining a screen without power (e.g., a non-volatile display, an E-ink display, an electrophoretic display) may be updated (e.g., changed) according to a configured condition.

In an electronic device and an operation method thereof according to an embodiment of the disclosure, when a final image (e.g., a final screen) displayed on a display capable of maintaining a screen without power (e.g., a non-volatile display, an E-ink display, an electrophoretic display) contains the user's sensitive information, personal information, and/or invalid information, the final image may be updated (e.g., changed) to a different image.

In an electronic device and an operation method thereof according to an embodiment of the disclosure, when a final image (e.g., a final screen) displayed on a display capable of maintaining a screen without power (e.g., a non-volatile display, an E-ink display, an electrophoretic display) contains the user's sensitive information, personal information, and/or invalid information, the user's sensitive information, personal information, and/or invalid information, contained in the image may be concealed (blinded) (e.g., blocked).

In an electronic device and an operation method thereof according to an embodiment of the disclosure, even when a battery is completely discharged, an image displayed on a cover display (e.g., a sub-display, an external display) may be updated (e.g., changed) using power charged in an auxiliary battery (e.g., an image update battery, an image update cap).

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

With regard to the description of the drawings, the same or like reference signs may be used to designate the same or like elements.
FIG. 1 is a block diagram of an electronic device in a network environment according to various embodiments of the disclosure.
FIG. 2A and FIG. 2B are front, side, top, bottom and rear views of a first state (e.g., open state, unfolded state) of an electronic device according to an embodiment of the disclosure.
FIG. 2C and FIG. 2D are front, side, top, bottom and rear views of a second state (e.g., close state, folded state) of an electronic device according to an embodiment of the disclosure.
FIG. 3A is a perspective view of an electronic device illustrating a first state (e.g., open state, flat state, or unfolded state) according to an embodiment of the disclosure.
FIG. 3B is a plan view illustrating the front side of an electronic device in a first state (e.g., unfolded state) according to an embodiment of the disclosure.
FIG. 3C is a plan view illustrating the rear side of an electronic device in a first state (e.g., unfolded state) according to an embodiment of the disclosure.
FIG. 3D is a perspective view of an electronic device according to an embodiment of the disclosure, illustrating a second state (e.g., a folded state).
FIG. 3E is a perspective view of an electronic device according to an embodiment of the disclosure, illustrating a third state (e.g., an intermediate state).
FIG. 4 is a block diagram illustrating the configuration of an electronic device according to an embodiment.
FIG. 5A is a block diagram illustrating the configuration of an electronic device according to an embodiment.
FIG. 5B illustrates an example of analyzing an image by an electronic device according to an embodiment.
FIG. 6 and FIG. 7 illustrate updating (e.g., changing) a final image (e.g., a final screen) displayed on a cover display (e.g., a sub-display, an external display).
FIG. 8 to FIG. 10 illustrate an operation method of an electronic device according to an embodiment.
FIG. 11 illustrates determining to update (e.g., change) an image displayed on a cover display (e.g., a sub-display, an external display).
FIG. 12 and FIG. 13 illustrate a method of updating (e.g., changing) an image displayed on a cover display (e.g., a sub-display, an external display).
FIG. 14 illustrates determining an update (e.g., change) time point for an image displayed on a cover display (e.g., a sub-display, an external display).
FIG. 15 illustrates that an update (e.g., change) time point for an image displayed on a cover display (e.g., a sub-display, an external display) occurs and the image is updated (e.g., changed).
FIG. 16 illustrates that a battery is discharged before an update (e.g., change) time point for an image displayed on a cover display (e.g., a sub-display, an external display) and the image is updated (e.g., changed).
FIG. 17 and FIG. 18 illustrate that an update (e.g., change) time point for an image displayed on a cover display (e.g., a sub-display, an external display) occurs and the image is updated (e.g., changed).
FIG. 19 is a block diagram illustrating the configuration of an electronic device according to an embodiment.
FIGS. 20A to 20G illustrate updating (e.g., changing) a student ID image displayed on a cover display (e.g., a sub-display, an external display).
FIGS. 21A to 21D illustrate displaying a student ID image on a cover display (e.g., a sub-display, an external display) and changing the student ID image displayed on the cover display (e.g., a sub-display, an external display) to a different image, according to a condition.
FIGS. 22A to 22F illustrate updating (e.g., changing) a flight ticket image displayed on a cover display (e.g., a sub-display, an external display).
FIGS. 23A to 23D illustrate displaying a flight ticket image on a cover display (e.g., a sub-display, an external display) and changing the flight ticket image displayed on the cover display (e.g., a sub-display, an external display) to a different image according to a condition.
FIGS. 24A to 24G illustrate updating (e.g., changing) a gift card image displayed on a cover display (e.g., a sub-display, an external display).
FIGS. 25A to 25E illustrate displaying a gift card image on a cover display (e.g., a sub-display, an external display) and changing the gift card image displayed on the cover display (e.g., a sub-display, an external display) to a different image, according to a condition.
FIGS. 26A to 26F illustrate updating (e.g., changing) an exhibition pass image displayed on a cover display (e.g., a sub-display, an external display).
FIGS. 27A to 27E illustrate updating (e.g., changing) a driver's license image displayed on a cover display (e.g., a sub-display, an external display).
FIGS. 28A to 28D illustrate displaying a movie ticket image on a cover display (e.g., a sub-display, an external display) and changing the movie ticket image displayed on the cover display (e.g., a sub-display, an external display) to a different image, according to a condition.
FIGS. 29A to 29D illustrate displaying an employee ID image on a cover display (e.g., a sub-display, an external display) and changing the employee ID image displayed on the cover display (e.g., a sub-display, an external display) to a different image, according to a condition.
FIG. 30 is a flowchart illustrating an operation method of an electronic device according to an embodiment of the disclosure.
FIG. 31 is a flowchart illustrating an operation method of an electronic device according to an embodiment of the disclosure.

It should be noted that throughout the drawings, the same reference numerals are used to describe the same or similar elements, features, and structures.

### [Mode for Invention]

The following description with reference to the accompanying drawings is provided to assist in comprehensive understanding of an embodiment of the disclosure as defined by the claims. The description includes various specific details to assist in the understanding, but the details are to be regarded merely as examples. Accordingly, those skill in the art will recognize that various changes and modifications may be made to an embodiment set forth herein without departing from the scope of the disclosure defined by the claims. In addition, descriptions of well-known functions and configurations may be omitted for the sake of clarity and conciseness.

The terms and words used in the following description and the claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims , but is provided merely for the purpose of illustration.

It is to be understood that the expressions in singular forms include plural referents unless the context clearly dictates otherwise. Therefore, for example, reference to "a component surface" includes reference to one or more such surfaces. It is to be understood that the expressions in plural forms include singular referents unless the context clearly dictates otherwise. Therefore, for example, reference to "component surfaces" includes reference to one or more such surfaces.

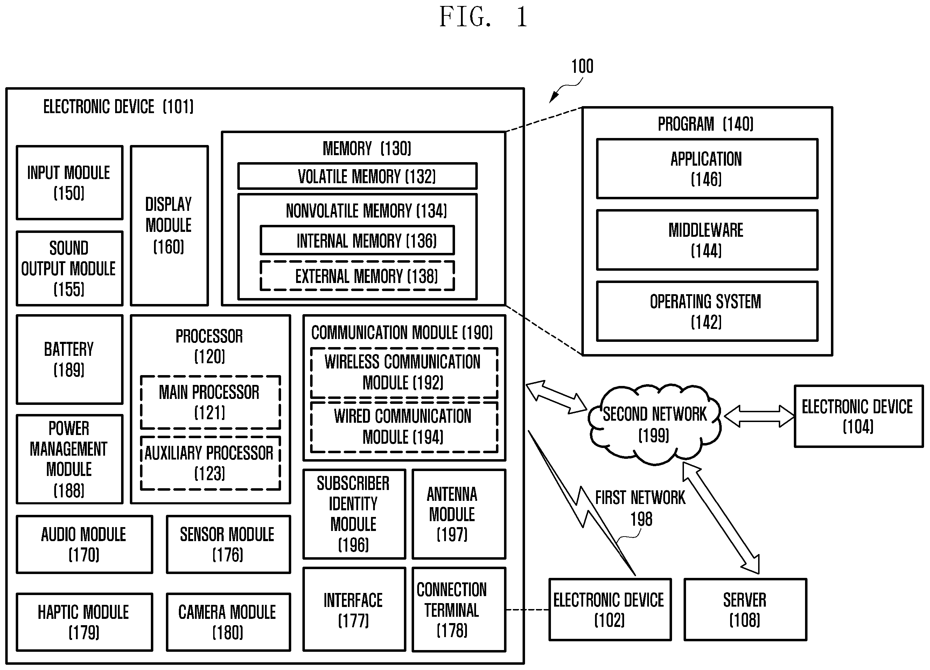

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

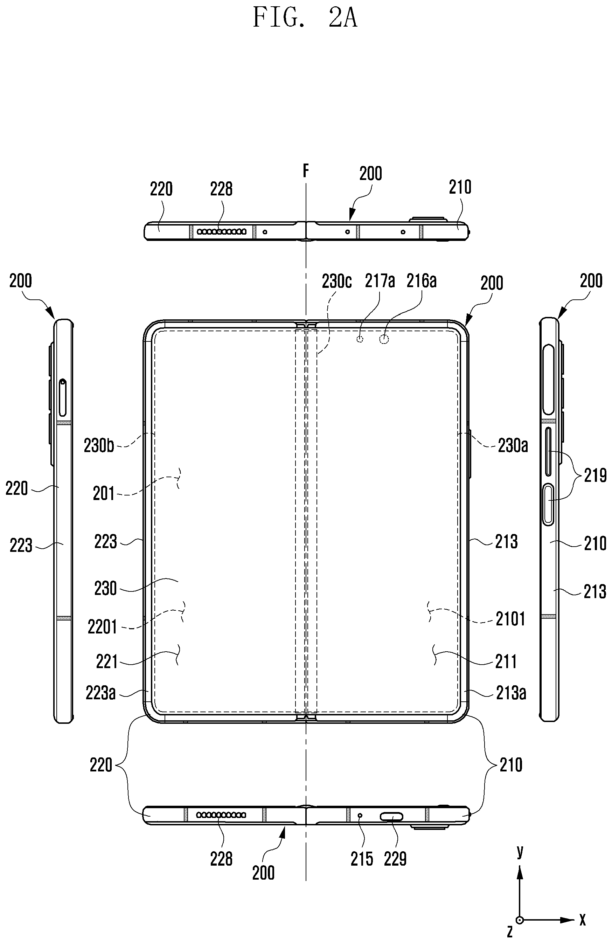

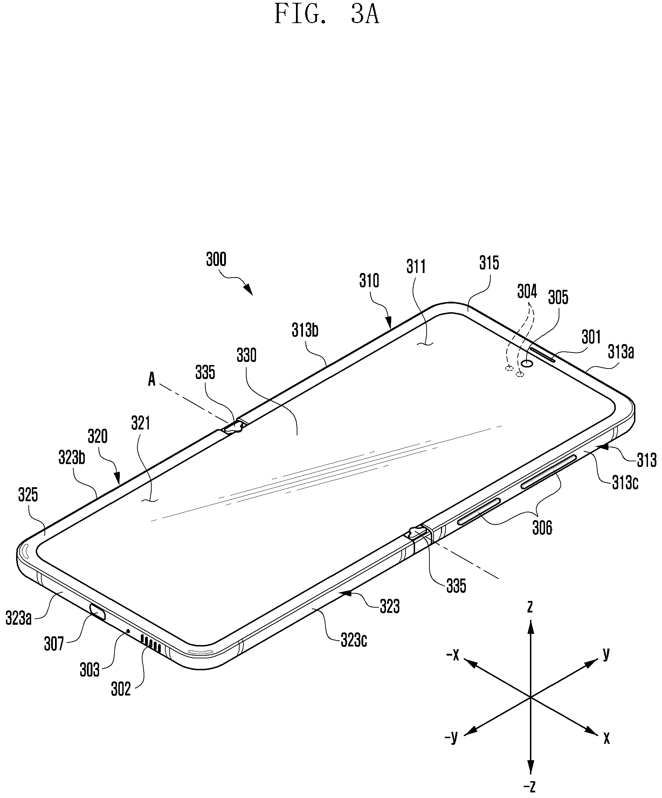

According to an embodiment, the electronic device 101 may include an electronic device (e.g., the electronic device 200 of FIGS. 2A to 2D, the electronic device 300 of FIGS. 3A to 3E) configured to be foldable or unfoldable.

According to an embodiment, the display module 160 may include a flexible display configured to be foldable or unfoldable.

According to an embodiment, the electronic device 101 may include an electronic device (e.g., a slidable electronic device) disposed to be slidable in a first direction (e.g., slidable in the x-axis direction) or slidable in a second direction (e.g., slidable in the y-axis direction) so that the size of a screen varies.

According to an embodiment, the display module 160 may include a flexible display disposed to be slidable in the first direction (e.g., slidable in the x-axis direction) or slidable in the second direction (e.g., slidable in the y-axis direction) so as to provide a screen (e.g., a display screen).

According to an embodiment, the display module 160 may be referred to as a stretchable display, an expandable display, or a slide-in/out display.

According to an embodiment, the electronic device 101 may include a bar-type or plate-type electronic device.

According to an embodiment, the display module 160 may include a bar-type or plate-type display.

According to an embodiment, the display module 160 may include a display capable of maintaining a screen without power (e.g., a non-volatile display, an E-ink display, an electrophoretic display).

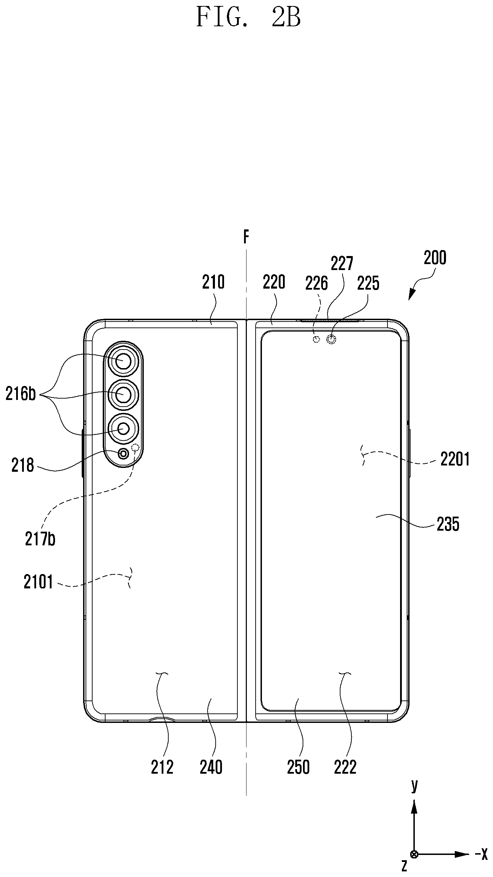

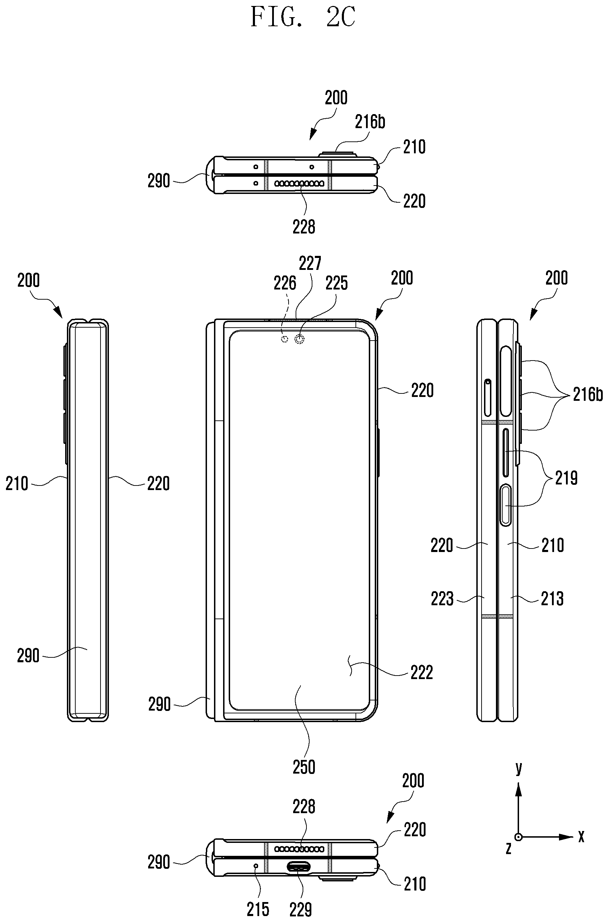

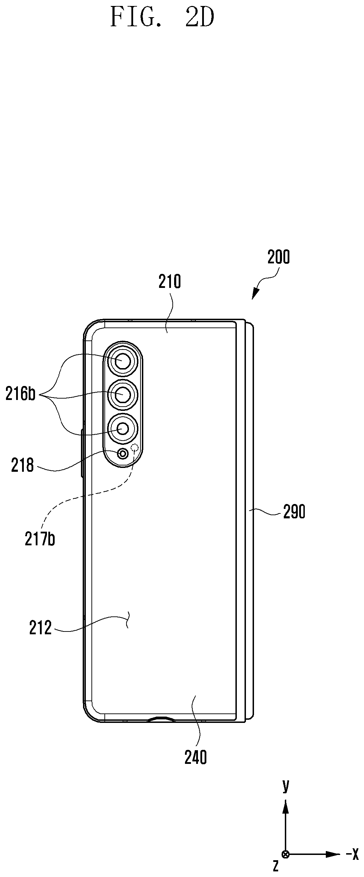

FIGS. 2A and 2B are front and rear views of a first state (e.g., open state, unfolded state) of an electronic device according to an embodiment of the disclosure. FIGS. 2C and 2D are front and rear views of a second state (e.g., closed state, folded state) of an electronic device according to an embodiment of the disclosure.

The electronic device 200 of FIGS. 2A to 2D may be at least partially similar to the electronic device 101 of FIG. 1 or may further include other embodiments of the electronic device 101.

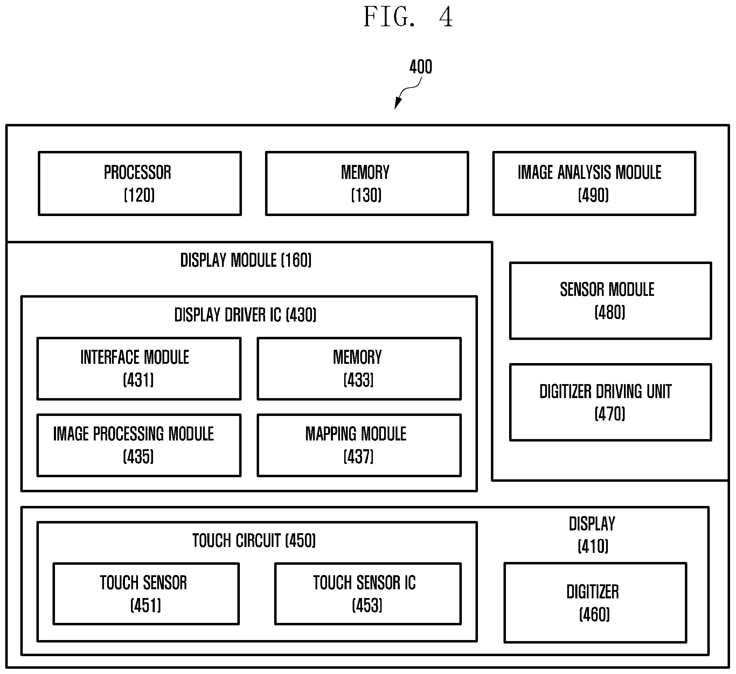

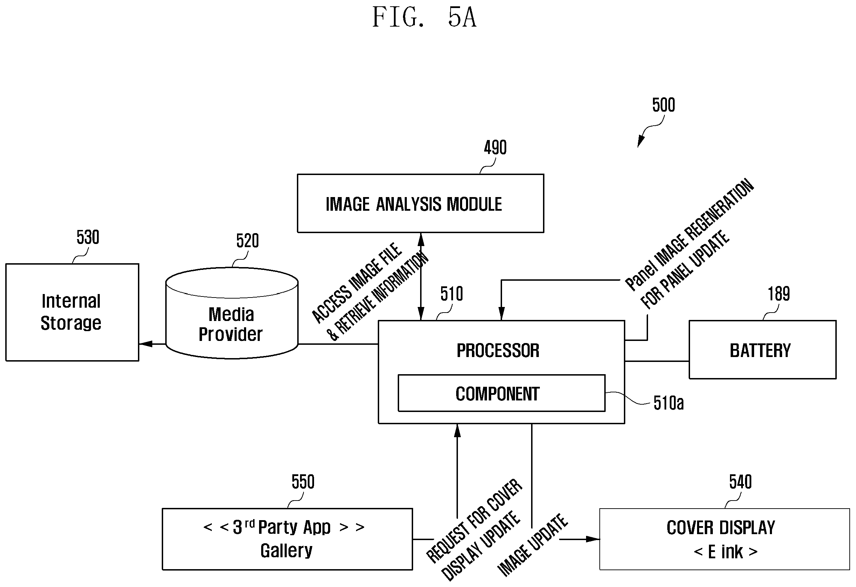

Referring to FIGS. 2A to 2D, the electronic device 200 according to an embodiment of the disclosure (e.g., the electronic device 101 of FIG. 1, the electronic device 400 of FIG. 4, and the electronic device 500 of FIG. 5A) may include a pair of housings 210, 220 (e.g., a foldable housing structure) rotatably coupled about a folding axis (F) through at least one hinge device (e.g., a hinge module or a hinge structure) so as to be foldable relative to one another, a first display 230 (e.g., a flexible display, a foldable display, or a main display) disposed through the pair of housings 210, 220, and/or a second display 235 (e.g., a sub-display) disposed through the second housing 220.

According to an embodiment, at least a part of at least one hinge device may be disposed not to be visible from the outside through the first housing 210 and the second housing 220 and may be disposed to be visible from the outside through the hinge housing 290 (e.g., a hinge cover) configured to cover a foldable part in a first state (e.g., an unfolded state). In this document, a surface on which the first display 230 is disposed may be defined as a front surface of the electronic device 200. In this document, a surface opposite to the front surface may be defined as a rear surface of the electronic device 200. In addition, a surface surrounding a space between the front surface and the rear surface may be defined as a lateral surface of the electronic device 200.

In an embodiment, the pair of housings 210, 220 may include a first housing 210 and a second housing 220 which are foldably arranged with respect to each other via at least one hinge device.

In an embodiment, the pair of housings 210, 220 are not limited to the shapes and combinations illustrated in FIGS. 2A to 2D and may be implemented by other shapes or couplings and/or combinations of parts.

In an embodiment, the first housing 210 and the second housing 220 may be arranged on both sides with respect to the folding axis (F), have a shape that is symmetrical overall with respect to the folding axis (F), and be folded to match each other.

In an embodiment, the first housing 210 and the second housing 220 may be folded asymmetrically with respect to the folding axis (F).

According to an embodiment, the angle or distance between the first housing 210 and the second housing 220 may be different according to a first state (e.g., unfolded state), a second state (e.g., folded state), or a third state (e.g., intermediate state) of the electronic device 200. For example, the electronic device 200 may sense the first state (e.g., unfolded state), the second state (e.g., folded state), or the third state (e.g., intermediate state) by using a sensor module (e.g., sensor module 176 of FIG. 1). The electronic device 200 may sense the angle between the first housing 210 and the second housing 220 by using the sensor module (e.g., the sensor module 176 of FIG. 1).

In an embodiment, the first housing 210 may be connected to at least one hinge device in the first state (e.g., in an unfolded state) of the electronic device 200. The first housing 210 may include a first surface 211 disposed to face the front of the electronic device 200, a second surface 212 facing in an opposite direction to the first surface 211, and/or a first lateral member 213 surrounding at least a part of a first space 2101 between the first surface 211 and the second surface 212.

In an embodiment, the second housing 220 may be connected to at least one hinge device in the first state (e.g., in the unfolded state) of the electronic device 200. The second housing 220 may include a third surface 221 disposed to face the front of the electronic device 200, a fourth surface 222 facing in an opposite direction to the third surface 221, and/or a second lateral member 223 surrounding at least a part of a second space 2201 between the third surface 221 and the fourth surface 222.

In an embodiment, the first surface 211 may face substantially in the same direction as the third surface 221 in the first state (e.g., an unfolded state) and at least partially face the third surface 221 in the second state (e.g., a folded state).

In an embodiment, the electronic device 200 may also include a recess 201 configured to receive the first display 230 through a structural connection between the first housing 210 and the second housing 220.

In an embodiment, the recess 201 may have substantially the same size as the first display 230.

According to an embodiment, the first housing 210 may be coupled to the first lateral member 213 when the first display 230 is viewed from above. The first housing 210 may include a first protective frame 213a (e.g., a first decorative member) which overlaps the edge of the first display 230 to cover the edge of the first display 230 such that the edge of the first display is not visible from the outside.

According to an embodiment, the first protective frame 213a may also be integrated with the first lateral member 213.

According to an embodiment, the second housing 220 may be coupled to the second lateral member 223 when the first display 230 is viewed from above. The second housing 220 may include a second protective frame 223a which overlaps the edge of the first display 230 to cover the edge of the first display 230 such that the edge of the first display is not visible from the outside.

According to an embodiment, the second protective frame 223a may also be integrated with the second lateral member 223. In an embodiment, the first protective frame 213a and the second protective frame 223a may be omitted.

According to an embodiment, the hinge housing 290 (e.g., a hinge cover) may be disposed between the first housing 210 and the second housing 220. The hinge housing 290 may be disposed to cover at least a part of one hinge device (e.g., at least one hinge module).

According to an embodiment, the hinge housing 290 may be covered by a part of the first housing 210 and a part of the second housing 220 or exposed to the outside according to the first state (e.g., an unfolded state), the second state (e.g., a folded state), or the third state (e.g., an intermediate state) of the electronic device 200. For example, when the electronic device 200 is in the first state (e.g., an unfolded state), at least a part of the hinge housing 290 may be covered by the first housing 210 and the second housing 220 so as to be substantially invisible from the outside.

In an embodiment, when the electronic device 200 is in the second state (folded state), at least a part of the hinge housing 290 may be visible between the first housing 210 and the second housing 220 from the outside.

In an embodiment, when the first housing 210 and the second housing 220 are in the third state (intermediate state) while configuring a predetermined angle (folded with a predetermined angle), the hinge housing 290 may be at least partially visible between the first housing 210 and the second housing 220 from the outside of the electronic device 200. For example, the area where the hinge housing 290 is exposed to the outside may be less than that exposed to the outside in a completely folded state. In an embodiment, the hinge housing 290 may include a curved surface.

According to an embodiment, when the electronic device 200 is in the first state (e.g., an unfolded state), the first housing 210 and the second housing 220 may configure an angle of about 180 degrees, and a first area 230a, a second area 230b, and a folding area 230c of the first display 230 may configure substantially the same plane. The first area 230a, the second area 230b, and the folding area 230c of the first display 230 may be arranged to face substantially the same direction (e.g., the z-axis direction). As an example, when the electronic device 200 is in the first state (e.g., unfolded state), the first housing 210 may rotate at an angle of about 360 degrees with respect to the second housing 220 and thus may also be folded in the opposite direction such that the second surface 212 and the fourth surface 222 face each other (e.g., an out folding manner).

According to an embodiment, when the electronic device 200 is in the second state (folded state), the first surface 211 of the first housing 210 and the third surface 221 of the second housing 220 may be arranged to face each other. In this case, the first area 230a and the second area 230b of the first display 230 may be arranged to face each other while configuring a narrow angle (e.g., in the range of 0 degrees to about 10 degrees) through the folding area 230c. According to an embodiment, the folding area 230c may be at least partially deformed into a curved shape having a predetermined curvature.

According to an embodiment, when the electronic device 200 is in the third state (e.g., intermediate state), the first housing 210 and the second housing 220 may be arranged to face each other at a predetermined angle. In this case, the first area 230a and the second area 230b of the first display 230 may configure an angle larger than that in the second state (e.g., the folded state) and smaller than that in the first state (e.g., the unfolded state), and the curvature of the folding area 230c may be smaller than that in the second state (e.g., the folded state) and larger than that in the first state (e.g., the unfolded state). In an embodiment, the first housing 210 and the second housing 220 may configure an angle so as to stop at a specified folding angle between the second state (e.g., the folded state) and the third state (e.g., the intermediate state) through at least one hinge device (e.g., a free stop function). In an embodiment, the first housing 210 and the second housing 220 may also be continuously operated while being pressed, in the unfolding direction or the folding direction through at least one hinge device, based on a specified inflection angle.

According to an embodiment, the electronic device 200 may include at least one of a display 230, 235, an input device 215, audio output devices 227, 228, sensor modules 217a, 217b, 226, camera modules 216a, 216b, 225, a key input device 219, an indicator (not shown), or a connector port 229, which is disposed in the first housing 210 and/or the second housing 220. In an embodiment, the electronic device 200 may have at least one of the components omitted therefrom or may further include at least one other component.

In an embodiment, at least one display 230, 235 may include the first display 230 (e.g., a flexible display) disposed to be supported by the third surface 221 of the second housing 220 and the first surface 211 of a first housing 210 via at least one hinge device, and the second display 235 disposed in an inner space of the second housing 220 to be at least partially visible from the outside through a fourth surface 222.

In an embodiment, the second display 235 may also be disposed in an inner space of the first housing 210 to be visible from the outside through the second surface 212.

In an embodiment, the first display 230 may be mainly used in the first state (e.g., an unfolded state) of the electronic device 200. The second display 235 may also be used in the first state (e.g., unfolded state) of the electronic device 200.

According to an embodiment, the second display 235 may be mainly used in the second state (e.g., folded state) of the electronic device 200. The first display 230 may also be used in the second state (e.g., folded state) of the electronic device 200.

According to an embodiment, in the third state (e.g., intermediate state), the electronic device 200 may perform control such that the first display 230 and/or the second display 235 are usable based on the folding angle of the first housing 210 and the second housing 220.

According to an embodiment, the first display 230 may be disposed in a receiving space configured by the pair of housings 210, 220. For example, the first display 230 may be disposed in the recess 201 configured by the pair of housings 210, 220 and may be disposed to occupy substantially most of the front surface of the electronic device 200 in the first state (e.g., unfolded state). According to an embodiment, the first display 230 may include a flexible display, at least a partial area thereof is deformable into a flat or curved surface.

According to an embodiment, the first display 230 may include the first area 230a facing the first housing 210, and the second area 230b facing the second housing 220. According to an embodiment, the first display 230 may include the folding area 230c including a part of the first area 230a and a part of the second area 230b with reference to the folding axis (F).

According to an embodiment, at least a part of the folding area 230c may include an area corresponding to at least one hinge device.

According to an embodiment, the area division of the first display 230 is merely an exemplary physical division by the pair of housings 210, 220, and the first display 230 may display substantially a full screen seamlessly through the pair of housings 210, 220 and the at least one hinge device.

According to an embodiment, the first area 230a and the second area 230b may have an overall symmetrical shape with reference to the folding area 230c or may have a partially asymmetrical shape.

In an embodiment, the electronic device 200 may include a first rear cover 240 disposed on the second surface 212 of the first housing 210 and a second rear cover 250 disposed on the fourth surface 222 of the second housing 220. In an embodiment, at least a part of the first rear cover 240 may also be integrated with the first lateral member 213. In an embodiment, at least a part of the second rear cover 250 may also be integrated with the second lateral member 223.

In an embodiment, at least one cover of the first rear cover 240 and the second rear cover 250 may be formed of a substantially transparent plate (e.g., a polymer plate or a glass plate including various coating layers) or an opaque plate. In an embodiment, the first rear cover 240 may also be configured by an opaque plate made of, for example, coated or colored glass, ceramic, polymer, metal (e.g., aluminum, stainless steel (STS), or magnesium), or a combination of at least two of the materials.

In an embodiment, the second rear cover 250 may be configured by, for example, a substantially transparent plate such as glass or polymer. Accordingly, the second display 235 may be disposed in the inner space of the second housing 220 so as to be visible from the outside through the second rear cover 250.

In an embodiment, the input device 215 may include a microphone. In an embodiment, the input device 215 may include a plurality of microphones arranged to detect the direction of sound.

In an embodiment, the audio output devices 227, 228 may include speakers. In an embodiment, the audio output devices 227, 228 may include a call receiver 227 disposed through the fourth surface 222 of the second housing 220 and an external speaker 228 disposed through at least a part of the second lateral member 223 of the second housing 220.

In an embodiment, the input device 215, the audio output devices 227, 228 and the connector port 229 may be disposed in spaces of the first housing 210 and/or the second housing 220. The input device 215, the audio output devices 227, 228 and the connector port 229 may be exposed to the external environment through at least one hole passing through the first housing 210 and/or the second housing 220. In an embodiment, the holes passing through the first housing 210 and/or the second housing 220 may be used in common for the input device 215 and the audio output devices 227, 228. In an embodiment, the audio output devices 227, 228 may include a speaker (e.g., a piezo speaker) that operates without the holes passing through the first housing 210 and/or the second housing 220.

According to an embodiment, the camera modules 216a, 216b, 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220.

In an embodiment, the electronic device 200 may include a flash 218 positioned near the second camera module 216b. In an embodiment, the flash 218 may include, for example, a light emitting diode or a xenon lamp.

In an embodiment, the camera modules 216a, 216b, 225 may include one or more lenses, an image sensor, and/or an image signal processor. In an embodiment, at least one of the camera modules 216a, 216b, 225 may include two or more lenses (e.g., a wide-angle lens and a telephoto lens) and image sensors and may be arranged together on one surface of the first housing 210 and/or the second housing 220.

In an embodiment, the sensor modules 217a, 217b, 226 (e.g., the sensor module 176 of FIG. 1) may generate an electrical signal or data value corresponding to an external environmental state or an internal operating state of the electronic device 200.

According to an embodiment, the sensor modules 217a, 217b, 226 (e.g., the sensor module 176 of FIG. 1) may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220.

In an embodiment, the sensor modules 217a, 217b, 226 (e.g., the sensor module 176 of FIG. 1) may include at least one of a gesture sensor, a gyro sensor, a grip sensor, a color sensor, an infrared (IR) sensor, a illuminance sensor, an ultrasonic sensor, a proximity sensor, a biometric sensor (e.g., an iris recognition sensor), a distance detection sensor (e.g., a time of flight (TOF) sensor, a light detection and ranging (LiDAR) sensor), a barometric pressure sensor, a magnetic sensor (e.g., a six-axis sensor, a geomagnetic sensor), an acceleration sensor, a temperature sensor, a humidity sensor, and/or a fingerprint recognition sensor.

According to an embodiment, the processor (e.g., the processor 120 of FIG. 1) of the electronic device 200 may operate the sensor modules 217a, 217b, 226 (e.g., the sensor module 176 of FIG. 1) to sense IR intensity and/or illuminous intensity around the electronic device 200. The processor 120 may acquire information on IR intensity and information on illuminous intensity around the electronic device 200.

In an embodiment, the electronic device 200 may include at least one of an unillustrated gesture sensor, a gyro sensor, a grip sensor, a color sensor, an infrared (IR) sensor, a illuminance sensor, an ultrasonic sensor, a proximity sensor, a biometric sensor (e.g., an iris recognition sensor), a distance detection sensor (e.g., a time of flight (TOF) sensor, a light detection and ranging (LiDAR) sensor), a barometric sensor, a magnetic sensor (e.g., a six-axis sensor, a geomagnetic sensor), an acceleration sensor, a temperature sensor, a humidity sensor, and/or a fingerprint recognition sensor.

In an embodiment, the fingerprint recognition sensor may be disposed through at least one of the first lateral member 213 of the first housing 210 and/or the second lateral member 223 of the second housing 220.

In an embodiment, the key input device 219 may be disposed to be exposed to the outside through the first lateral member 213 of the first housing 210. In an embodiment, the key input device 219 may be positioned to be exposed to the outside through the second lateral member 223 of the second housing 220. In an embodiment, the electronic device 200 may not include one or all of the key input devices 219, and the key input devices 219 that are not included may be implemented in another form, such as a soft key, on the at least one display 230, 235. In an embodiment, the key input device 219 may be implemented using a pressure sensor included in the at least one display 230, 235.

According to an embodiment, the connector port 229 may include a connector (e.g., a USB connector or an interface connector port module (IF) module) configured to transmit and receive power and/or data to and from an external electronic device. In an embodiment, the connector port 229 may perform a function of transmitting and receiving audio signals to and from an external electronic device together or may also further include a separate connector port (e.g., an ear jack hole) configured to perform a function of transmitting and receiving audio signals.

According to an embodiment, at least one camera module 216a, 225 among the camera modules 216a, 216b, 225, at least one sensor module 217a, 226 among the sensor modules 217a, 217b, 226, and/or an indicator may be arranged to be visually exposed through the at least one display 230, 235. For example, the at least one camera module 216a, 225, the at least one sensor module 217a, 226, and/or the indicator may be arranged in the inner space of the at least one housing 210, 220 to be under an active area (display area) of the at least one display 230, 235. The at least one camera module 216a, 225, the at least one sensor module 217a, 226, and/or the indicator may be arranged to be in contact with an external environment through a transparent area or an opening acquired by perforating up to a cover member (e.g., the second rear cover 250 and/or the window layer (not shown) of the first display 230).

According to an embodiment, an area where at least one display 230, 235 and the at least one camera module 216a, 225 face each other may be configured as a transparent area having a predetermined transmittance as a part of an area for displaying content.

In an embodiment, the transparent area may have a transmittance in the range of about 5% to about 20%. The transparent area may include an area overlapping an effective area (e.g., a field of view area) of at least one camera module 216a, 225 through which light passes to be imaged by an image sensor to generate an image. For example, the transparent area of the display 230, 235 may include an area having a lower pixel density than the surrounding area. For example, the transparent area may replace the opening. For example, at least one camera module 216a, 225 may include an under display camera (UDC) or an under panel camera (UPC). In an embodiment, some camera modules or sensor modules 217a, 226 may be arranged to perform their functions without being visually exposed through the display. For example, an area facing a camera module 216a, 225 and/or the sensor module 217a, 226 positioned under the display 230, 235 (e.g., a display panel) may have an under display camera (UDC) structure, which may not require a perforated opening.

According to an embodiment, the second display 235 (e.g., sub-display) may include a display capable of maintaining a screen without power (e.g., a non-volatile display, an E-ink display, an electrophoretic display).

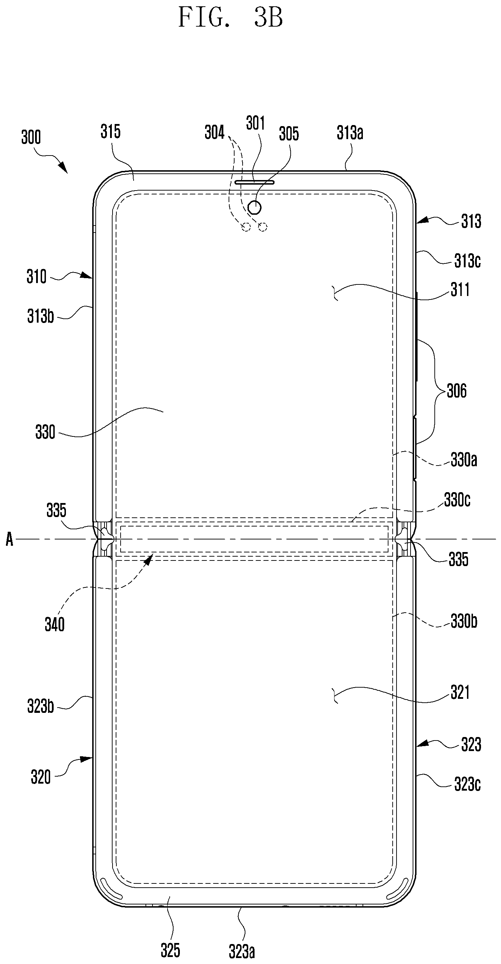

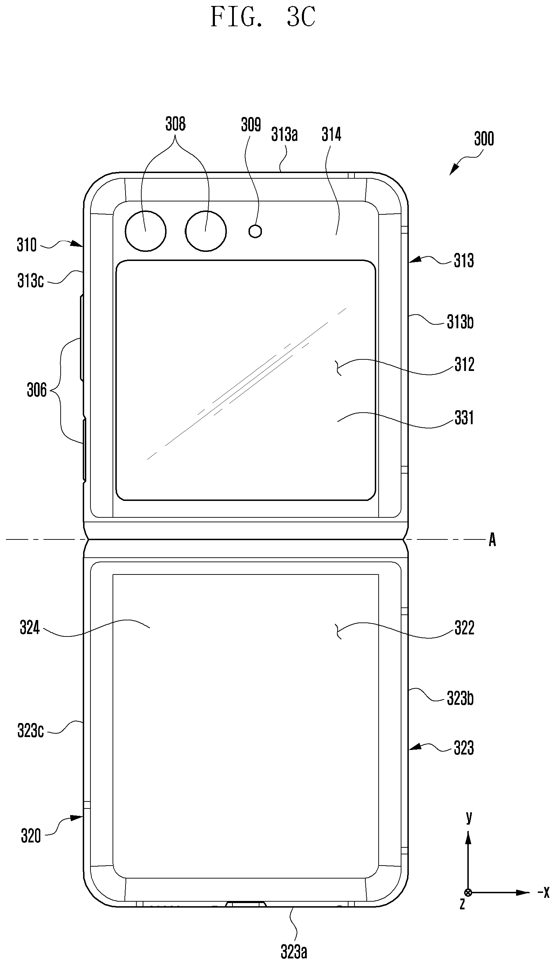

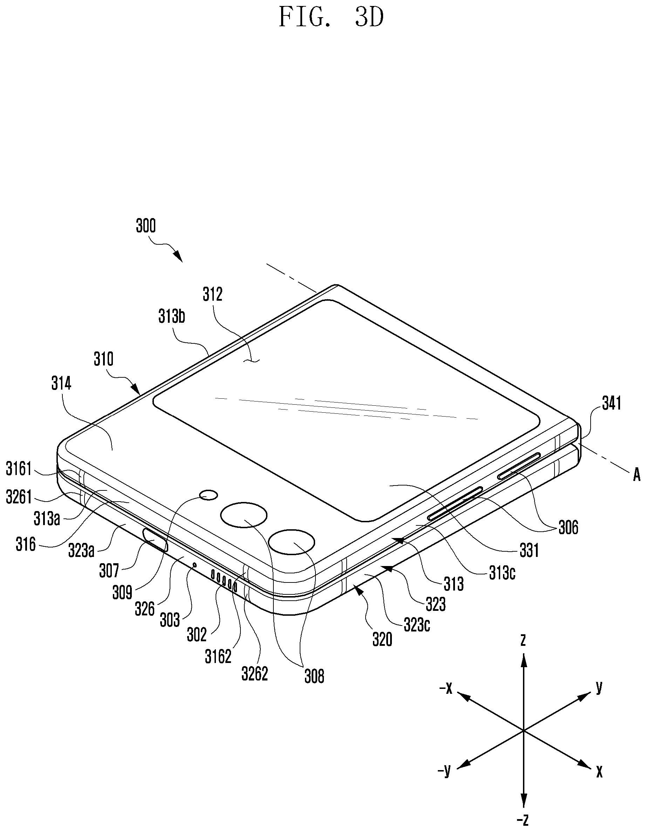

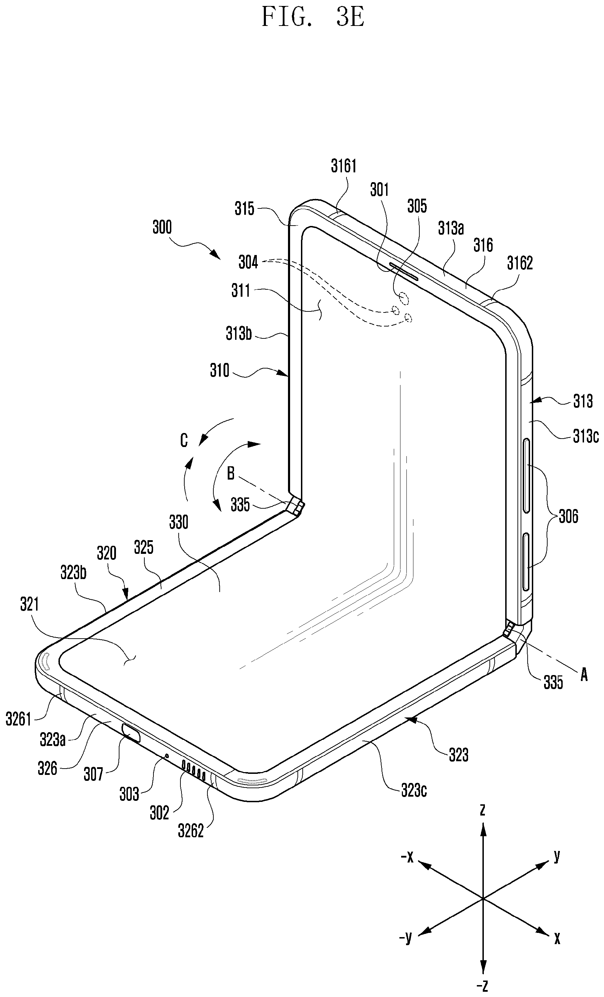

FIG. 3A is a perspective view of an electronic device illustrating a first state (e.g., a flat state or an unfolded state) according to an embodiment of the disclosure. FIG. 3B is a plan view illustrating a front side of the electronic device in a first state (e.g., an unfolded state) according to an embodiment of the disclosure. FIG. 3C is a plan view illustrating a rear side of an electronic device in a first state (e.g., an unfolded state) according to one embodiment of the disclosure. FIG. 3D is a perspective view of an electronic device illustrating a second state (e.g., a folded state) according to an embodiment of the disclosure. FIG. 3E is a perspective view of an electronic device illustrating a third state (e.g., an intermediate state) according to an embodiment of the disclosure.

The electronic device 300 of FIGS. 3A to 3E may be at least partially similar to the electronic device 101 of FIG. 1 or may further include other embodiments of the electronic device 101.

Referring to FIGS. 3A to 3E, the electronic device 300 according to an embodiment of the disclosure may include a pair of housings 310, 320 (e.g., a foldable housing) configured to be rotatably coupled to be folded about a hinge structure (e.g., a hinge structure 340, a hinge device, or a hinge module of FIG. 3B) so as to face each other.

According to an embodiment, the hinge structure 340 may be disposed in the x-axis direction or the y-axis direction. According to an embodiment, two or more hinge structures 340 may be arranged so as to be folded in the same direction or in different directions.

According to an embodiment, the electronic device 300 may include a flexible display 330 (e.g., a foldable display) disposed in an area defined by the pair of housings 310, 320.

According to an embodiment, the first housing 310 and the second housing 320 may be disposed on both sides with respect to a folding axis (axis A) and may have a shape substantially symmetrical with respect to the folding axis (axis A)]

According to an embodiment, the angle or distance configured between the first housing 310 and the second housing 320 may vary according to a first state (e.g., a flat state or unfolded state), a second state (e.g., a folded state), or a third state (e.g., an intermediate state) of the electronic device 300.

**In** an embodiment, the pair of housings 310, 320 may include a first housing 310 (e.g., first housing structure, a first housing part) coupled to the hinge structure 340 and a second housing 320 (e.g., second housing structure, a second housing part) coupled to the hinge structure 340.

According to an embodiment, the first housing 310 may include, in the first state (e.g., an unfolded state), a first surface 311 facing a first direction (e.g., a front direction) (z-axis direction) and a second surface 312 facing a second direction (e.g., a rear direction) (-z-axis direction) opposite to the first surface 311.

According to an embodiment, the second housing 320 may include, in the first state (e.g., an unfolded state), a third surface 321 facing the first direction (z-axis direction) and a fourth surface 322 facing the second direction (-z-axis direction).

According to an embodiment, the electronic device 300 may be operated such that in the first state (e.g., in an unfolded state), the first surface 311 of the first housing 310 and the third surface 321 of the second housing 320 face substantially the same first direction (z-axis direction) and in the second state (e.g., in a folded state), the first surface 311 and the third surface 321 face each other.

According to an embodiment, the electronic device 300 may be operated such that in the first state (e.g., in an unfolded state), the second surface 312 of the first housing 310 and the fourth surface 322 of the second housing 320 face substantially the same second direction (-z-axis direction) and in the second state (e.g., in a folded state), the second surface 312 and the fourth surface 322 face opposite directions. For example, in the second state (e.g., a folded state), the second surface 312 may face in the first direction (z-axis direction) and the fourth side 322 may face in the second direction (-z-axis direction).

According to an embodiment, the first housing 310 may include a first lateral member 313 at least partially configuring an outer appearance of the electronic device 300, and a first rear cover 314 coupled to the first lateral member 313 and at least partially configuring a part of the second surface 312 of the electronic device 300.

According to an embodiment, the first lateral member 313 may include a first lateral surface 313a, a second lateral surface 313b extending from one end of the first lateral surface 313a, and a third lateral surface 313c extending from the other end of the first lateral surface 313a. According to an embodiment, the first lateral member 313 may have a rectangular (e.g., square or rectangular) shape through the first lateral surface 313a, the second lateral surface 313b, and the third lateral surface 313c.

According to an embodiment, the second housing 320 may include a second lateral member 323 at least partially configuring an outer appearance of the electronic device 300, and a cover display 324 (e.g., a sub-display, an external display) coupled to the second lateral member 323 and configuring at least a part of a fourth surface 322 of the electronic device 300. A second rear cover may be disposed on the periphery of the cover display 324 (e.g., a sub-display, an external display). According to an embodiment, the second lateral member 323 may include a fourth lateral surface 323a, a fifth lateral surface 323b extending from one end of the fourth lateral surface 323a, and a sixth lateral surface 323c extending from the other end of the fourth lateral surface 323a. According to an embodiment, the second lateral member 323 may have a rectangular shape through the fourth lateral surface 323a, the fifth lateral surface 323b, and the sixth lateral surface 323c.

According to an embodiment, the pair of housings 310, 320 are not limited to the illustrated shape and combination, and may be implemented by other shapes or couplings and/or combinations of parts. For example, the first lateral member 313 may be integrated with the first rear cover 314, and the second lateral member 323 may be integrated with the second rear cover.

According to an embodiment, the electronic device 300 may be configured such that, in the first state (e.g., in an unfolded state), the second lateral surface 313b of the first lateral member 313 and the fifth lateral surface 323b of the second lateral member 323 are connected to each other without any gap. According to an embodiment, the electronic device 300 may be configured such that, in the first state (e.g., in the unfolded state), the third lateral surface 313c of the first lateral member 313 and the sixth lateral surface 323c of the second lateral member 323 are connected to each other without any gap.

According to an embodiment, the electronic device 300 may be configured such that, in the first state (e.g., in the unfolded state), the combined length of the second lateral surface 313b and the fifth lateral surface 323b is longer than the length of the first lateral surface 313a and/or the fourth lateral surface 323a. In addition, the combined length of the third lateral surface 313c and the sixth lateral surface 323c may be longer than the length of the first lateral surface 313a and/or the fourth lateral surface 323a.

**In** an embodiment, the first lateral member 313 and/or the second lateral member 323 may be made of a metal or may further include a polymer injected into the metal. In an embodiment, the first lateral member 313 and/or the second lateral member 323 may also include at least one conductive part 316 and/or 326 electrically segmented through at least one segment 3161, 3162, and/or 3261, 3262 made of polymer. In this case, the at least one conductive part may be electrically connected to a wireless communication circuit included in the electronic device 300 so as to be used as an antenna operating in at least one designated band (e.g., about 400 MHz to about 6 GHz).

According to an embodiment, the first rear cover 314 and/or the second rear cover may be acquired by, for example, at least one or a combination of at least two of a coated or colored glass, ceramic, polymer, or metal (e.g., aluminum, stainless steel (STS), or magnesium).

In an embodiment, the flexible display 330 may be disposed to extend from the first surface 311 of the first housing 310 across the hinge structure 340 to at least a part of the third surface 321 of the second housing 320. For example, the flexible display 330 may include a first part 330a substantially corresponding to the first surface 311, a second part 330b corresponding to the third surface 321, and a third part 330c (e.g., a bendable area) connecting the first part 330a and the second part 330b and corresponding to the hinge structure 340.

In an embodiment, the electronic device 300 may include a first protective cover 315 (e.g., a first protective frame or a first decorative member) coupled along an edge of the first housing 310. According to an embodiment, the electronic device 300 may include a second protective cover 325 (e.g., a second protective frame or a second decorative member) coupled along an edge of the second housing 320.

According to an embodiment, the first protective cover 315 and/or the second protective cover 325 may be made of a metal or polymer material. According to an embodiment, the first protective cover 315 and/or the second protective cover 325 may be used as a decoration member.

According to an embodiment, the flexible display 330 may be positioned such that an edge of the first part 330a is interposed between the first housing 310 and the first protective cover 315. According to an embodiment, the flexible display 330 may be positioned such that an edge of the second part 330b is interposed between the second housing 320 and the second protective cover 325.

According to an embodiment, the flexible display 330 may include a protective cap 335 disposed in an area corresponding to the hinge structure 340.

According to an embodiment, the electronic device 300 may include a hinge housing 341 (e.g., a hinge cover) that supports the hinge structure 340.

According to an embodiment, the flexible display 330 may extend from at least a part of the second surface 312 to at least a part of the fourth surface 322. In this case, the electronic device 300 may be folded so that the flexible display 330 may be visually exposed to the outside (out-folding manner).

According to an embodiment, the electronic device 300 may include a sub-display 331 (e.g., an external display) disposed separately from the flexible display 330. According to an embodiment, the sub-display 331 (e.g., external display) may be disposed to be at least partially exposed on the second surface 312 of the first housing 310 so as to replace a display function of the flexible display 330 in the second state (e.g., a folded state), thereby displaying state information (e.g., first state information, second state information, or third state information) of the electronic device 300.

According to an embodiment, the cover display 324 (e.g., a sub-display, an external display) may be arranged on the fourth surface 322 of the second housing 320. The cover display 324 (e.g., a sub-display, an external display) may be arranged to be visible from the outside through at least a part of the second rear cover.

In an embodiment, the cover display 324 (e.g., a sub-display, an external display) may include a display capable of maintaining a screen without power (e.g., a non-volatile display, an E-ink display, an electrophoretic display).

In an embodiment, the sub-display 331 (e.g., an external display) may be arranged to be visible from the outside through at least a part of the first rear cover 314. In an embodiment, the sub-display 331 (e.g., an external display) may be arranged on the fourth surface 322 of the second housing 320. In this case, the sub-display 331 (e.g., an external display) may be arranged to be visible from the outside through at least a part of the second rear cover.

In an embodiment, the electronic device 300 may include at least one of an input device 303 (e.g., a microphone), an audio output device 301, 302, a sensor module 304, a camera device 305, 308, a key input device 306, or a connector port 307. The electronic device 300 may also include a substantial electronic component (e.g., an input device, an audio output device, a sensor module, or a camera device) disposed therein and configured to operate through a hole or shape.

In an embodiment, the input device 303 may include at least one microphone 303 arranged in the second housing 320.

In an embodiment, the audio output device 301, 302 may include speakers 301, 302.

In an embodiment, at least one connector port 307 may be used to transmit and receive power and/or data to and from an external electronic device. According to an embodiment, at least one connector port (e.g., an ear jack hole) may accommodate a connector (e.g., an ear jack) for transmitting and receiving audio signals to and from an external electronic device.

According to an embodiment, the sensor module 304 may generate an electric signal or data value corresponding to an external environmental state or an internal operating state of the electronic device 300. The sensor module 304 may detect an external environment, for example, through the first surface 311 of the first housing 310. According to an embodiment, the electronic device 300 may further include at least one sensor module arranged to detect an external environment through the second surface 312 of the first housing 310.

According to an embodiment, the sensor module 304 (e.g., an illuminance sensor) may be arranged under the flexible display 330 to detect an external environment through the flexible display 330.

According to an embodiment, the sensor module 304 (e.g., the sensor module 176 of FIG. 1) may include at least one of a gesture sensor, a gyro sensor, a grip sensor, a color sensor, an infrared (IR) sensor, a illuminance sensor, an ultrasonic sensor, a proximity sensor, a biometric sensor (e.g., an iris recognition sensor), a distance detection sensor (e.g., a time of flight (TOF) sensor, a light detection and ranging (LiDAR) sensor), a barometric pressure sensor, a magnetic sensor (e.g., a six-axis sensor, a geomagnetic sensor), an acceleration sensor, a temperature sensor, a humidity sensor, and/or a fingerprint recognition sensor.

According to an embodiment, the camera devices 305, 308 may include a first camera device 305 (e.g., a front camera device) disposed on the first surface 311 of the first housing 310, and a second camera device 308 disposed on the second surface 312 of the first housing 310. The electronic device 300 may further include a flash 309 positioned near the second camera device 308.

In an embodiment, the camera devices 305, 308 may also include lenses and/or image sensors for time of flight (TOF).

In an embodiment, the key input device 306 (e.g., a key button) may be disposed on the third lateral surface 313c of the first lateral member 313 of the first housing 310. In an embodiment, the key input device 306 may also be disposed on at least one of the other lateral surfaces 313a, 313b of the first housing 310 and/or the lateral surfaces 323a, 323b, 323c of the second housing 320.

In an embodiment, the sensor module 304 or some camera devices (e.g., the first camera device 305) among the camera devices 305, 308 may be disposed to be exposed through the flexible display 330. For example, the first camera device 305 or the sensor module 304 may be arranged in an inner space of the electronic device 300 so as to be in contact with the external environment through an opening (e.g., a through-hole) at least partially passing through the flexible display 330.

According to an embodiment, some sensor modules 304 may be arranged in the inner space of the electronic device 300 so as to perform functions thereof without being visually exposed through the flexible display 330. For example, in this case, the opening may be omitted from the area of the flexible display 330 facing the sensor module 304.

According to an embodiment, the electronic device 300 may be operated to maintain the third state (e.g., an intermediate state) through the hinge structure 340. In this case, the electronic device 300 may control the flexible display 330 such that content displayed on a display area corresponding to the first surface 311 is different from content displayed on a display area corresponding to the third surface 321.

According to an embodiment, the electronic device 300 may be operated substantially in the first state (e.g., the unfolded state of FIG. 3A) and/or substantially in the second state (e.g., the folded state of FIG. 3D), based on a predetermined inflection angle (e.g., an angle between the first housing 310 and the second housing 320 when in an intermediate state) through the hinge structure 340. For example, the electronic device 300 may be operated, while being unfolded at a predetermined inflection angle, to transition to the first state (e.g., the unfolded state of FIG. 3A) through the hinge structure 340 when a pressing force is applied in the unfolding direction (direction B). For example, the electronic device 300 may be operated, while being unfolded at a predetermined inflection angle, to transition to the second state (e.g., the folded state of FIG. 3D) through the hinge structure 340 when a pressure is applied in the folding direction (direction C). According to an embodiment, the electronic device 300 may also be operated to remain unfolded at various angles (not shown) through the hinge structure 340.

FIG. 4 is a block diagram illustrating the configuration of an electronic device according to an embodiment.

Referring to FIG. 4, an electronic device 400 according to an embodiment of the disclosure may include a processor 120 (e.g., the processor 120 of FIG. 1, the processor 510 of FIG. 5A), a memory 130 (e.g., the memory 130 of FIG. 1, the internal storage 530 of FIG. 5A), a display module 160 (e.g., the display module 160 of FIG. 1), a digitizer driver 470, a sensor module 480 (e.g., the sensor module 176 of FIG. 1), and an image analysis module 490 (e.g., an image analysis artificial intelligence (AI) module). For example, the electronic device 400 may include a power management module (e.g., the power management module 188 of FIG. 1), a battery (e.g., the battery 189 of FIG. 1), and a camera module (e.g., the camera module 180 of FIG. 1).

In an embodiment, the memory 130 (e.g., the memory 130 of FIG. 1) may include one or more of a high bandwidth memory (HBM), a dynamic random access memory (DRAM), a static random access memory (SRAM), a phase-change random access memory (PRAM), a magnetic random access memory (MRAM), a resistive random access memory (RRAM), a flash memory, and/or an electrically erasable programmable read-only memory (EEPROM).

According to an embodiment, the display module 160 (e.g., the display module 160 of FIG. 1) may include a display 410, a display driver IC (hereinafter, referred to as "DDIC" or "DDI") 430 (e.g., a display driver) for driving the display 410, a touch circuit 450, and a digitizer 460. For example, all or part of the sensor module 480 may be included in the display module 160.

For example, the display 410 may include a display that is visible to the outside when the electronic device 400 is unfolded (e.g., the flexible display 330 of FIGS. 3A and 3B).

For example, the display 410 may include a display that is visible to the outside when the electronic device 400 is folded (e.g., the sub-display (331, an external display) of FIG. 3C, the cover display (324, a sub-display external display)).

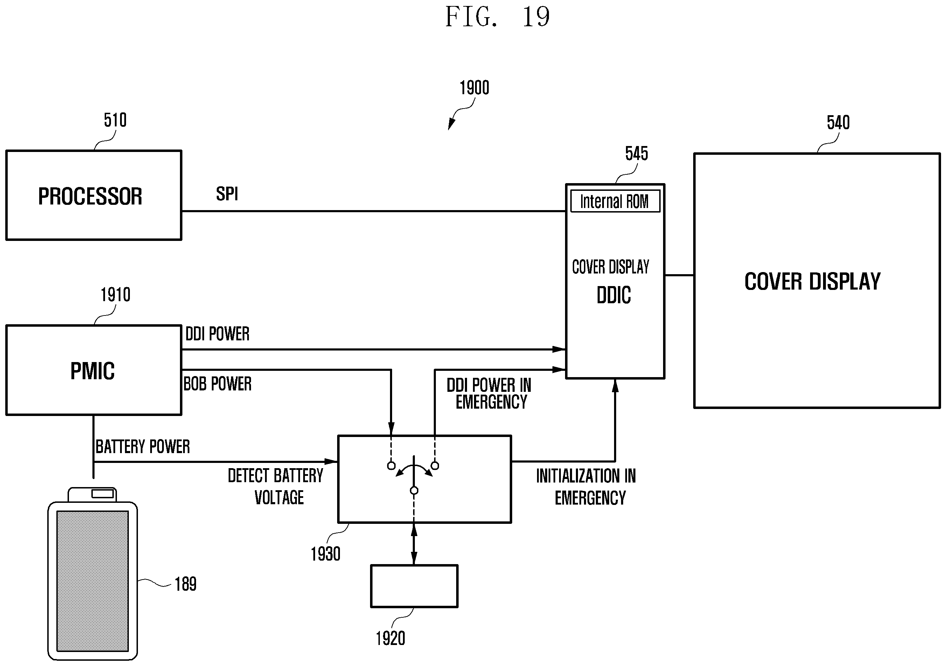

According to an embodiment, the DDIC 430 may include a DDIC (or DDI) for driving the flexible display 330 of FIGS. 3A and 3B and the sub-display (331, an external display) of FIG. 3C, and a DDIC (or DDI) (e.g., the cover display DDIC 545 of FIG. 19) for driving the cover display (324, a sub-display external display) of FIG. 3C.

For example, the DDIC 430 may include an interface module 431 (e.g., an interface circuit), a memory 433 (e.g., a buffer memory), an image processing module 435 (e.g., an image processing circuit), or a mapping module 437 (e.g., a mapping circuit).

According to an embodiment, the DDIC 430 may receive image data or image information including an image control signal corresponding to a command for controlling the image data from another component of the electronic device (e.g., the electronic device 101 of FIG. 1, the electronic device 200 of FIGS. 2 and 3) through the interface module 431.

According to an embodiment, the image information may be received from the processor 120 (e.g., the processor 120 of FIG. 1) (e.g., the main processor 121 of FIG. 1) (e.g., an application processor) or an auxiliary processor (e.g., the auxiliary processor 123 of FIG. 1) (e.g., a graphic processing unit) that operates independently of the function of the main processor 121.

According to an embodiment, the DDIC 430 may communicate with a touch circuit 450 or a sensor module 480 through the interface module 431. In addition, the DDIC 430 may store, in the memory 433, at least part of the received image information. As an example, the DDIC 430 may store, in the memory 433 on a frame-by-frame basis, at least part of the received image information.

According to an embodiment, the image processing module 435 may perform preprocessing or postprocessing (e.g., resolution, brightness, or size adjustment) on at least part of the image data, based at least on characteristics of the image data or characteristics of the display 410.

According to an embodiment, the mapping module 437 may generate a voltage value or a current value corresponding to the image data preprocessed or postprocessed through the image processing module 435. According to an embodiment, the generation of the voltage value or the current value may be performed at least partially based on the properties of the pixels of the display 410 (e.g., the arrangement of the pixels (RGB stripe or pentile structure), or the size of each subpixel).

According to an embodiment, at least some pixels of the display 410 may be, for example, driven at least partially based on the voltage value or the current value, so that visual information (e.g., text, an image, or an icon) corresponding to the image data may be displayed through the display 410.

According to an embodiment, the touch circuit 450 may include a touch sensor 451 and a touch sensor IC (an integrated circuit) 453 for controlling the touch sensor 451.

According to an embodiment, the touch sensor IC 453 may control the touch sensor 451 to detect a touch input or a hovering input with respect to a specific location of the display 410. For example, the touch sensor IC 453 may detect the touch input or the hovering input by measuring a change in a signal (e.g., voltage, amount of light, resistance, or amount of charge) with respect to a specific location of the display 410. The touch sensor IC 453 may provide information (e.g., location, area, pressure, or time) about the detected touch input or hovering input to the processor (e.g., the processor 120 of FIG. 1).

In an embodiment, at least part of the touch circuit 450 (e.g., the touch sensor IC 453) may be included as part of the DDIC 430 or the display 410.

In an embodiment, at least part of the touch circuit 450 (e.g., the touch sensor IC 453) may be included as part of another component (e.g., the auxiliary processor 123) located outside the display module 160.

In an embodiment, the display module 160 may further include at least one sensor (e.g., a fingerprint sensor, an iris sensor, a pressure sensor, or an illuminance sensor) of the sensor modules 480, or a control circuit for the sensors. For example, the at least one sensor or the control circuit therefor may be embedded in a part of the display 410, a part the DDIC 430, or a part of the touch circuit 450.

For example, when the sensor module 480 embedded in the display module 160 includes a biometric sensor (e.g., a fingerprint sensor), the biometric sensor may acquire biometric information (e.g., a fingerprint image) associated with a touch input through a part of the display 410.

For example, when the sensor module 480 embedded in the display module 160 includes a pressure sensor, the pressure sensor may acquire pressure information associated with a touch input through a partial area or the entire area of the display 410.

According to an embodiment, the touch sensor 451 or the sensor module 480 may be arranged between pixels of a pixel layer of the display 410 or above or below the pixel layer.

According to an embodiment, the display module 160 may include a digitizer 460 for detecting an input (e.g., a touch input or a hovering input) of an electronic pen (e.g., a stylus pen). For example, the digitizer 460 may convert analog coordinates (e.g., a position) of the electronic pen (e.g., a stylus pen) into digital coordinate data. The digitizer 460 may transmit the digital coordinate data to the processor 120 and/or the DDIC 430.

According to an embodiment, the processor 120 may acquire digital coordinate data input from the digitizer 460. The processor 120 may detect an input (e.g., a touch input or a hovering input) through the electronic pen (e.g., a stylus pen), based on the digital coordinate data. For example, the digitizer 460 may include a plurality of x-axis channels and a plurality of y-axis channels. The processor 120 may sense the position of the electronic pen (e.g., stylus pen) by using sensing signals (e.g., EMR signals) received from the x-axis channels and y-axis channels arranged in the digitizer 460. For example, a plurality of x-axis channels and a plurality of y-axis channels may be sequentially arranged in the digitizer 460, and the processor 120 may sense the position of the electronic pen (e.g., stylus pen) by using sensing signals (e.g., EMR signals) received from three consecutive channels (e.g., three adjacent channels).

According to an embodiment, the digitizer 460 may not be visible from the outside due to the display 410, electronic components, and mechanisms.

For example, the digitizer 460 may be arranged integrally with the flat display 410 or may be arranged adjacent to the flat display 410. For example, when the digitizer 460 is applied to the flat display 410, the digitizer 460 may include one electro magnetic resonance (EMR) sheet (or EMR film). The plurality of x-axis channels and the plurality of y-axis channels for detecting the position of the electronic pen may be arranged on the one EMR sheet.

For example, the digitizer 460 may be arranged integrally with a flexible display or a foldable display or may be arranged adjacent to the flexible display or the foldable display. For example, the digitizer 460 may be disposed below (e.g., under) the display 410 (e.g., the display 230 of FIGS. 2 and 3) in the z-axis direction (e.g., the z-axis direction of FIGS. 2 and 3).

For example, when the digitizer 460 is applied to the flexible display or the foldable display, the digitizer 460 may include a plurality of electro magnetic resonance (EMR) sheets (or EMR films). The plurality of x-axis channels and the plurality of y-axis channels for detecting the position of the electronic pen may be arranged on the plurality of EMR sheets.

According to an embodiment, the sensor module 480 may include at least one of a gesture sensor, a gyro sensor, a grip sensor, a color sensor, an infrared (IR) sensor, a illuminance sensor, an ultrasonic sensor, a proximity sensor, a biometric sensor (e.g., an iris recognition sensor), a distance detection sensor (e.g., a time of flight (TOF) sensor, a light detection and ranging (LiDAR) sensor), a barometric pressure sensor, a magnetic sensor (e.g., a six-axis sensor, a geomagnetic sensor), an acceleration sensor, a temperature sensor, a humidity sensor, and/or a fingerprint recognition sensor.

According to an embodiment, the camera module (e.g., the camera module 180 of FIG. 1) may include a plurality of cameras (e.g., the camera device 305 of FIG. 3A, the camera device 308 of FIG. 3C).

For example, the plurality of cameras may include a first camera having a first wide angle (e.g., an ultra-wide camera), a second camera having a narrower wide angle than the first camera (e.g., a wide camera), a third camera having a first multiple zoom (e.g., a 3x zoom camera), and a fourth camera having a second multiple zoom greater than the first multiple zoom (e.g., a 5x zoom camera, a 10x zoom camera, or a 100x zoom camera).

In an embodiment, the image analysis module 490 (e.g., the image analysis AI module) may be arranged on-device of the electronic device 400.

In an embodiment, the image analysis module 490 (e.g., the image analysis AI module) may be arranged as a part of the processor 120 (e.g., the processor 510 of FIG. 5A).

According to an embodiment, the image analysis module 490 (e.g., the image analysis AI module) may be arranged as a separate processor from the processor 120 (e.g., the processor 510 of FIG. 5A).

According to an embodiment, the image analysis module 490 (e.g., the image analysis AI module) may be arranged in an external electronic device and may be connected to the electronic device 400 via communication.

According to an embodiment, the entire configurations or partial configurations of the DDIC 430 may be built into the processor 120. For example, the entire operations or some operations of the DDIC 430 may be performed by the processor 120.

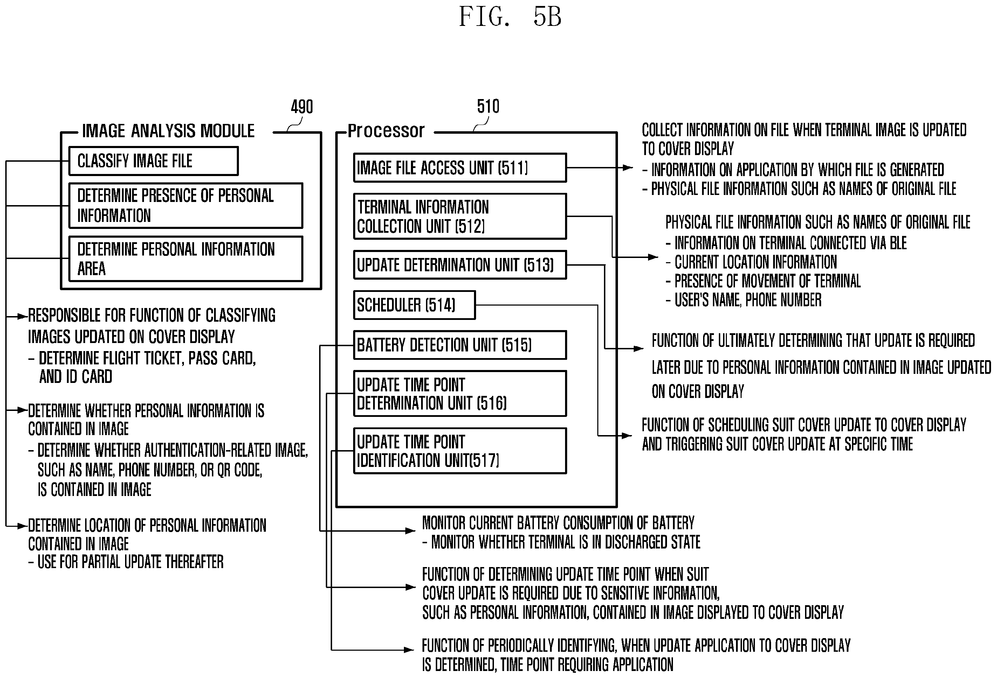

FIG. 5A is a block diagram illustrating the configuration of an electronic device according to an embodiment. FIG. 5B is a diagram illustrating an example of analyzing an image by an electronic device according to an embodiment.

Referring to FIGS. 5A and 5B, an electronic device 500 according to an embodiment (e.g., the electronic device 101 of FIG. 1, the electronic device 200 of FIGS. 2A to 2D, the electronic device 300 of FIGS. 3A to 3E, the electronic device 400 of FIG. 4) may include the image analysis module 490 (e.g., the image analysis module (490, an image analysis AI module) of FIG. 4), a processor 510 (e.g., the processor 120 of FIG. 1, the processor 120 of FIG. 4), a media provider (520, a media provider), an internal storage (530, an internal storage) (e.g., the memory 130 of FIG. 1, the memory 130 of FIG. 4), a cover display (540, a sub-display, an external display) (e.g., the cover display 324 of FIG. 3C).

For example, the electronic device 500 may include the display 410 of FIG. 4. The display 410 may include a display (e.g., a flexible display 330 of FIGS. 3A and 3B) that is visible to the outside when the electronic device 400 is unfolded. The display 410 may include a display (e.g., the sub-display (331, an external display) of FIG. 3C) that is visible to the outside when the electronic device 400 is folded, and a cover display 540 (e.g., the cover display (324, a sub-display externa l display) of FIG. 3C). In the disclosure, among the displays 410 of the electronic device 500, the display 330 that is visible to the outside when the electronic device 400 is unfolded may be referred to as a first display (e.g., a main display). In the disclosure, among the displays 410 of the electronic device 500, the cover display 540 that is visible to the outside when the electronic device 400 is folded may be referred to as a second display (e.g., a sub-display, an external display). In the disclosure, among the displays 410 of the electronic device 500, the display 331 that is visible to the outside when the electronic device 400 is folded may be referred to as a third display (e.g., an external display, a sub-display).

In an embodiment, the processor 510 may acquire an image by running an application 550 (e.g., a gallery application, a 3rd party application). The processor 510 may update (e.g., change) an image displayed on the cover display 540 to the image acquired through the application 550.

According to an embodiment, the processor 510 may operate the media provider 520 to acquire an image stored in the internal storage 530. The processor 510 may update (e.g., change) the image displayed on the cover display 540 with the image acquired through the media provider 520.

According to an embodiment, the image analysis module 490 (e.g., the image analysis AI module) may classify the input images. For example, the image analysis module 490 (e.g., an image analysis AI module) may determine the type of the input image. For example, the image analysis module 490 (e.g., an image analysis AI module) may determine whether the input image is a flight ticket image, a student ID image, a pass card image, a coupon image, or an ID card image. The image analysis module 490 (e.g., an image analysis AI module) may classify an image according to the type of the image (e.g., the classification of the image), based on the determination result of the image.

According to an embodiment, the image analysis module 490 (e.g., an image analysis AI module) may determine whether the classified image includes the user's sensitive information, personal information, and/or invalid information. For example, the invalid information may include information, the validity of which has been lost due to a time (e.g., a time, a period) and/or information, the validity of which has been lost due to a location (e.g., location of an electronic device). For example, the image analysis module 490 (e.g., an image analysis AI module) may determine whether the image contains the user's name, phone number, resident registration number, QR(quick response) code, or information related to authentication.

In an embodiment, when an image contains the user's sensitive information, personal information, and/or invalid information, the image analysis module 490 (e.g., the image analysis AI module) may determine the area in the image where the user's sensitive information, personal information, and/or invalid information is placed (e.g., the location in the image where the user's sensitive information, personal information, and/or invalid information is placed).

In an embodiment, the image analysis module 490 (e.g., an image analysis AI module) may provide, to the processor 510, information indicating that the image contains the user's sensitive information. The image analysis module 490 (e.g., an image analysis AI module) may provide, to the processor 510, information on an area (location) in the image where the user's sensitive information is placed.

According to an embodiment, the image analysis module 490 (e.g., an image analysis AI module) may provide, to the processor 510, information indicating that the image contains personal information. The image analysis module 490 (e.g., an image analysis AI module) may provide, to the processor 510, information on an area (location) in the image where the personal information is placed.

According to an embodiment, the image analysis module 490 (e.g., an image analysis AI module) may provide, to the processor 510, information indicating that the image contains invalid information. The image analysis module 490 (e.g., an image analysis AI module) may provide, to the processor 510, information on the area (location) where the invalid information is placed.

According to an embodiment, the image analysis module 490 (e.g., an image analysis AI module) may determine whether an image displayed on the cover display 540 requires an update (e.g., determine whether the image corresponds to an image requiring an update). The image analysis module 490 (e.g., an image analysis AI module) may provide the result of the determination of whether the image requires an update (e.g., determine whether the image corresponds to an image requiring an update) to the processor 510.

According to an embodiment, the processor 510 may update (e.g., change) a final image (e.g., a final screen) displayed on the cover display (540, a sub-display, an external display), according to a configured condition. For example, the final image (e.g., the final screen) may refer to an image (e.g., a screen) displayed last on the cover display (540, a sub-display, an external display).

According to an embodiment, the processor 510 may update (e.g., change) a final image to a different image when the final image (e.g., the final screen) displayed on the cover display (540, a sub-display, an external display) contains the user sensitive information, personal information, and/or invalid information.

According to an embodiment, when a final image (e.g., a final screen) displayed on the cover display (540, a sub-display, an external display) contains the user's sensitive information, personal information, and/or invalid information, the processor 510 may conceal (blind) the user's sensitive information, personal information, and/or invalid information, contained in the image. For example, the processor 510 may cover, with a black block (or a block of a different color), the part where the user's sensitive information, personal information, and/or invalid information is displayed, so that the user's sensitive information, personal information, and/or invalid information contained in the image are invisible.

According to an embodiment, the processor 510 may include an image file access unit 511, a terminal information receiving unit 512, an update determination unit 513, a scheduler 514, a battery detection unit 515, an update time point determination unit 516, and an update time point identification unit 517.

For example, the image file access unit 511 may collect (e.g., acquire) information on a file (e.g., an image) when the file (e.g., an image) is updated on the cover display (540, a sub-display, an external display). The image file access unit 511 may collect (e.g., acquire) information on an application by which the file (e.g., an image) is produced. The image file access unit 511 may collect (e.g., acquire) physical information (e.g., a file name) about the original file (e.g., an image).

For example, the terminal information receiving unit 512 may collect (e.g., acquire) user information of the electronic device 500. The terminal information receiving unit 512 may collect (e.g., acquire) Bluetooth connection information when the electronic device 500 is connected to Bluetooth (e.g., Bluetooth low energy (BLE)). The terminal information receiving unit 512 may collect (e.g., acquire) current location information of the electronic device 500. The terminal information receiving unit 512 may collect (e.g., acquire) information on the movement of the electronic device 500. The terminal information receiving unit 512 may collect (e.g., acquire) user's personal information (e.g., name, phone number).

For example, the update determination unit 513 may determine whether the displayed (or updated) image on the cover display (540, a sub-display, an external display) contains the user's sensitive information, personal information, and/or invalid information. When the displayed (or updated) image on the cover display (540, a sub-display, an external display) contains the user's sensitive information, personal information, and/or invalid information, the update determination unit 513 may determine update (e.g., change) of the displayed (or updated) image on the cover display (540, a sub-display, an external display) at the event that the battery 189 (e.g., the battery 189 of FIG. 1) is discharged. For example, when a remaining capacity (State of Charge; SOC) of the battery 189 (e.g., the battery 189 of FIG. 1) is less than or equal to a predetermined capacity (e.g., 10%), the update determination unit 513 may determine update (e.g., change) of the image displayed (or updated) on the cover display (540, a sub-display, an external display).

For example, the scheduler 514 may schedule an image update of the cover display (540, a sub-display, an external display) and cause the image to be updated at a specific time.

For example, the battery detection unit 515 may monitor the usage of the battery 189 of the electronic device 500 and identify the remaining capacity of the battery 189 to detect whether the battery 189 is discharged. For example, the battery detection unit 515 may detect whether the remaining capacity of the battery 189 is less than or equal to a predetermined capacity (e.g., 10%).

For example, the update time point determination unit 516 may determine the necessity of updating the final image (e.g., the final screen) displayed on the cover display (540, a sub-display, an external display) (e.g., determine whether the image corresponds to an image requiring update). The update time point determination unit 516 may determine whether the final image (e.g., the final screen) displayed on the cover display (540, a sub-display, an external display) contains the user's sensitive information, personal information, and/or invalid information.

For example, the update time point identification unit 517 may periodically identify an update (e.g., change) time point for a final image (e.g., a final screen) displayed on the cover display (540, a sub-display, an external display) to a different image.

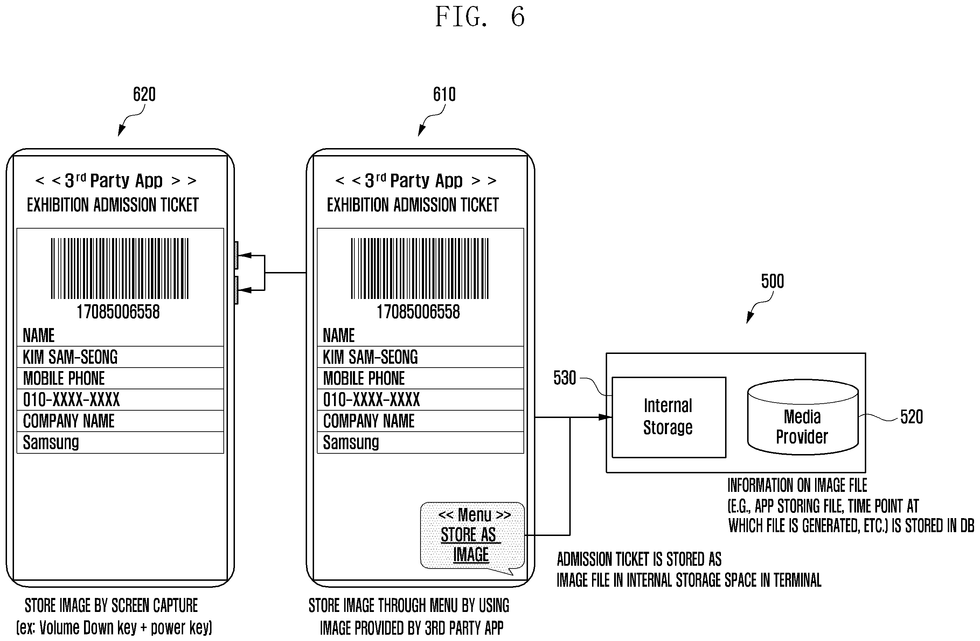

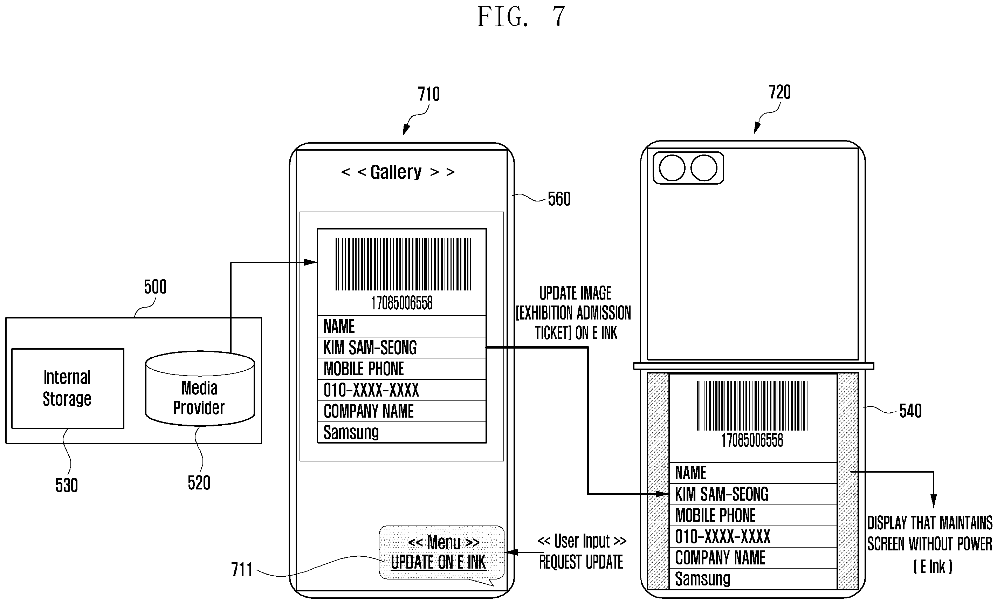

FIGS. 6 and 7 illustrate updating (e.g., changing) a final image (e.g., a final screen) displayed on a cover display (e.g., a sub-display, an external display).

According to an embodiment with reference to FIGS. 5A, 6, and 7, the electronic device 500 may update (e.g., change) a final image (e.g., a final screen) displayed on the cover display 540 (e.g., a sub-display, an external display).

According to an embodiment, the electronic device 500 may acquire an image (e.g., an admission ticket image) by running an application 550 (e.g., a gallery application, a 3rd party application, an exhibition application) 610. The electronic device 500 may download the image (e.g., an admission ticket image) through the application 550 (e.g., a gallery application, a 3rd party application, an exhibition application). The electronic device 500 may store the image (e.g., an admission ticket image) acquired by running the application 550 (e.g., a gallery application, a 3rd party application) in the internal storage 530 (e.g., the memory 130 of FIG. 4).

According to an embodiment, the electronic device 500 may screen capture an image displayed on the display (e.g., a main display, an internal display, the flexible display 330 of FIGS. 3A and 3B) to acquire the image (e.g., an admission ticket image) 620. The electronic device 500 may screen capture an image (e.g., an admission ticket image) displayed through the application 550 (e.g., a gallery application, a 3rd party application, an exhibition application). The electronic device 500 may store, in the internal storage 530 (e.g., the memory 130 of FIG. 4), the image (e.g., an admission ticket image) acquired through the screen capture.

According to an embodiment, the electronic device 500 may classify the acquired image (e.g., an admission ticket image) as a media file. The electronic device 500 may store, in the internal storage 530 (e.g., the memory 130 of FIG. 4), additional information (the application by which the file is produced, and/or the produced date) about the image classified as a media file (e.g., an admission ticket image) together with the acquired image (e.g., an admission ticket image).

According to an embodiment, the electronic device 500 may operate the media provider 520 to retrieve and load the image (e.g., an admission ticket image) stored in the internal storage 530. For example, the electronic device 500 may run the application (e.g., a gallery application) to display 710, on the display 560 (e.g., the flexible display 330 of FIGS. 3A and 3B), an image (e.g., an admission ticket image) acquired from the internal storage 530. For example, the electronic device 500 may display, on the display 560 (e.g., the flexible display 330 of FIGS. 3A and 3B), an image update menu 711 for updating (e.g., changing) the image (e.g., an admission ticket image) acquired from the internal storage 530 to an image for the cover display (540, a sub-display, an external display). For example, an image viewer function of the electronic device 500 may be executed to display the image (e.g., an admission ticket image) stored in the internal storage 530 to the user.

According to an embodiment, a user may request an update (e.g., change) to acquire an image for the cover display (540, a sub-display, an external display) by clicking on the image update menu 711 displayed on the display 560. The electronic device 500 may update (e.g., change) the image (e.g., an admission ticket image) acquired from the internal storage 530 to an image for the cover display (540, a sub-display, an external display), based on the user's request 720.

According to an embodiment, an operation of updating (e.g., changing) an image (e.g., an admission ticket image) on the cover display (540, a sub-display, an external display) after the image update menu 711 is selected by the user may be executed in the background.

For example, the processor 510 may include a component 510a (e.g., a flex suit settings component) configured to update (e.g., change) an image (e.g., an admission ticket image) to the cover display (540, a sub-display, an external display). When an update (e.g., change) of an image to be displayed on the cover display (540, a sub-display, an external display) through an application is requested, the processor 510 may acquire, through the component 510a (e.g., a flex suit setting component), related information (file path, uniform resource locator (URL) of the file) enabling access to the original image. The processor 120 may access the original file through the related information, retrieve information on the original file, and update the acquired image to the cover display (540, a sub-display, an external display).

According to an embodiment, when an image is updated to the cover display (540, a sub-display, an external display) capable of maintaining a screen without power, power is not required to maintain the final image (e.g., the final screen) of the cover display (540, a sub-display, an external display). Even when the battery 189 of the electronic device 500 is discharged, the final image (e.g., the final screen) of the cover display (540, a sub-display, an external display) may remain displayed. For example, when the final image (e.g., the final screen) displayed on the cover display (540, a sub-display, an external display) contains the user's sensitive information, personal information, and/or invalid information, the user's sensitive information, personal information, and/or invalid information may be exposed to the outside. The electronic device 500 may update (e.g., change) the image on the cover display (540, a sub-display, an external display) to prevent the user's sensitive information, personal information, and/or invalid information displayed on the cover display (540, a sub-display, an external display) from being exposed to the outside when the battery 189 is discharged. For example, the electronic device 500 may update (e.g., change) the displayed (or updated) image on the cover display (540, a sub-display, an external display) when the remaining capacity of the battery 189 (e.g., the battery 189 of FIG. 1) is less than or equal to a predetermined capacity (e.g., 10%) or when the battery 189 is discharged.

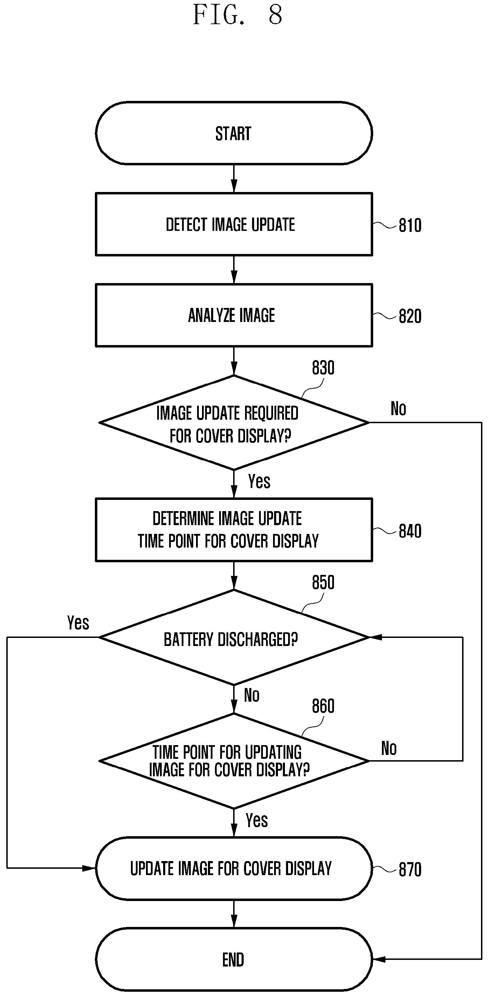

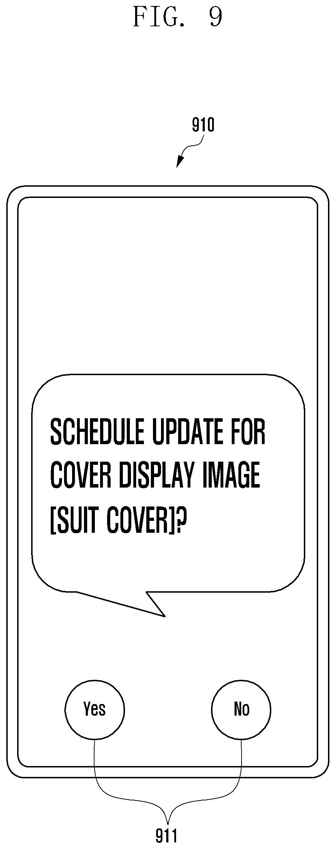

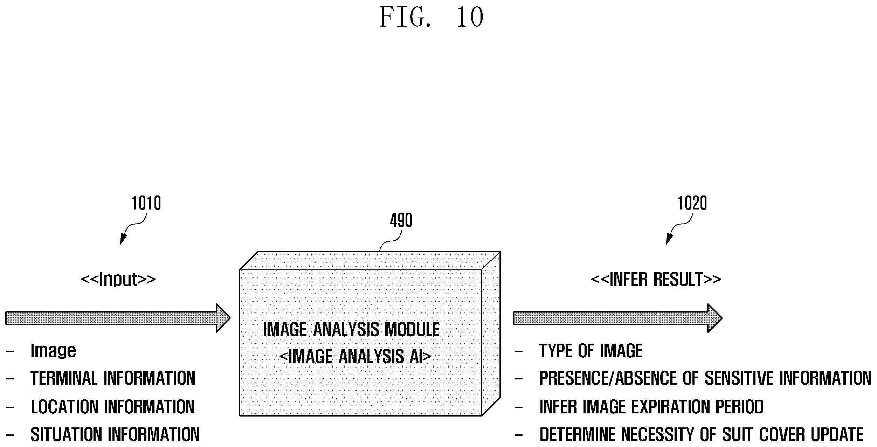

FIGS. 8 to 10 illustrate an operation method of an electronic device according to an embodiment.

Referring to FIGS. 5A and 8 to 10, in operation 810 according to an embodiment, the electronic device 500 may detect an update of an image to be displayed on the cover display (540, a sub-display, an external display).

According to an embodiment, in operation 810, the processor 510 may detect an update of an image to be displayed on the cover display (540, a sub-display, an external display).

According to an embodiment, in operation 820, the electronic device 500 may analyze the image displayed on the cover display (540, a sub-display, an external display). For example, the electronic device 500 may determine whether the image contains the user's sensitive information, personal information, and/or invalid information. For example, the invalid information may contain information, validity of which has been lost due to a time (e.g., a time, a period) and/or information, validity of which has been lost due to a location (e.g., location of the electronic device).

For example, the electronic device 500 may determine whether the image displayed on the cover display (540, a sub-display, an external display) includes a user's name, phone number, resident registration number, QR code, or information related to authentication. For example, the electronic device 500 may receive location information (e.g., GPS information), situational information (e.g., whether moving away from a specific geofence, data on the degree of movement of the electronic device) as input data 1010.

According to an embodiment, the electronic device 500 may analyze an image displayed on the cover display (540, a sub-display, an external display) to infer the result 1020. For example, the electronic device 500 may convert the type of the image and determine whether the image contains a user's name, phone number, resident registration number, QR code, or information related to authentication. The electronic device 500 may determine whether the image contains date information. The electronic device 500 may determine the validity of the image, based on the date information contained in the image.

According to an embodiment, when an image contains the user's sensitive information, personal information, and/or invalid information, the electronic device 500 may determine an area (location) in the image where the user's sensitive information, personal information, and/or invalid information is placed. In the electronic device 500, the image analysis module 490 (e.g., an image analysis AI module) may provide, to the processor 510, information indicating that the image contains the user's sensitive information, personal information, and/or invalid information, and information on an area (location) in the image where the user's sensitive information, personal information, and/or invalid information is placed.

According to an embodiment, in operation 820, the image analysis module 490 (e.g., an image analysis AI module) may analyze the image displayed on the cover display (540, a sub-display, an external display). For example, the image analysis module 490 (e.g., an image analysis AI module) may determine whether the image contains the user's sensitive information, personal information, and/or invalid information. For example, the image analysis module 490 (e.g., an image analysis AI module) may determine whether the image contains user's name, phone number, resident registration number, QR code, and information related to authentication. When the image contains the user's sensitive information, personal information, and/or invalid information, the image analysis module 490 (e.g., an image analysis AI module) may determine an area (location) in the image where the user's sensitive information, personal information, and/or invalid information is placed. The image analysis module 490 (e.g., an image analysis AI module) may provide, to the processor 510, information indicating that the image contains the user's sensitive information, personal information, and/or invalid information, and information on the area (location) in the image where the user's sensitive information, personal information, and/or invalid information is placed.

For example, the image analysis module 490 (e.g., an image analysis AI module) may receive location information (e.g., GPS information), situational information (e.g., whether moving away from a specific geofence, data about the degree of movement of the electronic device) as input data 1010.

According to an embodiment, the image analysis module 490 (e.g., an image analysis AI module) may analyze the image displayed on the cover display (540, a sub-display, an external display) to infer the result 1020. For example, the image analysis module 490 (e.g., an image analysis AI module) may convert the type of the image and determine whether the image contains a user's name, phone number, resident registration number, QR code, or information related to authentication. The image analysis module 490 (e.g., an image analysis AI module) may determine whether the image contains date information. The processor 510 may determine the validity of the image, based on the date information contained in the image.

According to an embodiment, in operation 830, the electronic device 500 may determine whether an update of the image for the cover display (540, a sub-display, an external display) is required according to a configured condition (e.g., determine whether the image corresponds to an image requiring an update). For example, when the image displayed on the cover display (540, a sub-display, an external display) contains the user's sensitive information, personal information, and/or invalid information, the electronic device 500 may determine that the image requires an update (e.g., determine that the image corresponds to an image requiring an update).

According to an embodiment, in operation 830, the processor 510 may determine whether an image for the cover display (540, a sub-display, an external display) requires an update (e.g., determine whether the image corresponds to an image requiring an update), based on a set condition. For example, when the image displayed on the cover display (540, a sub-display, an external display) contains the user's sensitive information, personal information, and/or invalid information, the processor 510 may determine that the image requires an update (e.g., determine that the image corresponds to an image requiring an update).

According to an embodiment, in operation 840, the electronic device 500 may determine an update time point for the image displayed on the cover display (540, a sub-display, an external display) (e.g., determine the time point at which an update of an image is required).

According to an embodiment, in operation 840, the processor 510 may determine the time point for updating an image displayed on the cover display (540, a sub-display, an external display) (e.g., determine the time point at which an update of an image is required).

According to an embodiment, in operation 850, the electronic device 500 may identify the consumption amount of the battery 189 to determine whether the battery 189 is discharged. For example, the electronic device 500 may determine whether the remaining capacity of the battery 189 (e.g., the battery 189 of FIG. 1) is less than a predetermined capacity (e.g., 10%) (or whether the battery 189 is discharged). Without being limited thereto, the condition for the remaining capacity of the battery 189 may be configured to a value less than 10%. In addition, the condition for the remaining capacity of the battery 189 may be configured to a value greater than 10% and less than or equal to 30%.

According to an embodiment, in operation 850, the processor 510 may identify the consumption amount of the battery 189 to determine whether the battery 189 is discharged. For example, the processor 510 may determine whether the remaining capacity of the battery 189 (e.g., the battery 189 of FIG. 1) is less than or equal to a predetermined capacity (e.g., 10%) (or whether the battery 189 is discharged).

According to an embodiment, operation 860 may proceed when the determination result in operation 850 indicates that the battery 189 has not been discharged. For example, operation 860 may proceed when the determination result in operation 850 indicates that the remaining capacity of the battery 189 exceeds a predetermined capacity (e.g., 10%).

According to one embodiment, operation 870 may proceed when the determination result in operation 850 indicates that the battery 189 is discharged. For example, operation 870 may proceed when the determination result in operation 850 indicates that the remaining capacity of the battery 189 is less than or equal to a predetermined capacity (e.g., 10%).

**In** operation 860 according to an embodiment, in a state where the remaining capacity of the battery 189 exceeds a predetermined capacity (e.g., 10%), the electronic device 500 may determine whether an update time point for the image displayed on the cover display (540, a sub-display, an external display) has been reached. For example, when the image displayed on the cover display (540, a sub-display, an external display) remains valid or becomes invalid over time, the electronic device 500 may determine whether the image has remained valid or has become invalid based on the current time.

In operation 860 according to an embodiment, in a state where the remaining capacity of the battery 189 exceeds a predetermined capacity (e.g., 10%), the processor 510 may determine whether the update time point for the image displayed on the cover display (540, a sub-display, an external display) has been reached. For example, when the image displayed on the cover display (540, a sub-display, an external display) remains valid or becomes invalid over time, the processor 510 may determine whether the image has remained valid or has become invalid based on the current time.

According to an embodiment, when the determination result in operation 860 indicates that the image has remained valid based on the current time, returning to operation 850 may be performed and a subsequent operation may be performed.

According to an embodiment, operation 870 may proceed when the determination result in operation 860 indicates that the image has become invalid based on the current time.

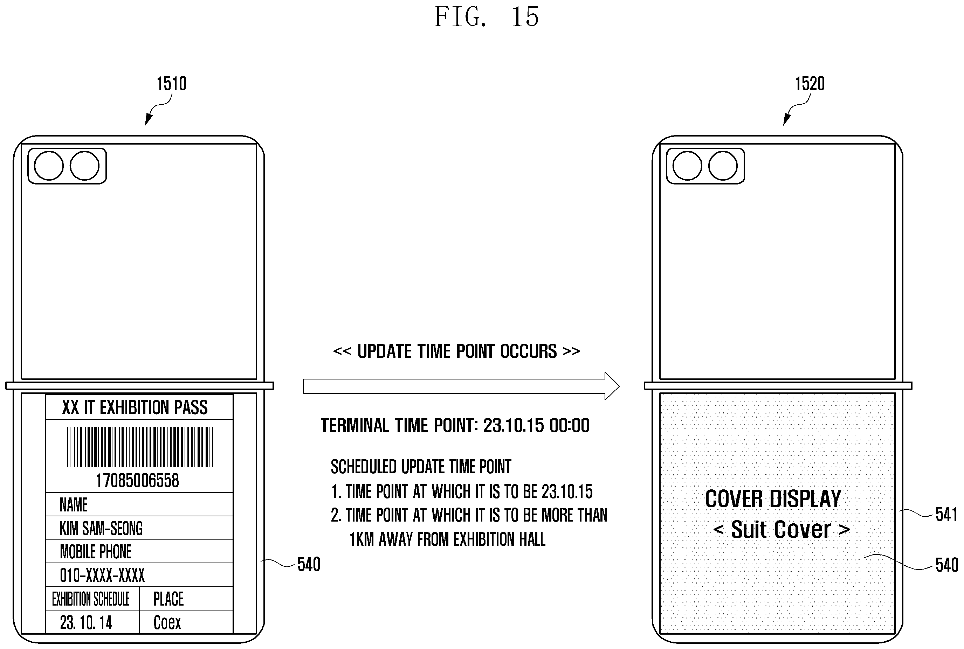

According to an embodiment, in operation 870, the electronic device 500 may update (e.g., change) the image displayed on the cover display (540, a sub-display, an external display). For example, the electronic device 500 may replace and update (e.g., change) the image displayed on the cover display (540, a sub-display, an external display) with a different image that does not contain the user's sensitive information, personal information, and/or invalid information. For example, the electronic device 500 may perform update (e.g., change) such that an image substantially identical to the outer cover (e.g., the outer cover 541 of FIG. 15) is displayed on the cover display (540, a sub-display, an external display).

For example, when the remaining capacity of the battery 189 is less than or equal to a predetermined capacity (e.g., 10%) (or the battery 189 is discharged), the electronic device 500 may update (e.g., change) the image displayed on the cover display (540, a sub-display, an external display) to a different image regardless of an update time point for the image.

For example, when the update time point for the image is reached, the electronic device 500 may update (e.g., change) the image displayed on the cover display (540, a sub-display, an external display) to a different image regardless of the remaining capacity of the battery 189.

According to an embodiment, in operation 870, the processor 510 may update (e.g., change) the image displayed on the cover display (540, a sub-display, an external display). For example, the processor 510 may replace and update (e.g., change) the image displayed on the cover display (540, a sub-display, an external display) with a different image that does not contain the user's sensitive information, personal information, and/or invalid information. For example, the processor 510 may perform update (e.g., change) such that an image substantially identical to the outer cover (e.g., the outer cover 541 of FIG. 15) is displayed on the cover display (540, a sub-display, an external display).

For example, when the remaining capacity of the battery 189 is less than or equal to a predetermined capacity (e.g., 10%) (or the battery 189 is discharged), the processor 510 may update (e.g., change) the image displayed on the cover display (540, a sub-display, an external display) to a different image regardless of the update time point for the image.

For example, when the update time point for the image is reached, the processor 510 may update (e.g., change) the image displayed on the cover display (540, sub-display, external display) to a different image regardless of the remaining capacity of the battery 189.

According to an embodiment, a user may not want to update the image displayed on the cover display (540, a sub-display, an external display) as needed. For example, the electronic device 500 may identify whether the user wants to update the image displayed on the cover display (540, a sub-display, an external display). For example, the electronic device 500 may provide a user interface 910 including a selection menu 911 (e.g., a selection button) to enable the user to schedule an update of the image displayed on the cover display (540, a sub-display, an external display). The electronic device 500 may schedule an update of the image displayed on the cover display (540, a sub-display, an external display), based on an input by the user through the selection menu 910.

For example, the processor 510 may determine whether the user wants to update an image displayed on the cover display (540, a sub-display, an external display). For example, the processor 510 may provide the selection menu 910 to enable the user to schedule an update of the image displayed on the cover display (540, a sub-display, an external display). The processor 510 may schedule an update of the image displayed on the cover display (540, a sub-display, an external display), based on an input by the user through the selection menu 910.

According to an embodiment, the memory (e.g., the memory 130 of FIG. 4) may include (e.g., store) instructions for causing the electronic device 500 to perform the operations of FIGS. 8 to 10.

According to an embodiment, the memory (e.g., the memory 130 of FIG. 4) may include (e.g., store) instructions for causing the processor 510 to perform the operations of FIGS. 8 to 10.

According to an embodiment, the memory (e.g., the memory 130 of FIG. 4) may include (e.g., store) instructions for causing an image analysis module (e.g., the image analysis module 490 of FIGS. 4 and 5B, an image analysis AI module) to perform the operations of FIGS. 8 to 10.

According to an embodiment, at least some of the operations illustrated in FIGS. 8 to 10 may be performed sequentially.

According to an embodiment, at least some of the operations illustrated in FIGS. 8 to 10 may be performed in parallel (simultaneously).

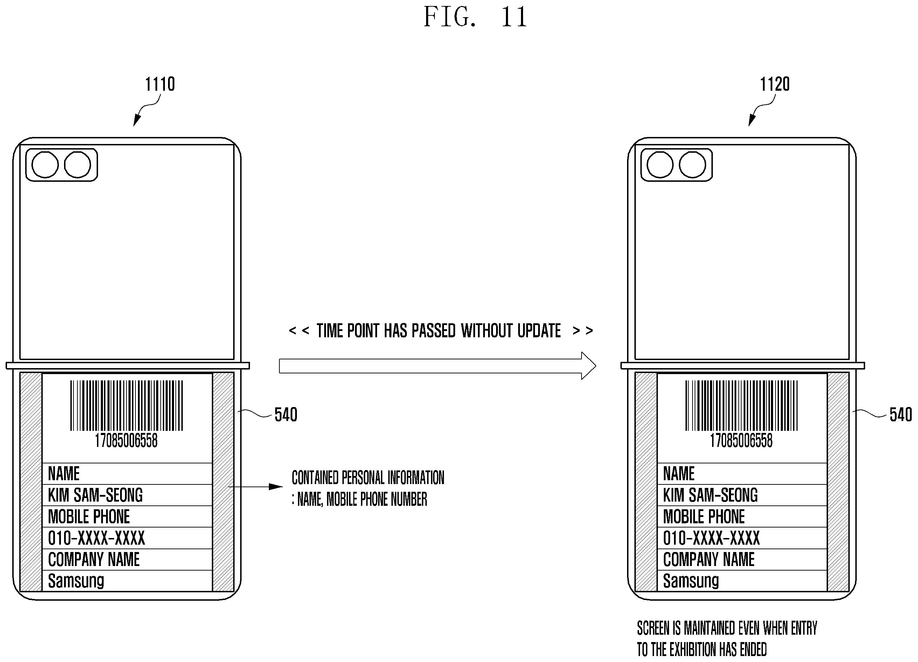

FIG. 11 illustrates determining to update (e.g., change) an image displayed on a cover display (e.g., a sub-display, an external display).

Referring to FIGS. 5A and 11, an image (e.g., an exhibition pass image) displayed on the cover display 540 (e.g., a sub-display, an external display) may contain the user's sensitive information, personal information, and/or invalid information 1110.

The electronic device 500 may classify the type of the image, as described in Table 1 and determine whether the image contains the user's sensitive information, personal information, and/or invalid information.

**[Table 1]**

| | |
|---|---|
| Image classification | personal information and sensitive information allowed to be contained |
| Exhibition pass | name, personal phone number |
| Employee ID | name, personal phone number, employee number, position |
| Student ID | name, personal number, department information |
| Movie ticket | QR code, admission related information |
| Flight ticket | name, flight information, seat information |
| Membership card | payment information, barcode |
| Gift card | Recognition code, validity term |

For example, the image (e.g., an exhibition pass) displayed on the cover display 540 (e.g., a sub-display, an external display) may include information which remains valid or becomes invalid over time. The electronic device 500 may determine whether the image (e.g., an exhibition pass) displayed on the cover display 540 (e.g., a sub-display, an external display) has remained valid or has become invalid based on the current time. Even when the image (e.g., exhibition pass) has become invalid, the cover display 540 (e.g., a sub-display, an external display) may continue to display the invalid image (e.g., an exhibition pass image) 1120.

For example, the image displayed on the cover display 540 (e.g., a sub-display, an external display) may contain the user's personal information (e.g., name, mobile phone number). Even when the battery 189 of the electronic device 500 is discharged, the cover display 540 (e.g., a sub-display, an external display) may continue to display the image (e.g., an exhibition pass image) containing the user's personal information (e.g., name, mobile phone number) 1120.

For example, when the battery 189 is discharged, the electronic device 500 may update (e.g., change) the image for the cover display 540 (e.g., a sub-display, an external display) by replacing the image containing user's personal information (e.g., name, mobile phone number).

For example, when the remaining capacity of the battery 189 is less than or equal to a predetermined capacity (e.g., 10%), the electronic device 500 may update (e.g., change) the image for the cover display 540 (e.g., a sub-display, an external display) by replacing the image containing the user's personal information (e.g., name, mobile phone number).

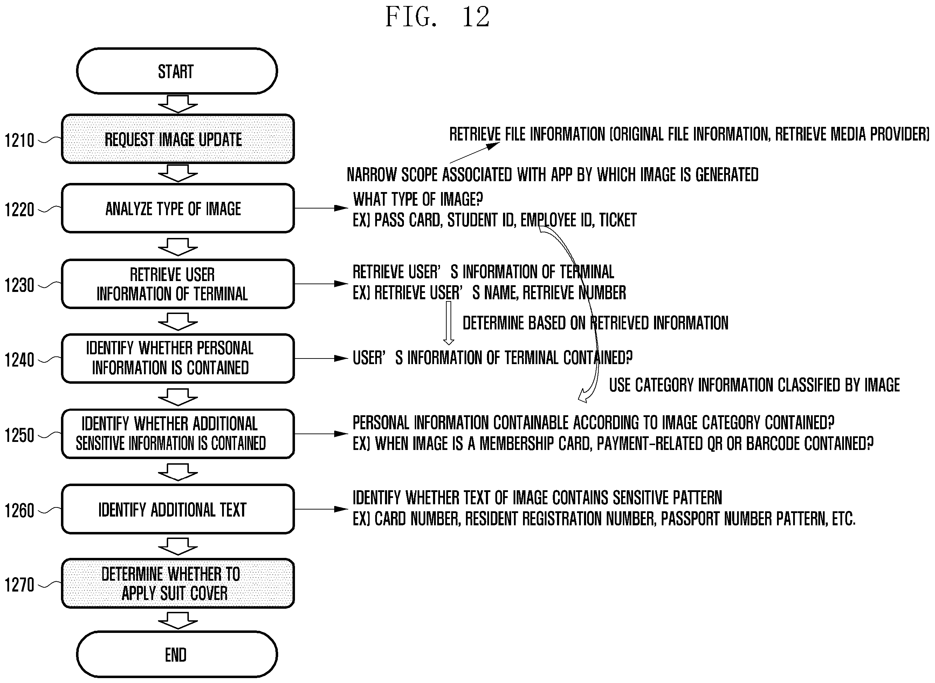

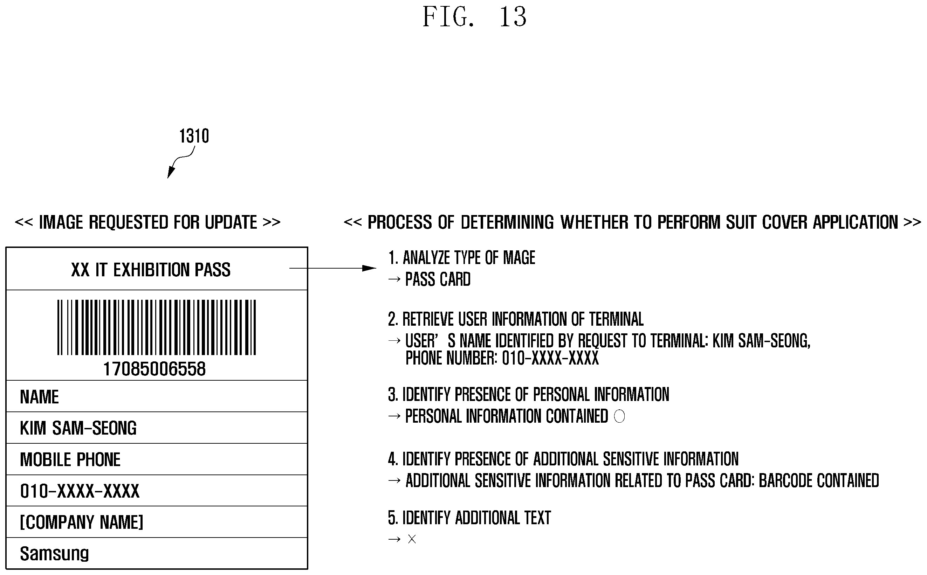

FIGS. 12 and 13 illustrate a method of updating (e.g., changing) an image displayed on a cover display (e.g., a sub-display, an external display).

Referring to FIGS. 5A, 12, and 13, in operation 1210 according to one embodiment, the electronic device 500 may receive a request to update the image 1310 displayed on the cover display 540 (e.g., a sub-display, an external display), based on a user's selection. For example, the electronic device 500 may receive a request to update the image 1310 displayed on the cover display 540 (e.g., a sub-display, an external display) according to a configured condition (e.g., a time, a location).

According to an embodiment, in operation 1210, the processor 510 may receive a request to update an image 1310 displayed on the cover display 540 (e.g., a sub-display, an external display) based on a user's selection. For example, the electronic device 500 may receive a request to update an image 1310 displayed on the cover display 540 (e.g., a sub-display, an external display) based on a set condition (e.g., a time, a location).

According to an embodiment, in operation 1220, the electronic device 500 may analyze the type of the image 1310 displayed on the cover display 540 (e.g., a sub-display, an external display). The electronic device 500 may classify the type of the image, as described in Table 1.

According to an embodiment, in operation 1220, the processor 510 may analyze the type of the image 1310 displayed on the cover display 540 (e.g., a sub-display, an external display). The electronic device 500 may classify the type of the image, as described in Table 1.

According to an embodiment, in operation 1220, the image analysis module (e.g., the image analysis module 490 of FIGS. 4 and 5B, an image analysis AI module) may analyze the type of the image 1310 displayed on the cover display 540 (e.g., a sub-display, an external display). The electronic device 500 may classify the type of the image, as described in Table 1.

According to an embodiment, in operation 1230, the electronic device 500 may retrieve user information. For example, the electronic device 500 may retrieve the user's name and phone number.

According to an embodiment, in operation 1230, the processor 510 may retrieve the user's information. For example, the processor 510 may retrieve the user's name and phone number.

According to an embodiment, in operation 1240, the electronic device 500 may determine whether the image 1310 displayed on the cover display 540 (e.g., a sub-display, an external display) contains the user's personal information.

According to an embodiment, in operation 1240, the processor 510 may determine whether the image 1310 displayed on the cover display 540 (e.g., a sub-display, an external display) contains the user's personal information.

According to an embodiment, in operation 1240, the image analysis module 490 (e.g., an image analysis AI module) may determine whether the image 1310 displayed on the cover display 540 (e.g., a sub-display, an external display) contains the user's personal information.

According to an embodiment, in operation 1250, the electronic device 500 may determine whether the image 1310 displayed on the cover display 540 (e.g., a sub-display, an external display) contains sensitive information (e.g., place information, payment-related information, QR code information for entry to and exit from a designated place) in addition to personal information.

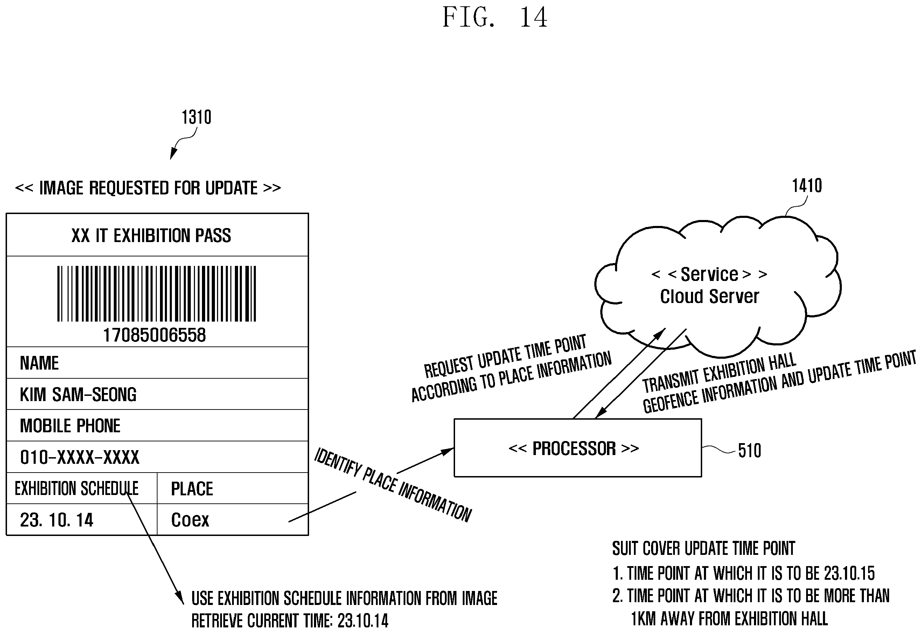

For example, the electronic device 500 may be connected to a cloud server (e.g., the cloud server 1410 of FIG. 14) and may request information (e.g., update time point information according to a place and time) required for an image update according to the location information contained in the image 1310 displayed on the cover display 540 (e.g., a sub-display, an external display). The electronic device 500 may be connected to the cloud server 1410 and may acquire information (e.g., update time point information according to a place and time) for updating (e.g., changing) the image containing sensitive information (e.g., place information, payment-related information, QR code information for entry to and exit from a designated place).

According to an embodiment, in operation 1250, the processor 510 may determine whether the image 1310 displayed on the cover display 540 (e.g., a sub-display, an external display) contains sensitive information (e.g., payment-related information, QR code information for entry to and exit from a designated place) in addition to personal information.

FIG. 14 illustrates determining an update (e.g., change) time point for an image displayed on a cover display (e.g., a sub-display, an external display).

With reference to FIG. 12, FIG. 13, and FIG. 14, according to an embodiment, the processor 510 may be connected to the cloud server 1410 and request information necessary for an image update (e.g., update time point information according to a place and time) according to location information contained in the image 1310 displayed on the cover display 540 (e.g., a sub-display, an external display). The processor 510 may be connected to the cloud server 1410 and may acquire information (e.g., update time point information according to a place and time) for updating (e.g., changing) the image containing sensitive information (e.g., place information, payment-related information, QR code information for entry to and exit from a designated place).

According to an embodiment, in operation 1250, the image analysis module 490 (e.g., an image analysis AI module) may determine whether the image 1310 displayed on the cover display 540 (e.g., a sub-display, an external display) contains sensitive information (e.g., payment-related information, QR code information for entry to and exit from a designated place) in addition to personal information.

According to an embodiment, in operation 1260, the electronic device 500 may identify text included in the image 1310 displayed on the cover display 540 (e.g., a sub-display, an external display) to determine whether the text contains personal information or sensitive information (e.g., card number, resident registration number, passport number).

According to an embodiment, in operation 1260, the processor 510 may by identify text included in the image 1310 displayed on the cover display 540 (e.g., a sub-display, an external display) to determine whether the text contains personal information or sensitive information (e.g., card number, resident registration number, passport number).

According to an embodiment, in operation 1260, the image analysis module 490 (e.g., an image analysis AI module) may identify text included in the image 1310 displayed on the cover display 540 (e.g., a sub-display, an external display) to determine whether the text contains personal information or sensitive information (e.g., card number, resident registration number, passport number).

In an embodiment, in operation 1270, when the image 1310 displayed on the cover display 540 (e.g., a sub-display, an external display) contains the user's sensitive information, personal information, and/or invalid information, the electronic device 500 may update (e.g., change) the image 1310 displayed on the cover display 540 (e.g., a sub-display, an external display) to a different image. For example, when the image 1310 displayed on the cover display 540 (e.g., a sub-display, an external display) contains the user's sensitive information, personal information, and/or invalid information, the electronic device 500 may update (e.g., change) the image 1310 displayed on the cover display 540 (e.g., a sub-display, an external display) to an image (e.g., a suit cover image) substantially identical to the outer cover (e.g., an outer cover 541 of FIG. 15 ).

In an embodiment, in operation 1270, when the image 1310 displayed on the cover display 540 (e.g., a sub-display, an external display) contains the user's sensitive information, personal information, and/or invalid information, the processor 510 may update (e.g., change) the image 1310 displayed on the cover display 540 (e.g., a sub-display, an external display) to a different image. For example, when the image 1310 displayed on the cover display 540 (e.g., a sub-display, an external display) contains the user's sensitive information, personal information, and/or invalid information, the processor 510 may update (e.g., change) the image 1310 displayed on the cover display 540 (e.g., a sub-display, an external display) to an image (e.g., a suit cover image) substantially identical to the outer cover (e.g., the outer cover 541 of FIG. 15).

In an embodiment, the memory (e.g., the memory 130 of FIG. 4) may include (e.g., store) instructions for causing the electronic device 500 to perform the operations of FIGS. 11 to 14.

In an embodiment, the memory (e.g., the memory 130 of FIG. 4) may include (e.g., store) instructions for causing the processor 510 to perform the operations of FIGS. 11 to 14.

In an embodiment, the memory (e.g., the memory 130 of FIG. 4) may include (e.g., store) instructions for causing the image analysis module 490 (e.g., an image analysis AI module) to perform the operations of FIGS. 11 to 14.

In an embodiment, at least some of the operations illustrated in FIG. 12 may be performed sequentially.

According to an embodiment, at least some of the operations illustrated in FIG. 12 may be performed in parallel (simultaneously).

FIG. 15 illustrates that update (e.g., change) time point for an image displayed on a cover display (e.g., a sub-display, an external display) occurs and the image is accordingly updated (e.g., changed).

Referring to FIG. 5A and FIG. 15, according to an embodiment, the electronic device 500 may determine whether an update time point for an image 1510 displayed on the cover display 540 (e.g., a sub-display, an external display) has occurred, based on time information included in the image 1510. When the update time point for the image 1510 displayed on the cover display 540 (e.g., a sub-display, an external display) is generated, the electronic device 500 may update (e.g., change) the image 1510 displayed on the cover display 540 (e.g., a sub-display, an external display) to a different image 1520 (e.g., a suit cover image).

According to an embodiment, the electronic device 500 may determine whether an image update time point has occurred, based on location information included in the image 1510 displayed on the cover display 540 (e.g., a sub-display, an external display). When the electronic device 500 exits a configured location, based on the location information included in the displayed image 1510, the electronic device 500 may update (e.g., change) the image 1510 displayed on the cover display 540 (e.g., a sub-display, an external display) to the different image 1520 (e.g., a suit cover image).

According to an embodiment, the electronic device 500 may determine whether an update time point for the image has occurred, based on time information and location information included in the image 1510 displayed on the cover display 540 (e.g., a sub-display, an external display). When the electronic device 500 exits from the configured location based on the time information and location information included in the displayed image 1510, the electronic device 500 may update (e.g., change) the image 1510 displayed on the cover display 540 (e.g., a sub-display, an external display) to the different image 1520 (e.g., a suit cover image).

For example, the electronic device 500 may update (e.g., change) the image 1510 displayed on the cover display 540 (e.g., a sub-display, an external display) to the image 1520 (e.g., a suit cover image) substantially identical to the outer cover 541.

For example, since the image 1520 (e.g., the suit cover image) substantially identical to the outer cover 541 is displayed on the cover display 540 (e.g., a sub-display, an external display), the cover display 540 may be viewed as a suit cover substantially identical to the outer cover 541 when viewed from the outside.

According to an embodiment, the processor 510 may determine whether an update time point for the image 1510 has occurred, based on time information included in the image 1510 displayed on the cover display 540 (e.g., a sub-display, an external display). When the update time point for the image 1510 displayed on the cover display 540 (e.g., a sub-display, an external display) occurs, the processor 510 may update (e.g., change) the image 1510 displayed on the cover display 540 (e.g., a sub-display, an external display) to the different image 1520 (e.g., a suit cover image).

According to an embodiment, the processor 510 may determine whether an image update time point has occurred, based on location information included in the image 1510 displayed on the cover display 540 (e.g., a sub-display, an external display). When the electronic device 500 exits the configured location, based on the location information included in the displayed image 1510, the processor 510 may update (e.g., change) the image 1510 displayed on the cover display 540 (e.g., a sub-display, an external display) to the different image 1520 (e.g., a suit cover image).

According to an embodiment, the processor 510 may determine whether the image update time point has occurred, based on time information and location information included in the image 1510 displayed on the cover display 540 (e.g., a sub-display, an external display). When the electronic device 500 exits the configured location based on the time information and location information included in the displayed image 1510, the processor 510 may update (e.g., change) the image 1510 displayed on the cover display 540 (e.g., a sub-display, an external display) to the different image 1520 (e.g., a suit cover image).

For example, the processor 510 may update (e.g., change) the image 1510 displayed on the cover display 540 (e.g., a sub-display, an external display) to the image 1520 (e.g., a suit cover image) substantially identical to the outer cover (e.g., the outer cover 541 of FIG. 15).

For example, since the image 1520 (e.g., a suit cover image) substantially identical to the outer cover 541 is displayed on the cover display 540 (e.g., a sub-display, an external display), the cover display 540 may be viewed as a suit cover that is substantially the same as the outer cover 541 when viewed from the outside.

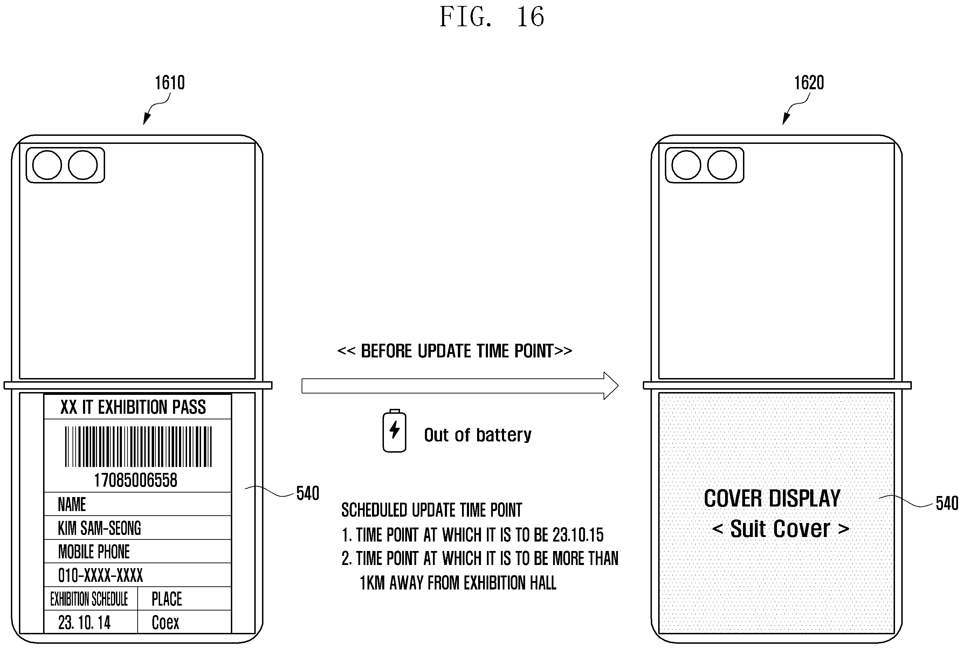

FIG. 16 illustrates that an image update (e.g., change) is performed because a battery is discharged before an update (e.g., change) time point for an image displayed on a cover display (e.g., a sub-display, an external display).

Referring to FIG. 5A and FIG. 16, according to an embodiment, the electronic device 500 may determine whether an image update time point has occurred, based on time information included in the image 1510 displayed on the cover display 540 (e.g., a sub-display, an external display). When an update time point for the image 1510 displayed on the cover display 540 (e.g., a sub-display, an external display) is not established (e.g., before the update time point), the electronic device 500 may determine whether the battery 189 is discharged or whether the remaining capacity of the battery 189 is less than or equal to a reference capacity (e.g., 10%) (battery low). Even when the update time point for the image 1510 is not established (e.g., before the update time point), the electronic device 500 may update (e.g., change) the image 1510 displayed on the cover display 540 (e.g., a sub-display, an external display) to the different image 1520 (e.g., a suit cover image) when the battery 189 is discharged or the remaining capacity of the battery 189 is less than or equal to the reference capacity (e.g., 10%) (battery low).

According to an embodiment, the processor 510 may determine whether an update time point for the image 1510 displayed on the cover display 540 (e.g., a sub-display, an external display) has occurred, based on time information included in the image 1510. When the update time point for the image 1510 displayed on the cover display 540 (e.g., a sub-display, an external display) is not established (e.g., before the update time point), the processor 510 may determine whether the battery 189 is discharged or whether the remaining capacity of the battery 189 is less than or equal to a reference capacity (e.g., 10%) (battery low). Even when the update time point of the image 1510 is not established (e.g., before the update time point), the processor 510 may update (e.g., change) the image 1510 displayed on the cover display 540 (e.g., a sub-display, an external display) to the different image 1520 (e.g., a suit cover image) when the battery 189 is discharged or the remaining capacity of the battery 189 is less than or equal to the reference capacity (e.g., 10%) (battery low).

According to an embodiment, the memory (e.g., the memory 130 of FIG. 4) may include (e.g., store) instructions for causing the electronic device 500 to perform the operations of FIGS. 15 and 16.

According to an embodiment, the memory (e.g., the memory 130 of FIG. 4) may include (e.g., store) instructions for causing the processor 510 to perform the operations of FIGS. 15 and 16.

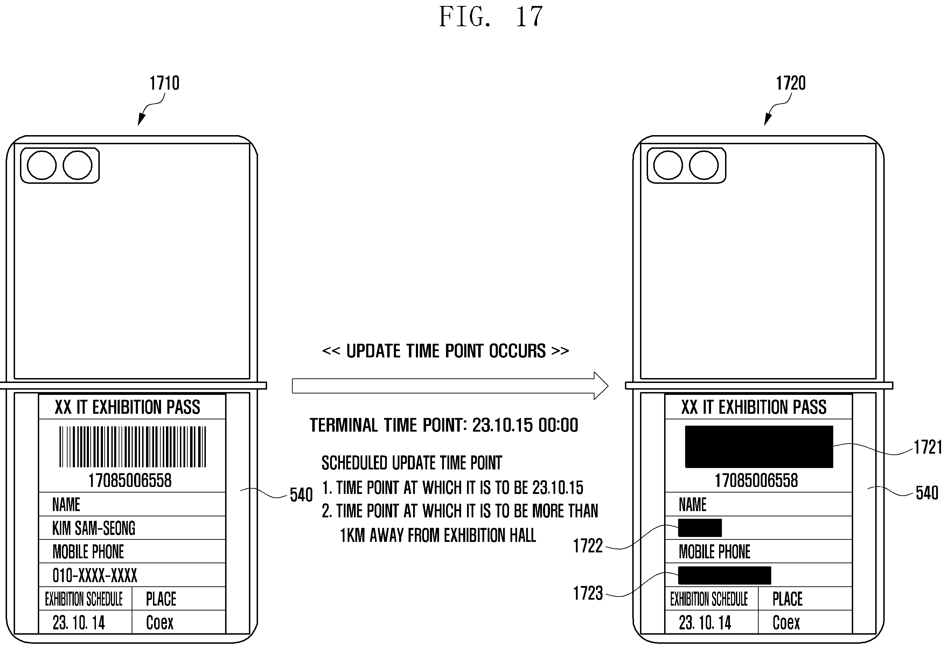

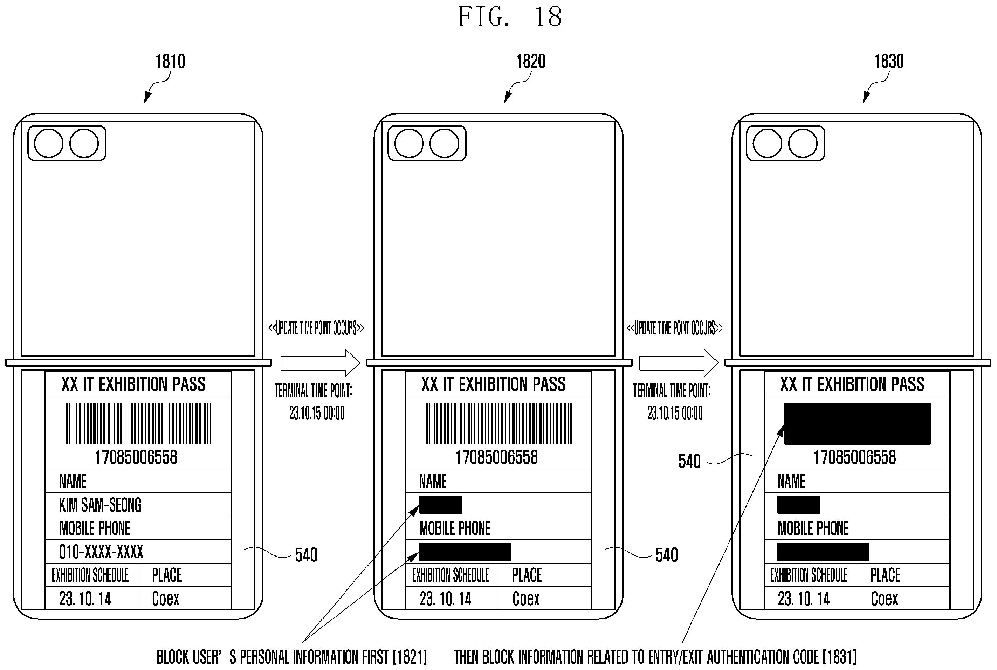

FIG. 17 and FIG. 18 illustrate that an update (e.g., change) time point for an image displayed on a cover display (e.g., a sub-display, an external display) occurs and the image is accordingly updated (e.g., changed).

Referring to FIG. 5A and FIG. 17, according to an embodiment, when an update (e.g., change) time point for an image 1710 displayed on the cover display 540 (e.g., a sub-display, an external display) occurs, the electronic device 500 may update (e.g., change) the image 1710 displayed on the cover display 540 (e.g., a sub-display, an external display) to a different image.

According to an embodiment, when an update (e.g., change) time point for the image 1710 displayed on the cover display 540 (e.g., a sub-display, an external display) occurs, the electronic device 500 may conceal (blind (e.g., block) the user's sensitive information, personal information, and/or invalid information in the image 1710 displayed on the cover display 540 (e.g., a sub-display, an external display). For example, the electronic device 500 may display a black block (or a block of a different color) to conceal the user's sensitive information, personal information, and/or invalid information contained in the image.

For example, the electronic device 500 may conceal (e.g., block) a barcode 1721 for entering a place, a user's name 1722, and/or a phone number 1723 contained in the image 1710 displayed on the cover display 540 (e.g., a sub-display, an external display). For example, the electronic device 500 may display a black block (or a block of a different color) to conceal the barcode 1721 for entering a place, the user's name 1722, and/or the phone number 1723 contained in the image.

According to an embodiment, when an update (e.g., change) time point for the image 1710 displayed on the cover display 540 (e.g., a sub-display, an external display) occurs, the processor 510 may conceal (e.g., block) the user's sensitive information, personal information, and/or invalid information in the image 1710 displayed on the cover display 540 (e.g., a sub-display, an external display). For example, the processor 510 may display a black block (or a block of a different color) to conceal the user's sensitive information, personal information, and/or invalid information contained in the image.

For example, the processor 510 may conceal (e.g., block) the barcode 1721 for entering a place, the user's name 1722, and/or the phone number 1723 contained in the image 1710 displayed on the cover display 540 (e.g., a sub-display, an external display). For example, the processor 510 may display a black block (or a block of a different color) to conceal the barcode 1721 for entering a place, the user's name 1722, and/or the phone number 1723 contained in the image.

Referring to FIG. 5A and FIG. 18, according to an embodiment, when an update (e.g., change) time point for an image 1810 displayed on the cover display 540 (e.g., a sub-display, an external display) occurs, the electronic device 500 may sequentially conceal (e.g., block) the user's sensitive information, personal information, and/or invalid information in the image 1810 displayed on the cover display 540 (e.g., a sub-display, an external display).

For example, the electronic device 500 may preferentially conceal (e.g., block) user information among pieces of information included in the image 1810 displayed on the cover display 540 (e.g., a sub-display, an external display) 1821. Through this, the electronic device 500 may update the image 1820 displayed on the cover display 540 (e.g., a sub-display, an external display).

For example, among a barcode for entering a place (e.g., the barcode 1721 of FIG. 17), a user's name (e.g., the user's name 1722 of FIG. 17), and/or a phone number (e.g., the phone number 1723 of FIG. 17) contained in the image 1810 displayed on the cover display 540 (e.g., a sub-display, an external display), the electronic device 500 may preferentially conceal (e.g., block) the user's name (e.g., the user name 1722 of FIG. 17), and/or the phone number (e.g., the phone number 1723 of FIG. 17) 1821. Thereafter, the electronic device 500 may conceal (e.g., block) the barcode 1721 for entering a place 1831. Through this, the electronic device 500 may sequentially update the image 1830 displayed on the cover display 540 (e.g., a sub-display, an external display). For example, the electronic device 500 may display a black block (or a block of a different color) to conceal the barcode 1721, the user's name 1722, and/or the phone number 1723 contained in the image.

According to an embodiment, when an update (e.g., change) time point for the image 1810 displayed on the cover display 540 (e.g., a sub-display, an external display) occurs, the processor 510 may sequentially conceal (e.g., block) the user sensitive information, personal information, and/or invalid information in the image 1810 displayed on the cover display 540 (e.g., a sub-display, an external display).

For example, the processor 510 may preferentially conceal (e.g., block) user information among pieces of information included in the image 1810 displayed on the cover display 540 (e.g., a sub-display, an external display) 1821. Through this, the processor 510 may update the image 1820 displayed on the cover display 540 (e.g., a sub-display, an external display).

For example, among a barcode for entering a place (e.g., the barcode 1721 of FIG. 17), a user's name (e.g., the user's name 1722 of FIG. 17), and/or a phone number (e.g., the phone number 1723 of FIG. 17) contained in the image 1810 displayed on the cover display 540 (e.g., a sub-display, an external display), the processor 510 may preferentially conceal (e.g., block) the user's name (e.g., the user name 1722 of FIG. 17), and/or the phone number (e.g., the phone number 1723 of FIG. 17) 1821. Thereafter, the processor 510 may conceal (e.g., blind) the barcode 1721 for entering a place 1831. Through this, the processor 510 may sequentially update the image 1830 displayed on the cover display 540 (e.g., a sub-display, an external display). For example, the processor 510 may display a black block (or a block of a different color) to conceal the barcode 1721, the user's name 1722, and/or the phone number 1723 contained in the image.

According to an embodiment, the memory (e.g., the memory 130 of FIG. 4) may include (e.g., store) instructions for causing the electronic device 500 to perform the operations of FIGS. 17 and 18.

According to an embodiment, the memory (e.g., the memory 130 of FIG. 4) may include (e.g., store) instructions for causing the processor 510 to perform the operations of FIGS. 17 and 18.

FIG. 19 illustrates the configuration of an electronic device according to an embodiment.

Referring to FIG. 19, an electronic device 1900 (e.g., the electronic device 101 of FIG. 1, the electronic device 400 of FIG. 4, the electronic device 500 of FIG. 5A) according to an embodiment of the disclosure may include the processor 510 (e.g., the processor 120 of FIG. 1, the processor 120 of FIG. 4, the processor 510 of FIG. 5A), a DDIC (e.g., the DDIC 430 of FIG. 4), the cover display 540 (e.g., a sub-display, an external display), a PMIC (1910, a power management integrated circuit), the battery 189, an auxiliary battery 1920 (e.g., an image update battery, an image update cap), and a battery switching unit 1930. For example, the DDIC 430 may include a DDIC configured to drive the flexible display 330 of FIGS. 3A and 3B and a sub-display (331, an external display) of FIG. 3C, and a cover display DDI 545 configured to drive the cover display 540 (e.g., a sub-display, an external display).

According to an embodiment, while the electronic device 500 is turned on, the battery 1920 may output a buck or boost (BOB) power (e.g., 3.4 V). The PMIC 1910 may output the buck or boost (BOB) power (e.g., 3.4 V) of the battery 189 to the battery switching unit 1930. For example, the battery switching unit 1930 may charge the auxiliary battery 1920 (e.g., an image update battery, an image update cap) with the buck or boost (BOB) power (e.g., 3.4 V) while the electronic device 500 is turned on.

For example, when the battery 1920 is discharged, the battery switching unit 1930 may switch the output path of the auxiliary battery 1920 (e.g., an image update battery, an image update cap) to the cover display driving unit (545, DDI). Power charged in the auxiliary battery 1920 (e.g., an image update battery, an image update cap) may be supplied to the cover display driving unit (545, DDI). The cover display driving unit (545, DDI) may update (e.g., change) an image displayed on the cover display 540 (e.g., a sub-display, an external display) by using the power supplied from the auxiliary battery 1920 (e.g., an image update battery, an image update cap). As described above, even when the battery 189 is completely discharged, the image displayed on the cover display 540 (e.g., a sub-display, an external display) may be updated (e.g., changed) using the power charged in the auxiliary battery 1920 (e.g., an image update battery, an image update cap).

According to an embodiment, the memory (e.g., the memory 130 of FIG. 4) may include (e.g., store) instructions for causing the electronic device 500 to perform the operations of FIG. 19.

According to an embodiment, the memory (e.g., the memory 130 of FIG. 4) may include (e.g., store) instructions for causing the processor 510 to perform the operations of FIG. 19.

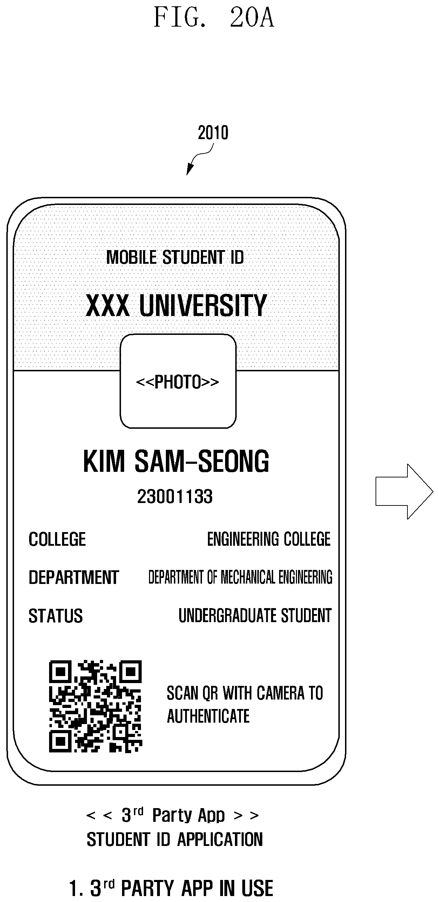

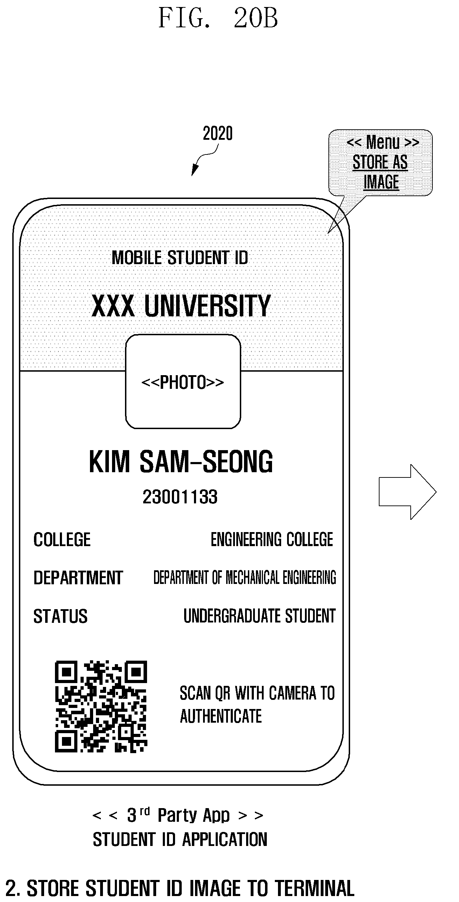

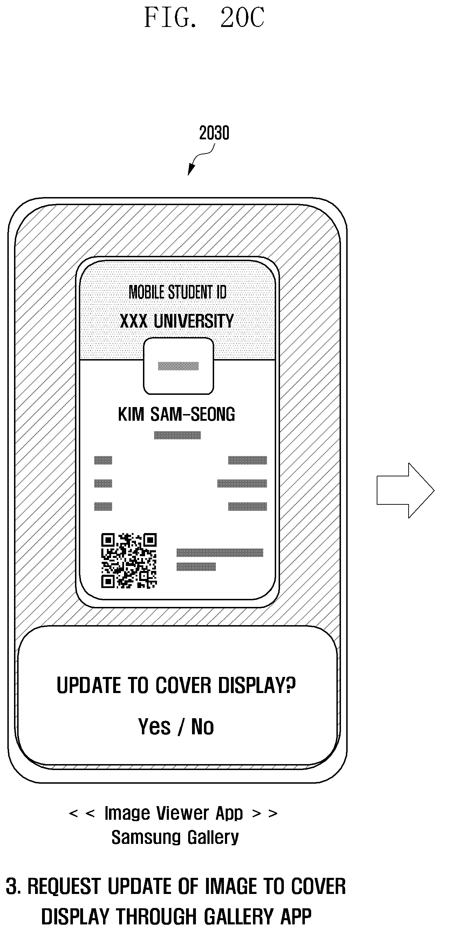

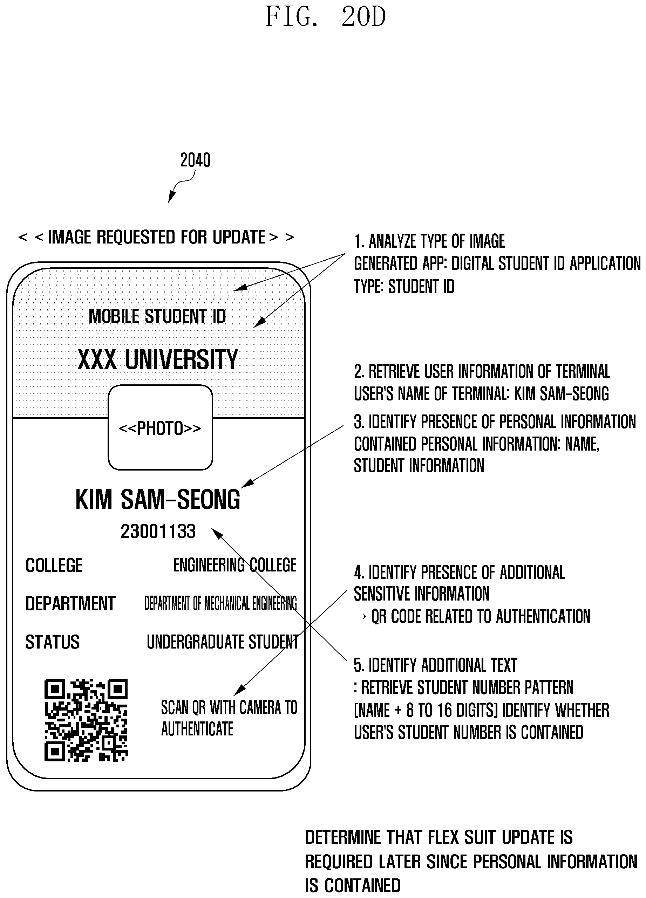

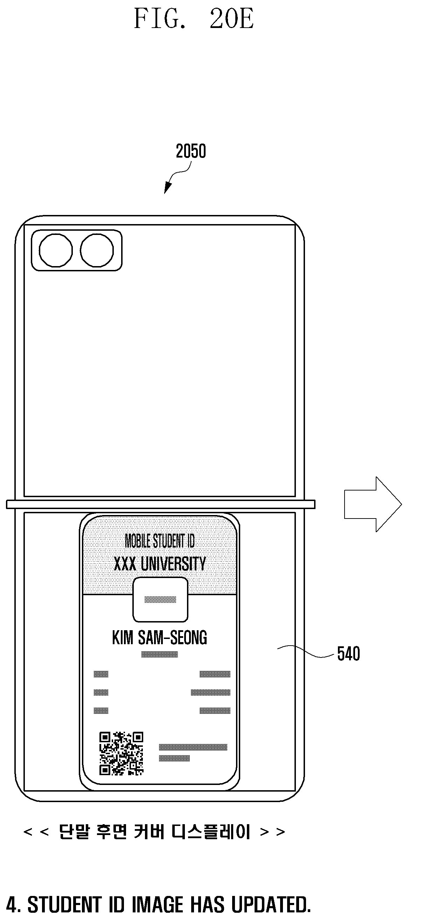

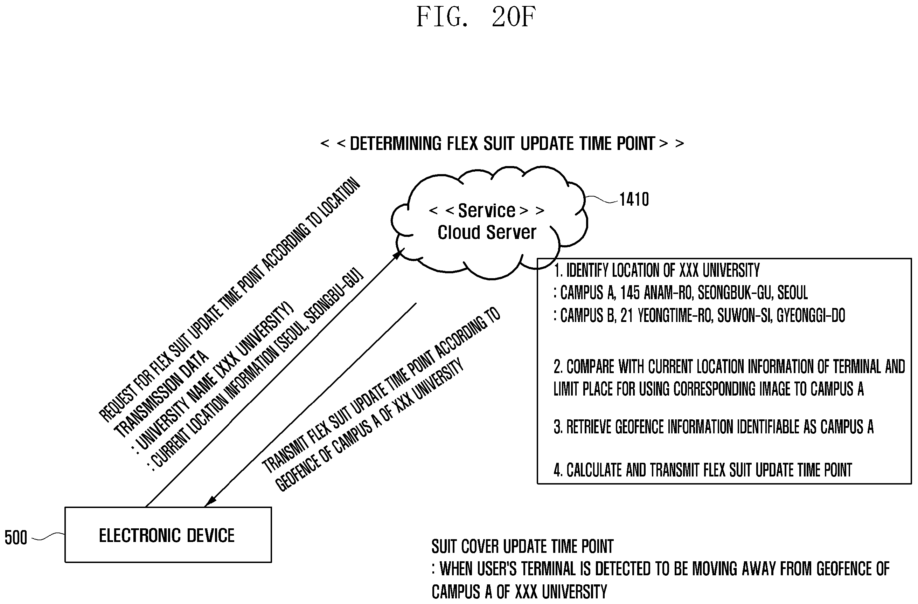

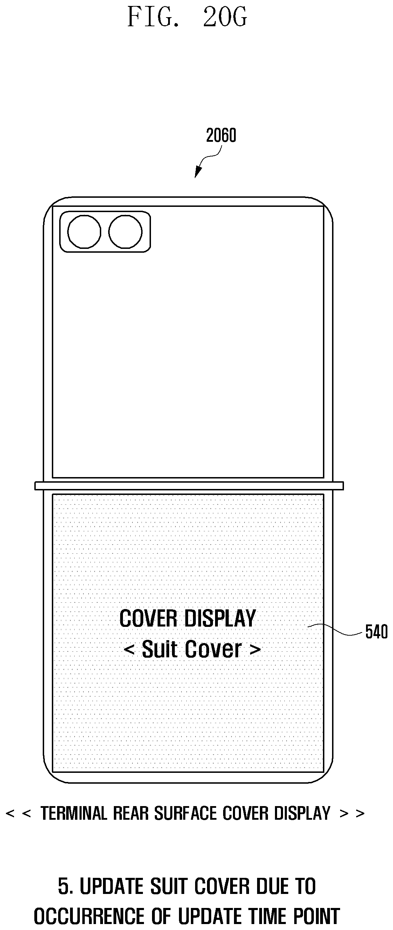

FIGS. 20A to 20G illustrate updating (e.g., changing) a student ID image displayed on a cover display (e.g., a sub-display, an external display).

Referring to FIGS. 5A, 5B, and 20A to 20G, in operation 2010 according to an embodiment, the electronic device 500 may acquire a student ID image by running an application (e.g., a gallery application).

According to an embodiment, in operation 2010, the processor 510 may acquire a student ID image by running an application (e.g., a gallery application).

According to an embodiment, in operation 2020, the electronic device 500 may display a student ID image on the cover display 540 (e.g., a sub-display, an external display). The electronic device 500 may store the student ID image in the memory (e.g., the memory 130 of FIG. 4, the internal storage 530 of FIG. 5).

According to an embodiment, in operation 2020, the processor 510 may display a student ID image on the cover display 540 (e.g., a sub-display, an external display). The processor 510 may store the student ID image in the memory (e.g., the memory 130 of FIG. 4, the internal storage 530 of FIG. 5).

According to an embodiment, at operation 2030, the electronic device 500 may display an image update menu to determine whether to display, (e.g., update), to the cover display (540, a sub-display, an external display), the student ID image acquired by running an application (e.g., a gallery application). For example, a user may request an update (e.g., change) of the student ID image to the cover display (540, a sub-display, an external display) by clicking on the image update menu.

According to an embodiment, in operation 2030, the processor 510 may display the image update menu to determine whether to display (e.g., update), to the cover display (540, a sub-display, an external display), the student ID image by acquired by running an application (e.g., a gallery application). For example, the user may request an update (e.g., change) of the student ID image to the cover display (540, a sub-display, an external display) by clicking on the image update menu.

According to an embodiment, in operation 2040, the electronic device 500 may analyze the student ID image for which an update is requested. The student ID image for which an update is requested may be analyzed by the image analysis module 490 (e.g., an image analysis AI module).

For example, the electronic device 500 may analyze the type of the student ID image for which an update is requested. For example, the electronic device 500 may retrieve user's information to acquire the user's information.

For example, the electronic device 500 may determine whether the student ID image for which an update is requested contains personal information.

For example, the electronic device 500 may determine whether the student ID image for which an update is requested contains additional sensitive information.

For example, the electronic device 500 may identify text contained in the student ID image for which an update is requested.

For example, in case that the student ID image for which an update is requested contains personal information, the electronic device 500 may determine that the student ID image requires an update (e.g., change) when the configured condition is satisfied. For example, when the student ID image for which an update is requested contains personal information, the electronic device 500 may determine that the student ID image corresponds to an image requiring an update.

According to an embodiment, in operation 2040, the processor 510 may analyze the student ID image for which an update is requested. The student ID image for which an update is requested may be analyzed using the image analysis module 490 (e.g., an image analysis AI module).

For example, the processor 510 may analyze the type of the student ID image for which an update is requested. For example, the processor 510 may retrieve user information to acquire the user information.

For example, the processor 510 may determine whether the student ID image for which an update is requested contains personal information.

For example, the processor 510 may determine whether the student ID image for which an update is requested contains additional sensitive information.

For example, the processor 510 may identify text contained in the student ID image for which an update is requested.

For example, in case that the student ID image for which an update is requested contains personal information, the processor 510 may determine that the student ID image requires an update (e.g., change) when the configured condition is satisfied. For example, if the student ID image for which an update is requested contains personal information, the processor 510 may determine that the student ID image corresponds to an image requiring an update.

According to an embodiment, in operation 2050, the electronic device 500 may update (e.g., change) an image (e.g., a student ID image) acquired from the internal storage 530 to an image for the cover display (540, a sub-display, an external display), based on a user's request.

According to an embodiment, in operation 2050, the processor 510 may update (e.g., change) an image (e.g., a student ID image) acquired from the internal storage 530 to an image for the cover display (540, a sub-display, an external display), based on a user's request.

According to an embodiment, in operation 2060, the electronic device 500 may be connected to the cloud server 1410 and may request information (e.g., update time point information according to a place and time) required for updating an image according to time information, location information, and place information related to the student ID image. The electronic device 500 may be connected to the cloud server 1410 and thus acquire information (e.g., update time point information according to a place and time) for updating (e.g., changing) an image containing sensitive information (e.g., place information, payment-related information, QR code information for entry to and exit from a designated place).

For example, when the update time point for the student ID image displayed on the cover display (540, a sub-display, an external display) occurs, the electronic device 500 may update (e.g., change) the student ID image displayed on the cover display (540, a sub-display, an external display).

According to an embodiment, in operation 2060, the processor 510 may be connected to the cloud server 1410 and may request information (e.g., update time point information according to place and time) required for updating the image according to time information, location information, and place information related to the student ID image. The processor 510 may be connected to the cloud server 1410 and thus acquire information (e.g., update time point information according to place and time) for updating (e.g., changing) an image containing sensitive information (e.g., place information, payment-related information, QR code information for entering and exiting a designated place).

For example, when the update time point for the student ID image displayed on the cover display (540, a sub-display, an external display) occurs, the processor 510 may update (e.g., change) the student ID image displayed on the cover display (540, a sub-display, an external display).

According to an embodiment, the operation of updating (e.g., changing) the student ID image to be displayed on the cover display (540, a sub-display, an external display) after the image update menu is selected by the user may be executed in the background.

According to an embodiment, the memory (e.g., the memory 130 of FIG. 4) may include (e.g., store) instructions for causing the electronic device 500 to perform the operations of FIGS. 20A to 20G.

According to an embodiment, the memory (e.g., the memory 130 of FIG. 4) may include (e.g., store) instructions for causing the processor 510 to perform the operations of FIGS. 20A to 20G.

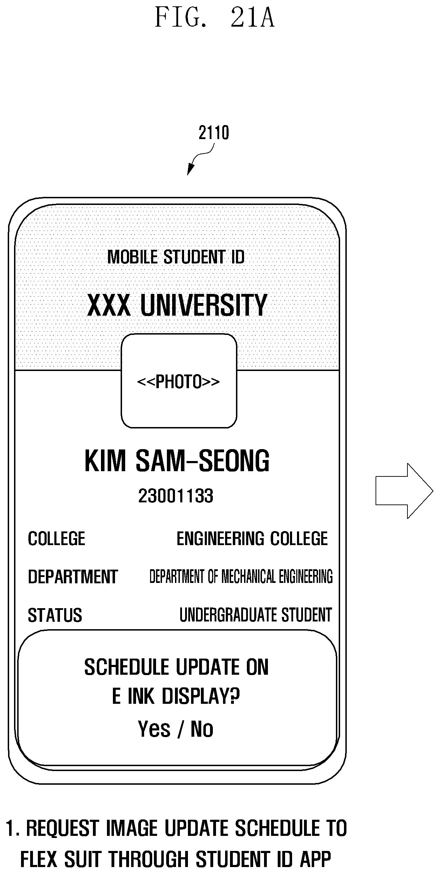

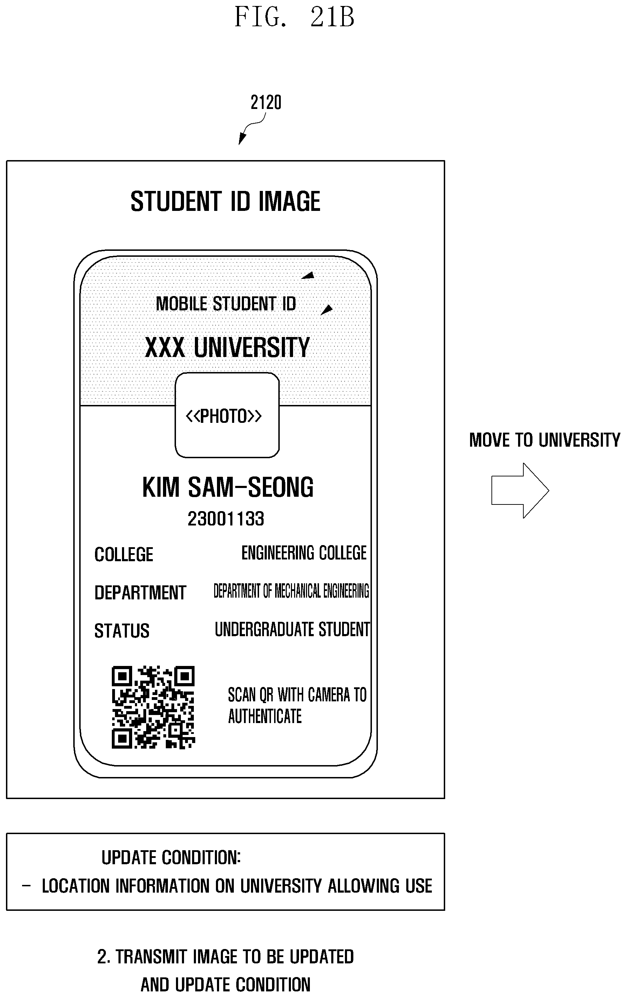

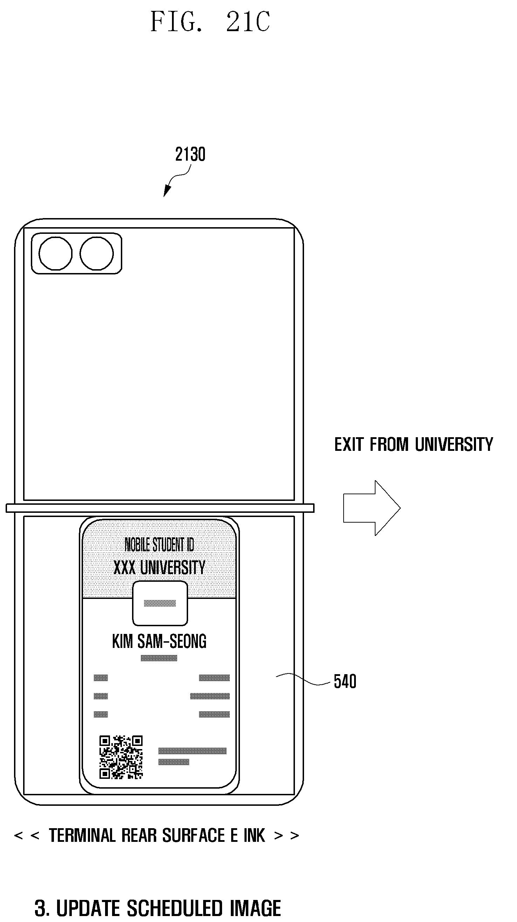

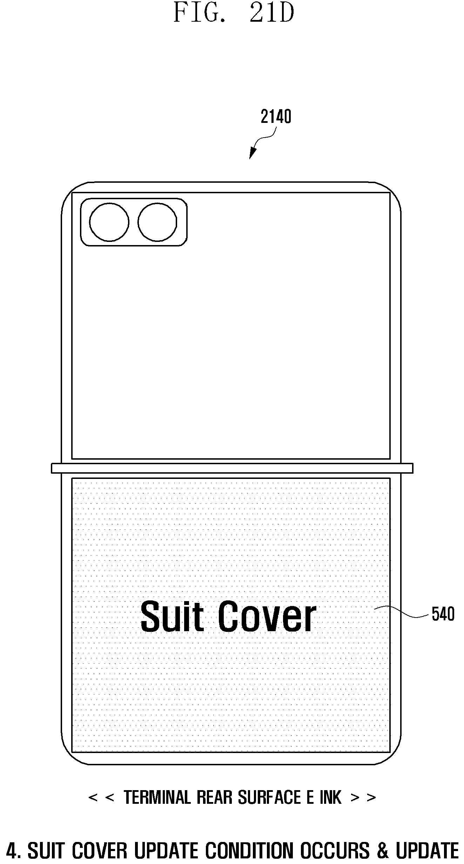

FIGS. 21A to 21D illustrate displaying a student ID image on a cover display (e.g., a sub-display, an external display) and changing the student ID image displayed on the cover display (e.g., a sub-display, an external display) to a different image, according to a condition.

Referring to FIGS. 5 and 21A to 21D, in operation 2110 according to an embodiment, the electronic device 500 may request a schedule for a student ID image by running an application (e.g., a student ID application).

According to an embodiment, in operation 2110, the processor 510 may request a schedule for a student ID image by running an application (e.g., a student ID application).

According to an embodiment, in operation 2120, the electronic device 500 may configure a student ID image to be displayed on the cover display 540 (e.g., a sub-display, an external display), and an update condition. For example, the update condition may be configured such that the student ID image is displayed on the cover display 540 (e.g., a sub-display, an external display) when the electronic device 500 enters the school.

According to an embodiment, in operation 2120, the processor 510 may configure a student ID image to be displayed on the cover display 540 (e.g., a sub-display, an external display), and an update condition. For example, the processor 510 may configure the update condition to display the student ID image on the cover display 540 (e.g., a sub-display, an external display) when the electronic device 500 enters the school.

According to an embodiment, in operation 2130, the processor 510 may display the student ID image on the cover display 540 (e.g., a sub-display, an external display) when the electronic device 500 enters the school.

According to an embodiment, in operation 2130, the processor 510 may display the student ID image on the cover display 540 (e.g., a sub-display, an external display) when the electronic device 500 enters the school.

According to an embodiment, in operation 2140, the electronic device 500 may replace and update (e.g., change) the image (e.g., the student ID image) displayed on the cover display (540, a sub-display, an external display) with a different image when the electronic device 500 exits the school.

According to an embodiment, in operation 2140, the processor 510 may update (e.g., change) the image (e.g., the student ID image) displayed on the cover display (540, a sub-display, an external display) to a different image when the electronic device 500 exits the school.

For example, according to the update schedule for the student ID image, geofence information and location information regarding the availability of the student ID may be acquired with respect to the update condition.

When a user moves to the school and thus the location of the electronic device 500 is determined to be inside the school, the scheduled student ID image may be updated (e.g., the student ID image may be displayed on the cover display 540). Thereafter, when the user moves and thus the location of the electronic device 500 is determined to be outside the school, the student ID image displayed on the cover display 540 may be changed to a different image (e.g., a suit cover).

According to an embodiment, the operation of displaying the student ID image on the cover display (540, a sub-display, an external display) may be executed in the background.

According to an embodiment, the operation of updating (e.g., changing) the student ID image to be displayed on the cover display (540, a sub-display, an external display) to a different image may be executed in the background.

According to an embodiment, the memory (e.g., the memory 130 of FIG. 4) may include (e.g., store) instructions for causing the electronic device 500 to perform the operations of FIGS. 21A to 21D.

According to an embodiment, the memory (e.g., the memory 130 of FIG. 4) may include (e.g., store) instructions for causing the processor 510 to perform the operations of FIGS. 21A to 21D.

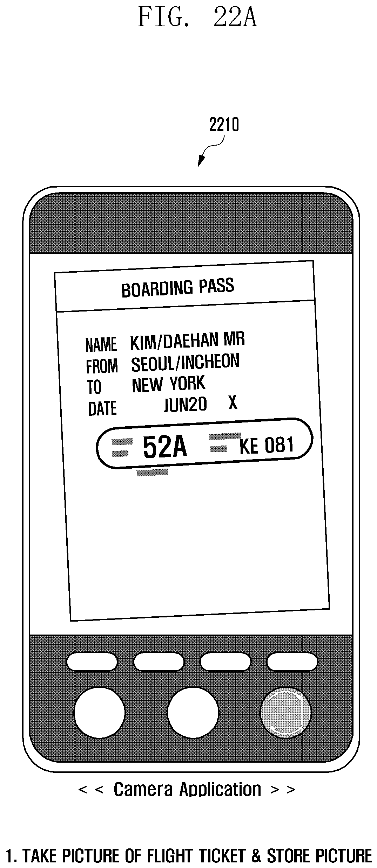

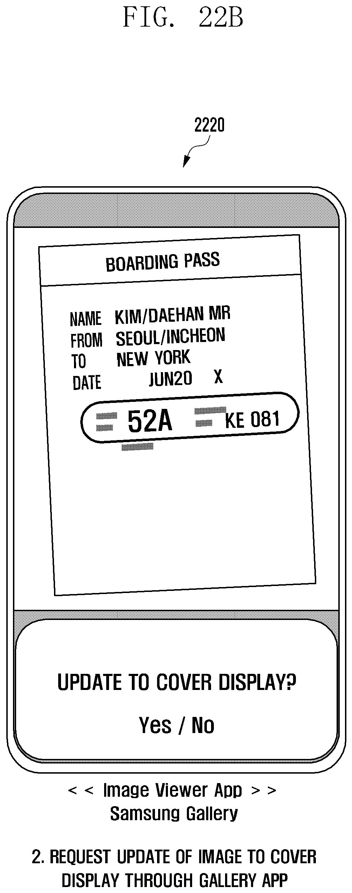

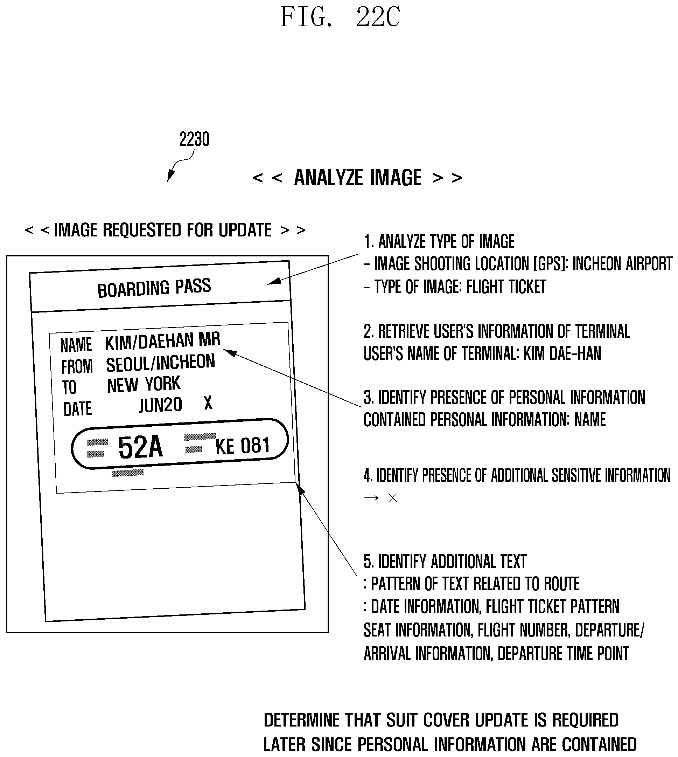

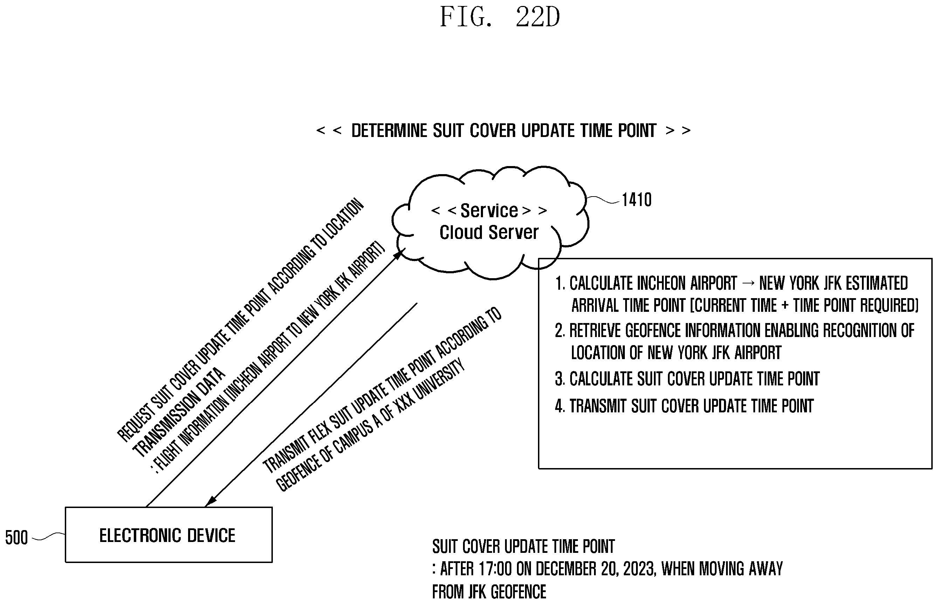

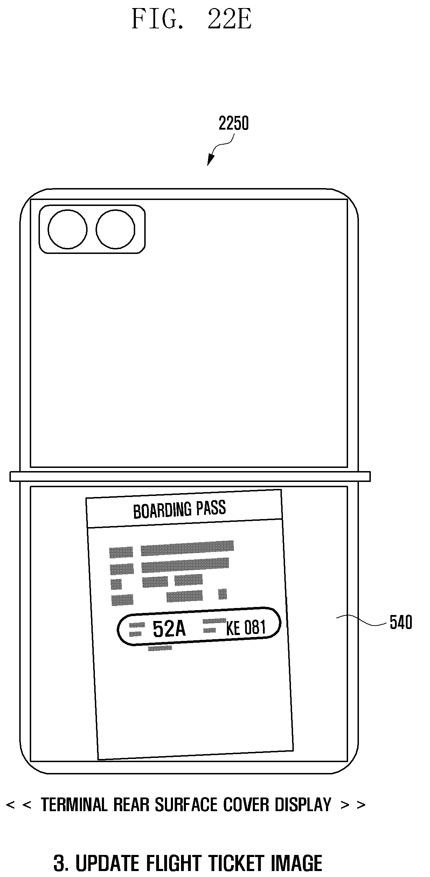

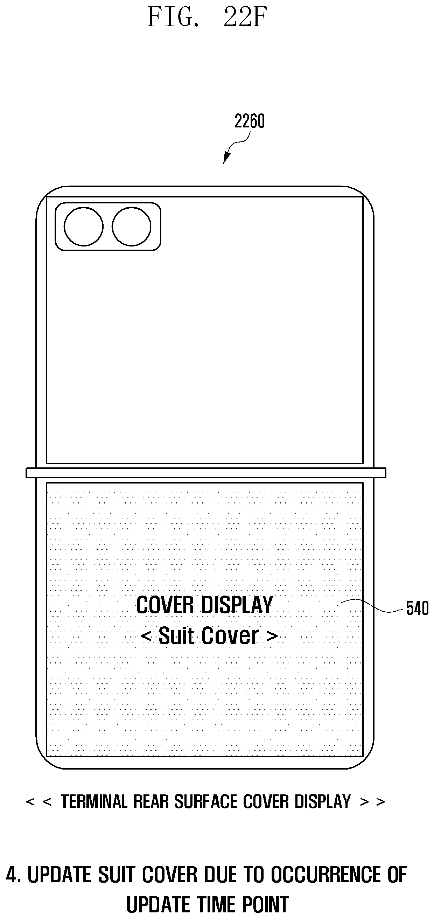

FIGS. 22A to 22F illustrate updating (e.g., changing) a flight ticket image to be displayed on a cover display (e.g., a sub-display, an external display).

Referring to FIGS. 5A, 5B, and 22A to 22F, in operation 2210 according to an embodiment, the electronic device 500 may acquire a flight ticket image by running an application (e.g., a gallery application). For example, the flight ticket image may also be acquired by taking a picture of the flight ticket image.

According to an embodiment, in operation 2210, the processor 510 may acquire a flight ticket image by running an application (e.g., a gallery application). For example, the flight ticket image may be acquired by taking a picture of the flight ticket image.

According to an embodiment, in operation 2220, the electronic device 500 may display an image update menu for identifying whether to display (e.g., update), on the cover display (540, a sub-display, an external display), the flight ticket image acquired by running the application (e.g., a gallery application). For example, a user may request an update (e.g., change) of the flight ticket image to the cover display (540, a sub-display, an external display) by clicking on the image update menu.

In an embodiment, at operation 2220, the processor 510 may display an image update menu for identifying whether to display (e.g., update), on the cover display (540, a sub-display, an external display), the flight ticket image acquired by running an application (e.g., a gallery application). For example, a user may request an update (e.g., change) of the flight ticket image to the cover display (540, a sub-display, an external display) by clicking on the image update menu.

According to an embodiment, in operation 2230, the electronic device 500 may analyze the flight ticket image for which an update is requested. The flight ticket image for which an update is requested may be analyzed using the image analysis module 490 (e.g., an image analysis AI module).

For example, the electronic device 500 may analyze the type of the flight ticket image for which an update is requested. For example, the electronic device 500 may acquire user information by retrieving user's information.

For example, the electronic device 500 may determine whether the flight ticket image for which an update is requested contains personal information.

For example, the electronic device 500 may determine whether the flight ticket image for which an update is requested contains additional sensitive information.

For example, the electronic device 500 may identify text contained in the flight ticket image for which an update is requested.

For example, in case that the flight ticket image for which an update is requested contains personal information, the electronic device 500 may determine that the flight ticket image requires an update (e.g., a change) when the configured condition is satisfied. For example, when the flight ticket image for which an update is requested contains personal information, the electronic device 500 may determine that the flight ticket image corresponds to an image requiring an update.

According to an embodiment, in operation 2230, the processor 510 may analyze the flight ticket image for which an update is requested. The flight ticket image for which an update is requested may be analyzed using the image analysis module 490 (e.g., an image analysis AI module).

For example, the processor 510 may analyze the type of the flight ticket image for which an update is requested. For example, the processor 510 may acquire user information by retrieving user's information.

For example, the processor 510 may determine whether the flight ticket image for which an update is requested contains personal information.

For example, the processor 510 may determine whether the flight ticket image for which an update is requested contains additional sensitive information.

For example, the processor 510 may identify text contained in the flight ticket image for which an update is requested.

For example, in case that the flight ticket image for which an update is requested contains personal information, the processor 510 may determine that the flight ticket image requires an update (e.g., change) when the configured condition is satisfied. For example, when the flight ticket image for which an update is requested contains personal information, the processor 510 may determine that the flight ticket image corresponds to an image requiring an update.

According to an embodiment, the electronic device 500 may be connected to the cloud server 1410 and may request information (e.g., update time point information according to a place and time) required for updating an image according to time information, location information, and place information related to the flight ticket image. The electronic device 500 may be connected to the cloud server 1410 and may acquire information (e.g., update time point information according to a place and time) for updating (e.g., changing) an image containing sensitive information (e.g., place information, payment-related information, QR code information for entry to and exit from a designated place).

According to an embodiment, in operation 2250, the electronic device 500 may update (e.g., change) the image of the flight ticket to an image for the cover display (540, a sub-display, an external display), based on a user's request.

According to an embodiment, the processor 510 may be connected to the cloud server 1410 and may request information (e.g., update time point information according to a place and time) required for updating the image, based on time information, location information, and place information related to the flight ticket image. The processor 510 may be connected to the cloud server 1410 and may acquire information (e.g., update time point information according to a place and time) for updating (e.g., changing) an image containing sensitive information (e.g., place information, payment-related information, QR code information for entry to and exit from a designated place).

According to an embodiment, in operation 2250, the processor 510 may update (e.g., change) the flight ticket image to an image for the cover display (540, a sub-display, an external display), based on a user's request.

According to an embodiment, in operation 2160, when an update time point for the flight ticket image displayed on the cover display (540, a sub-display, an external display) occurs, the electronic device 500 may update (e.g., change) the flight ticket image displayed on the cover display (540, a sub-display, an external display).

According to one embodiment, in operation 2160, when an update time point for the flight ticket image displayed on the display (540, a sub-display, an external display) occurs, the processor 510 may update (e.g., change) the flight ticket image displayed on the cover display (540, a sub-display, an external display).

According to an embodiment, the memory (e.g., the memory 130 of FIG. 4) may include (e.g., store) instructions for causing the electronic device 500 to perform the operations of FIGS. 22A to 22F.

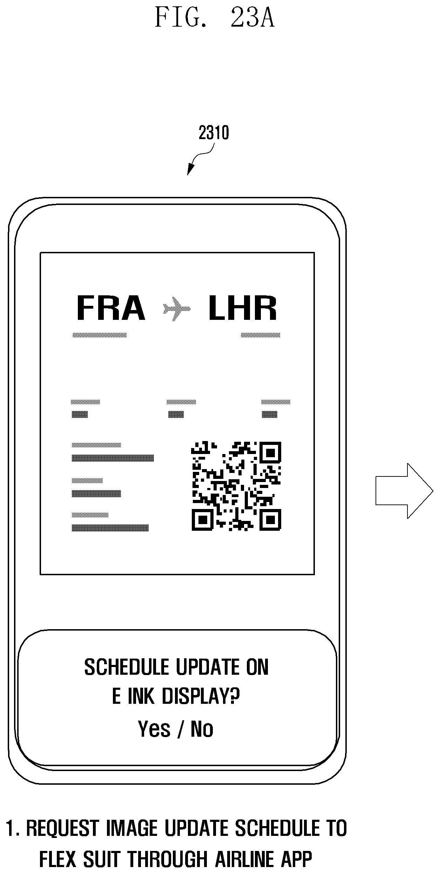

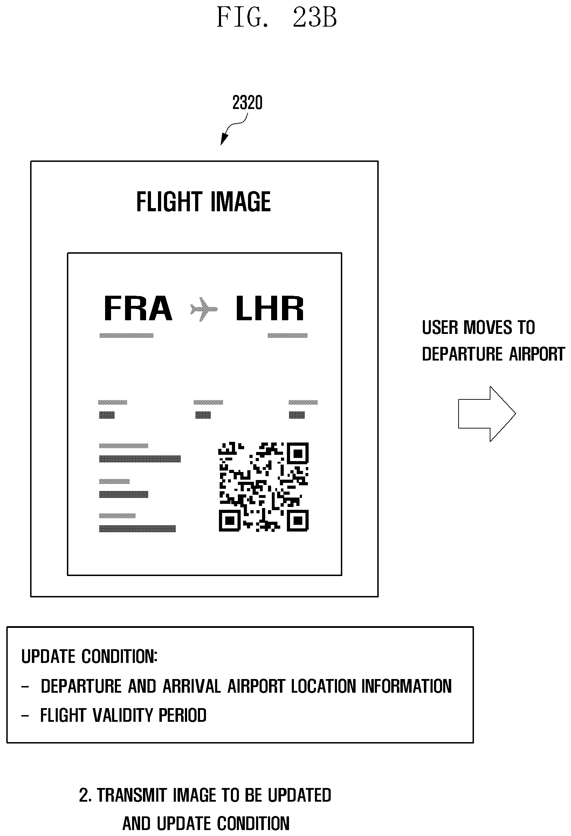

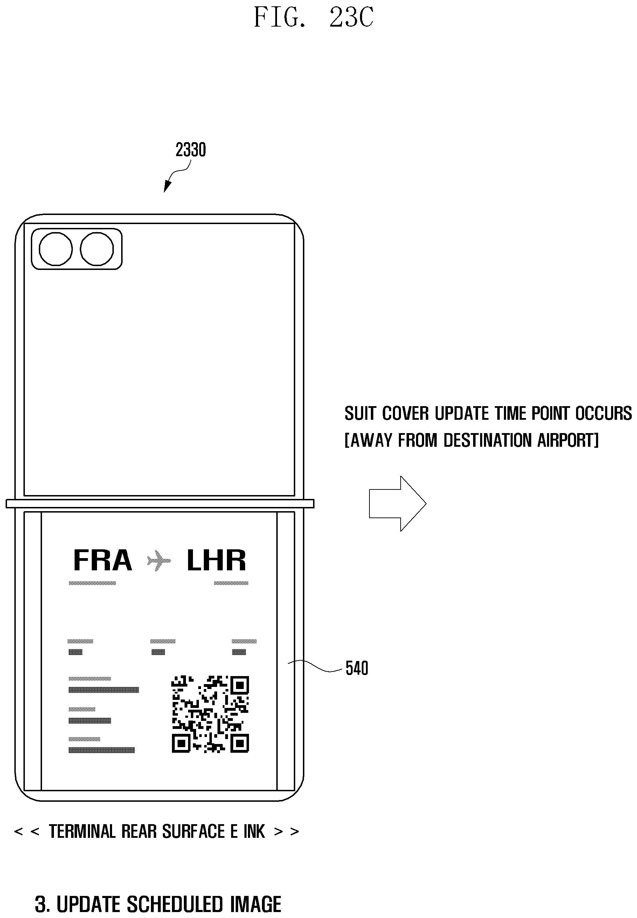

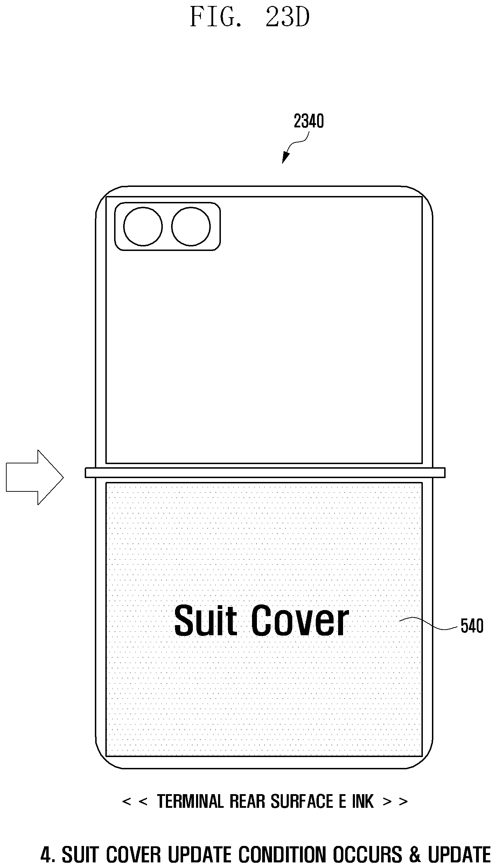

FIGS. 23A to 23D illustrate displaying a flight ticket image on a cover display (e.g., a sub-display, an external display) and changing the flight ticket image displayed on the cover display (e.g., a sub-display, an external display) to a different image, according to a condition.

Referring to FIGS. 5 and 23A to 23D, according to an embodiment, in operation 2310, the electronic device 500 may request a schedule for a flight ticket image by running an application (e.g., an airline application).

According to an embodiment, in operation 2310, the processor 510 may request a schedule for a flight ticket image by running an application (e.g., an airline application).

According to an embodiment, in operation 2320, the electronic device 500 may configure a flight ticket image to be displayed on the cover display 540 (e.g., a sub-display, an external display), and an update condition. For example, the update condition may be configured such that the flight ticket image is displayed on the cover display 540 (e.g., a sub-display, an external display) when the electronic device 500 enters the airport.

According to an embodiment, in operation 2320, the processor 510 may configure a flight ticket image to be displayed on the cover display 540 (e.g., a sub-display, an external display), and an update condition. For example, the processor 510 may configure the update condition such that the flight ticket image is displayed on the cover display 540 (e.g., a sub-display, an external display) when the electronic device 500 enters the airport.

The electronic device 500 or the processor 510 may schedule the display of a flight ticket image on the cover display 540 (e.g., a sub-display, an external display) by running an application (e.g., an airline application). In order to configure a condition for displaying the airline ticket image on the cover display 540 (e.g., a sub-display, an external display), the electronic device 500 or the processor 510 may acquire departure and destination airport location information and the validity period of the flight ticket.

According to an embodiment, in operation 2330, when the electronic device 500 enters the airport, the cover display 540 (e.g., a sub-display, an external display) may display the flight ticket image.

According to an embodiment, in operation 2330, when the electronic device 500 enters the airport, the processor 510 may display the flight ticket image on the cover display 540 (e.g., a sub-display, an external display).

When a user moves such that the electronic device 500 enters the airport, the electronic device 500 or the processor 510 may display the scheduled flight ticket image on the cover display 540 (e.g., a sub-display, an external display). According to an embodiment, in operation 2340, when the electronic device 500 exits the airport, the electronic device 500 may update (e.g., change) the image (e.g., a flight ticket image) displayed on the cover display (540, a sub-display, an external display) to a different image.

In an embodiment, in operation 2340, when the electronic device 500 exits the airport, the processor 510 may update (e.g., change) the image (e.g., a flight ticket image) displayed on the cover display (540, a sub-display, an external display) to a different image.

When the user moves such that the electronic device 500 exits the airport, the electronic device 500 or the processor 510 may change the flight ticket image displayed on the cover display 540 (e.g., a sub-display, an external display) to a different image (e.g., a suit cover).

According to an embodiment, the operation of displaying the flight ticket image on the cover display (540, a sub-display, an external display) may be executed in the background.

According to an embodiment, the operation of updating (e.g., changing) the flight ticket image displayed on the cover display (540, a sub-display, an external display) to a different image may be executed in the background.

According to an embodiment, the memory (e.g., the memory 130 of FIG. 4) may include (e.g., store) instructions for causing the electronic device 500 to perform the operations of FIGS. 23A to 23D.

According to an embodiment, the memory (e.g., the memory 130 of FIG. 4) may include (e.g., store) instructions for causing the processor 510 to perform the operations of FIGS. 23A to 23D.

According to an embodiment, the memory (e.g., the memory 130 of FIG. 4) may include (e.g., store) instructions for causing the processor 510 to perform the operations of FIGS. 23A to 23F.

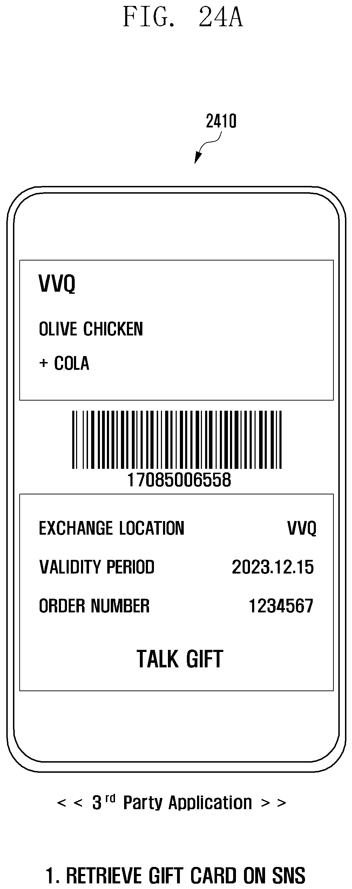

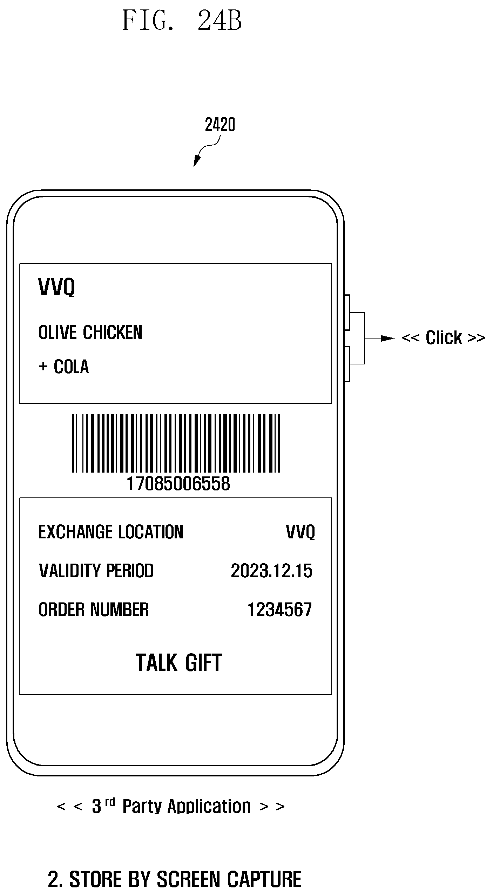

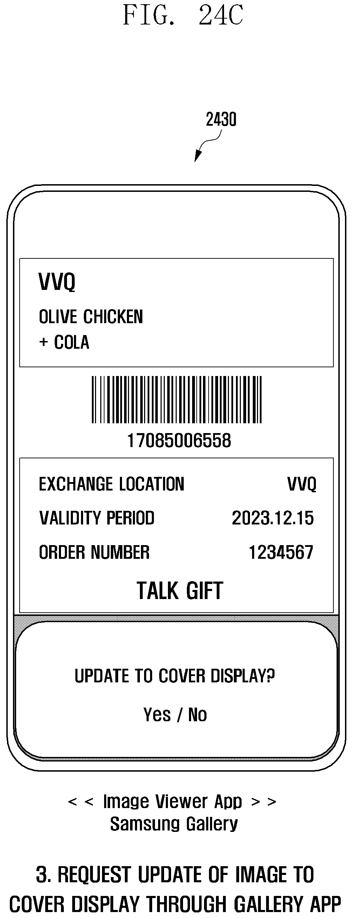

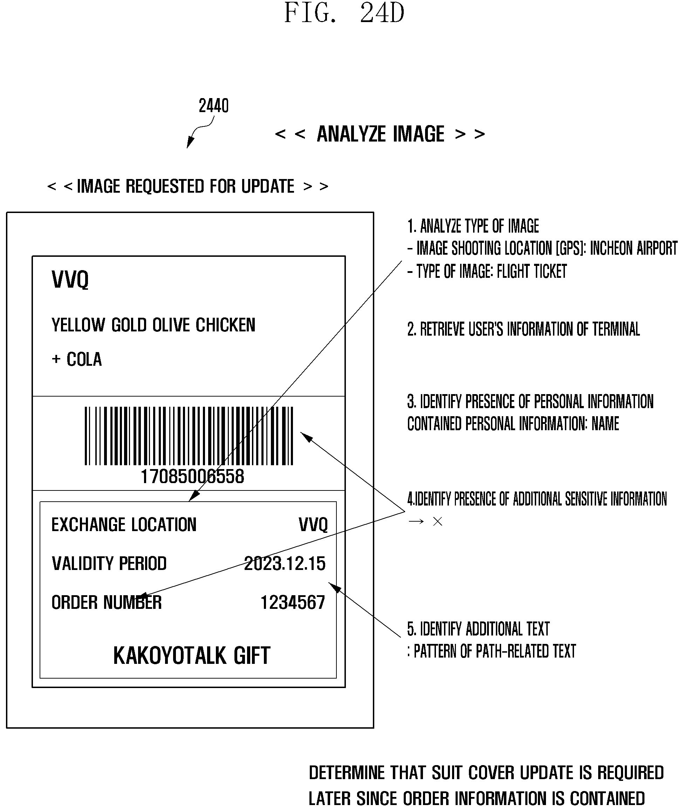

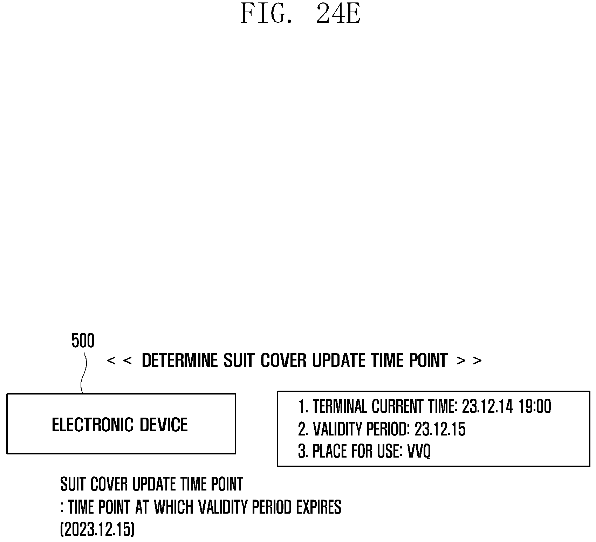

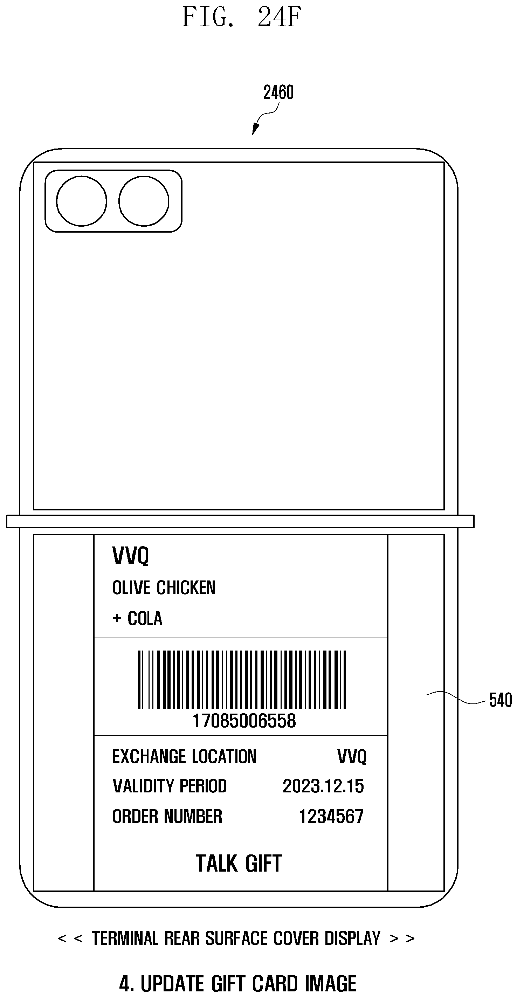

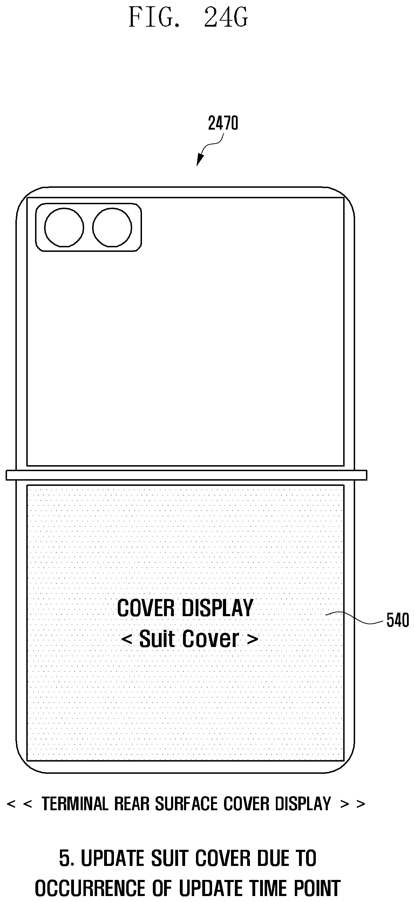

FIGS. 24A to 24G illustrate updating (e.g., changing) a gift card image displayed on a cover display (e.g., a sub-display, an external display).

Referring to FIGS. 5A, 5B, and 24A to 24G, in operation 2410 according to an embodiment, the electronic device 500 may acquire a gift card image by running an application (e.g., a gift card application). For example, the gift card image may be acquired by retrieving the gift card on SNS.

According to an embodiment, in operation 2410, the processor 510 may acquire a gift card image by running an application (e.g., a gift card application). For example, the gift card image may be acquired by retrieving the gift card on SNS.

According to an embodiment, in operation 2420, the electronic device 500 may screen capture a gift card displayed on the screen to acquire an image thereof.

According to one embodiment, in operation 2420, the processor 510 may screen capture a gift card displayed on the screen to acquire an image thereof.

According to an embodiment, in operation 2430, the electronic device 500 may display an image update menu for identifying whether to display (e.g., update) the gift card image on the cover display (540, a sub-display, an external display), by running an application (e.g., a gift card application). For example, a user may request an update (e.g., change) of the gift card image on the cover display (540, a sub-display, an external display) by clicking on the image update menu.

According to an embodiment, in operation 2430, the processor 510 may display an image update menu for identifying whether to display (e.g., update) a gift card image on the cover display (540, a sub-display, an external display), by running an application (e.g., a gift card application). For example, a user may request an update (e.g., change) of the gift card image on the cover display (540, a sub-display, an external display) by clicking on the image update menu.

According to an embodiment, in operation 2440, the electronic device 500 may analyze the gift card image for which an update is requested. The gift card image for which an update is requested may be analyzed using the image analysis module 490 (e.g., an image analysis AI module).

For example, the electronic device 500 may analyze the type of the gift card image for which an update is requested. For example, the electronic device 500 may acquire user information by retrieving user's information.

For example, the electronic device 500 may determine whether the gift card image for which an update is requested contains personal information.

For example, the electronic device 500 may determine whether the gift card image for which an update is requested contains additional sensitive information.

For example, the electronic device 500 may identify text contained in the gift card image for which an update is requested.

For example, in case that the gift card image for which an update is requested contains personal information, the electronic device 500 may determine that the gift card image requires an update (e.g., change) when the configured condition is satisfied. For example, when the gift card image for which an update is requested contains personal information, the electronic device 500 may determine that the gift card image corresponds to an image requiring an update.

According to an embodiment, in operation 2440, the processor 510 may analyze the gift card image for which an update is requested. The gift card image for which an update is requested may be analyzed using the image analysis module 490 (e.g., an image analysis AI module).

For example, the processor 510 may analyze the type of the gift card image for which an update is requested. For example, the processor 510 may acquire user information by retrieving user's information.

For example, the processor 510 may determine whether the gift card image for which an update is requested contains personal information.

For example, the processor 510 may determine whether the gift card image for which an update is requested contains additional sensitive information.

For example, the processor 510 may identify text contained in the gift card image for which an update is requested.

For example, in case that the gift card image for which an update is requested contains personal information, the processor 510 may determine that the gift card image requires an update (e.g., change) when the configured condition is satisfied. For example, when the gift card image for which an update is requested contains personal information, the processor 510 may determine that the gift card image corresponds to an image requiring an update.

According to an embodiment, in operation 2460, the electronic device 500 may update (e.g., change) the gift card image to an image for the cover display (540, a sub-display, an external display) based on a user's request.

According to an embodiment, in operation 2460, the processor 510 may update (e.g., change) the gift card image to an image for the cover display (540, a sub-display, an external display) based on a user's request.

According to an embodiment, the electronic device 500 may be connected to the cloud server 1410 and may request information (e.g., update time point information according to a place and time) required for updating the image according to time information, location information, and place information related to the gift card image. The electronic device 500 may be connected to the cloud server 1410 and may acquire information (e.g., update time point information according to a place and time) for updating (e.g., changing) an image containing sensitive information (e.g., place information, payment-related information, QR code information for entering and exiting a designated place).

According to an embodiment, the processor 510 may be connected to the cloud server 1410 and may request information (e.g., update time point information according to a place and time) required for updating an image according to time information, location information, and place information related to a gift card image. The processor 510 may be connected to the cloud server 1410 and may acquire information (e.g., update time point information according to a place and time) for updating (e.g., changing) an image containing sensitive information (e.g., place information, payment-related information, QR code information for entry to and exit from a designated place).

According to an embodiment, in operation 2470, when an update time point for the gift card image displayed on the cover display (540, a sub-display, an external display) occurs (e.g., battery discharge), the electronic device 500 may update (e.g., change) the gift card image displayed on the cover display (540, a sub-display, an external display).

According to an embodiment, in operation 2470, when an update time point for the gift card image displayed on the display (540, a sub-display, an external display) occurs (e.g., battery discharge), the processor 510 may update (e.g., change) the gift card image displayed on the cover display (540, a sub-display, an external display).

According to an embodiment, the memory (e.g., the memory 130 of FIG. 4) may include (e.g., store) instructions for causing the electronic device 500 to perform the operations of FIGS. 24A to 24G.

According to an embodiment, the memory (e.g., the memory 130 of FIG. 4) may include (e.g., store) instructions for causing the processor 510 to perform the operations of FIGS. 24A to 24G.

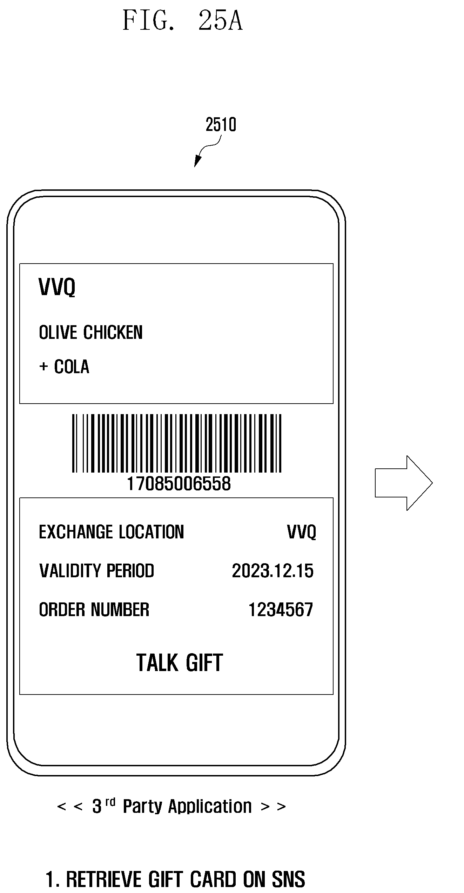

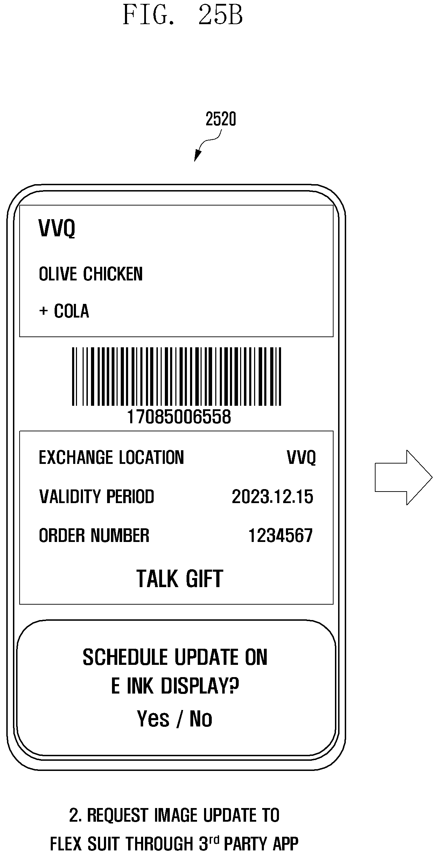

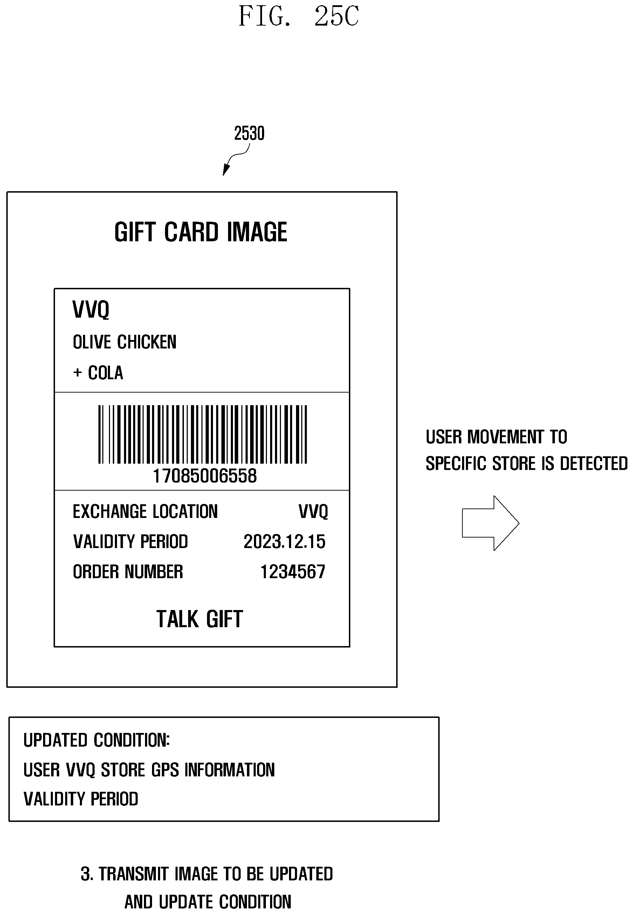

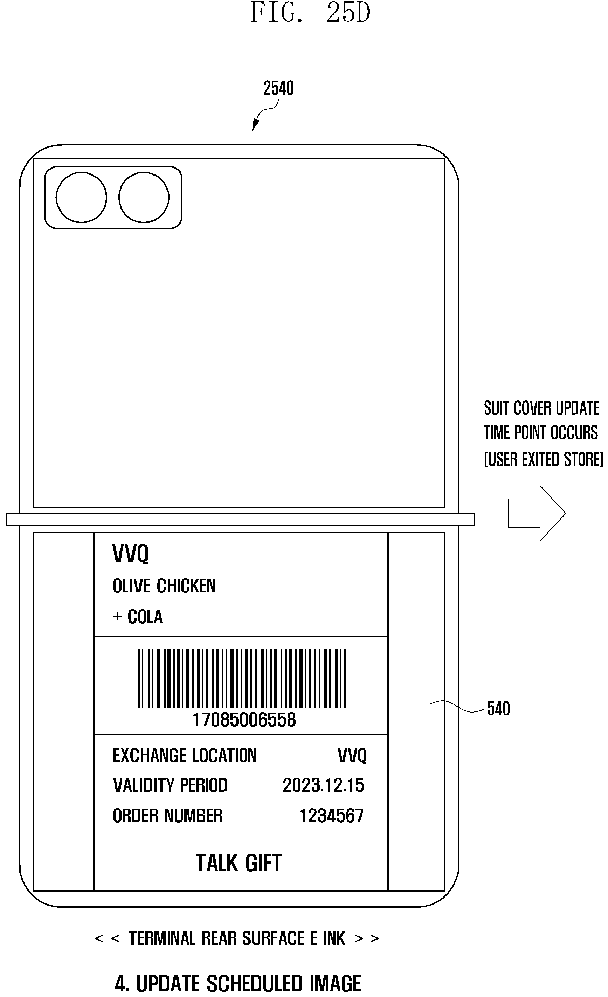

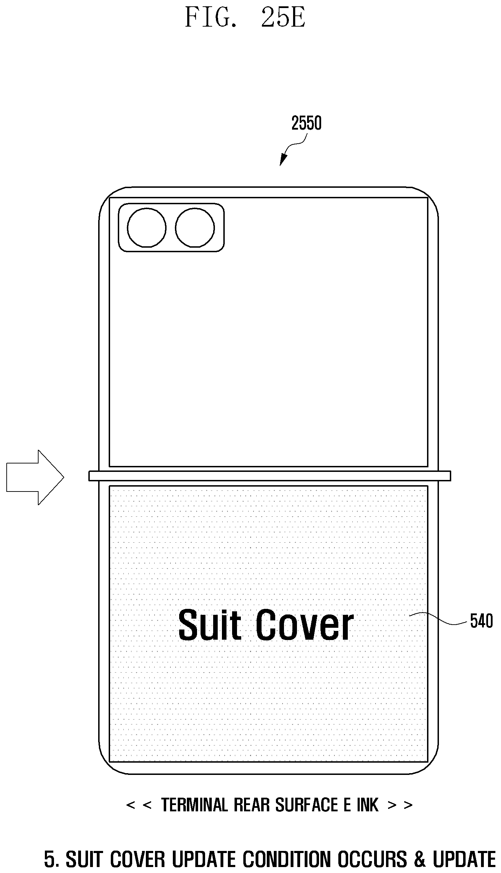

FIGS. 25A to 25E illustrate displaying a gift card image on a cover display (e.g., a sub-display, an external display) and changing the gift card image displayed on the cover display (e.g., a sub-display, an external display) to a different image according to a condition.

Referring to FIG. 5 and FIG. 25A to FIG. 25E, in operation 2510 according to an embodiment, the electronic device 500 may request a schedule for a gift card image by running an application (e.g., a gift card application).

According to an embodiment, in operation 2510, the processor 510 may request a schedule for a gift card image by running an application (e.g., a gift card application).

According to an embodiment, in operation 2520, the electronic device 500 may configure a gift card image to be displayed on the cover display 540 (e.g., a sub-display, an external display), and an update condition. For example, the update condition may be configured such that the gift card image is displayed on the cover display 540 (e.g., a sub-display, an external display) when the electronic device 500 enters the store.

According to an embodiment, in operation 2520, the processor 510 may configure a gift card image to be displayed on the cover display 540 (e.g., a sub-display, an external display), and an update condition. For example, the processor 510 may configure an update condition such that the gift card image is displayed on the cover display 540 (e.g., a sub-display, an external display) when the electronic device 500 enters the store.

The electronic device 500 or the processor 510 may schedule the display of the gift card image on the cover display 540 (e.g., a sub-display, an external display) by running an application (e.g., a gift card application).

For example, the electronic device 500 or the processor 510 may acquire the gift card image through the application (e.g., a gift card application).

For example, the electronic device 500 or the processor 510 may acquire the gift card image through another application (e.g., a messenger application).

For example, in order to configure a condition for displaying a gift card image on the cover display 540 (e.g., a sub-display, an external display), the electronic device 500 or the processor 510 may acquire information on the type, amount, product, location of available stores, and validity period which are related to the gift card.

According to an embodiment, in operation 2530, when the electronic device 500 enters the store, the electronic device 500 may display the gift card image on the cover display 540 (e.g., a sub-display, an external display).

According to an embodiment, in operation 2530, when the electronic device 500 enters the store, the processor 510 may display the gift card image on the cover display 540 (e.g., a sub-display, an external display).

According to an embodiment, in operation 2540, when the electronic device 500 exits the store, the electronic device 500 may update (e.g., change) the image (e.g., gift card image) displayed on the cover display (540, a sub-display, an external display) to a different image.

According to an embodiment, in operation 2540, when the electronic device 500 exits the store, the processor 510 may update (e.g., change) the image (e.g., gift card image) displayed on the cover display (540, a sub-display, an external display) to a different image.

According to an embodiment, when the validity period for using a gift certificate expired, the electronic device 500 or the processor 510 may update (e.g., change) the image (e.g., gift card image) displayed on the cover display (540, a sub-display, an external display) to a different image.

According to an embodiment, the operation of displaying a gift card image on the cover display (540, a sub-display, an external display) may be executed in the background.

According to an embodiment, the operation of updating (e.g., changing) the gift card image displayed on the cover display (540, a sub-display, an external display) to a different image may be executed in the background.

According to an embodiment, the memory (e.g., the memory 130 of FIG. 4) may include (e.g., store) instructions for causing the electronic device 500 to perform the operations of FIGS. 25A to 25E.

According to an embodiment, the memory (e.g., the memory 130 of FIG. 4) may include (e.g., store) instructions for causing the processor 510 to perform the operations of FIGS. 25A to 25E.

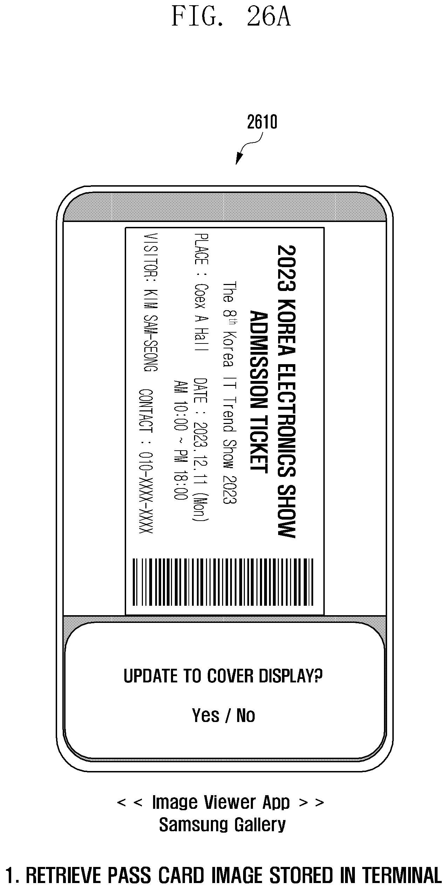

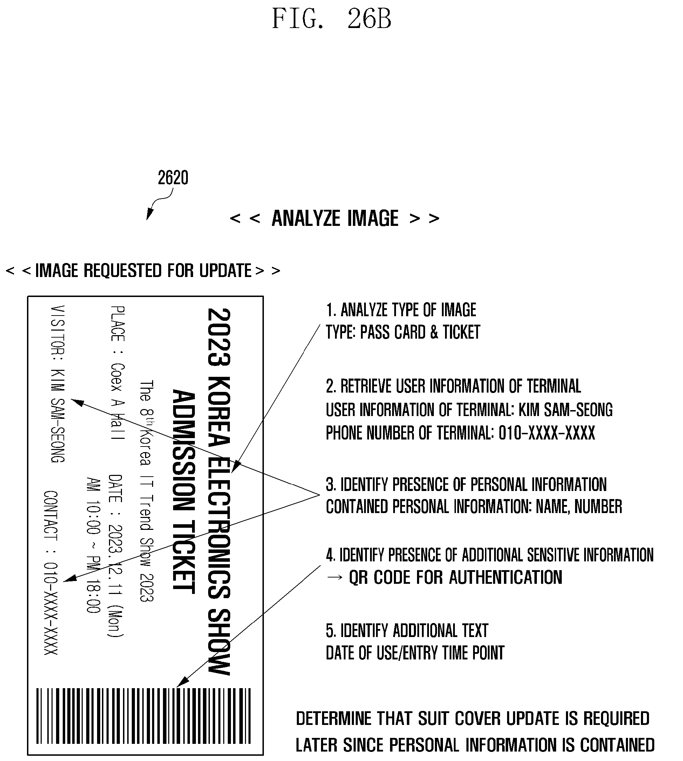

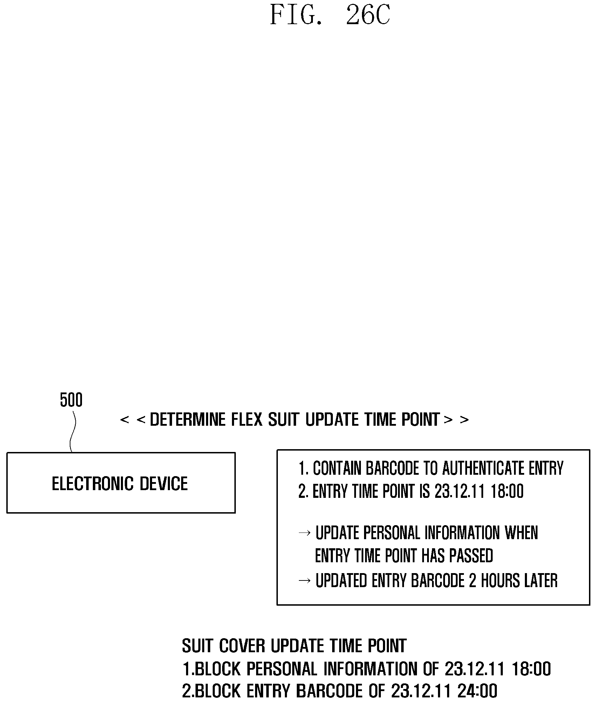

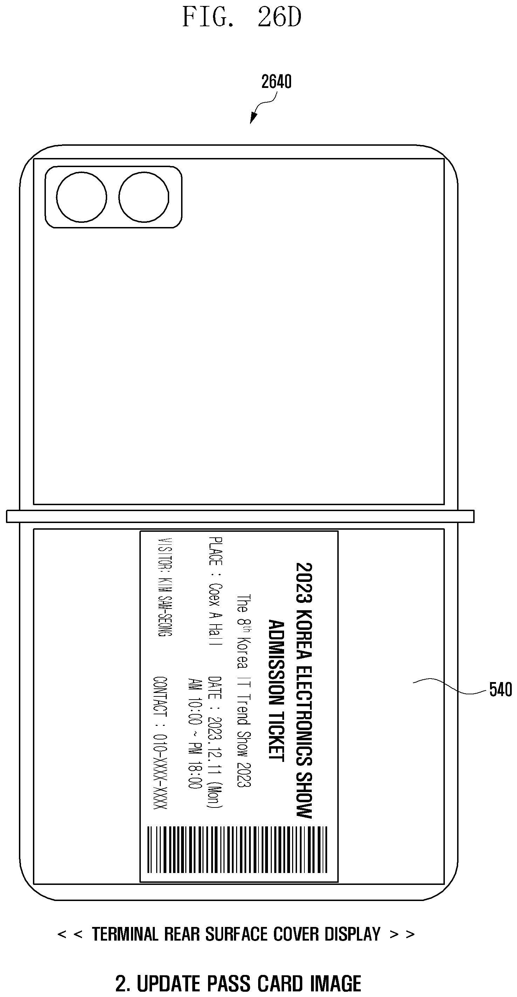

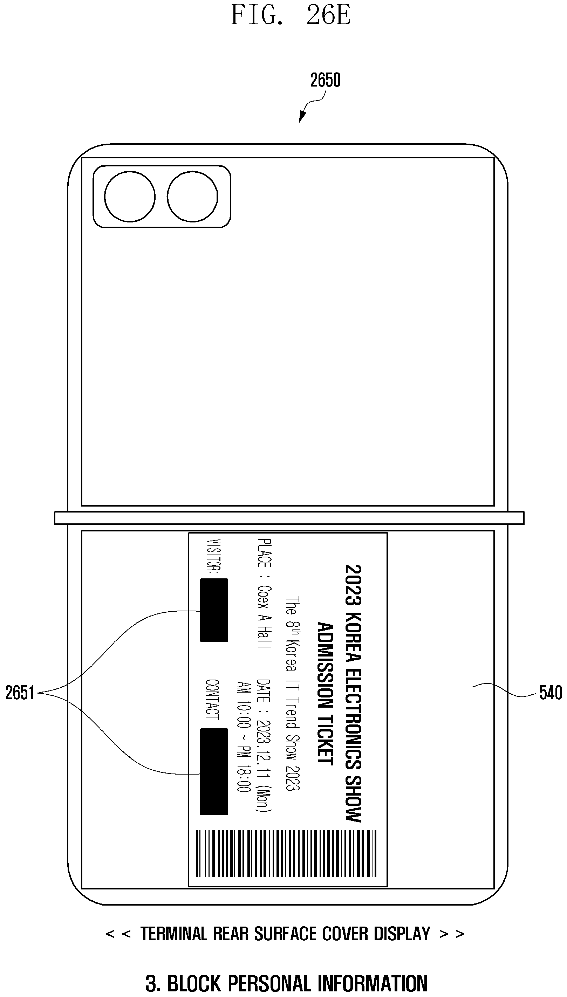

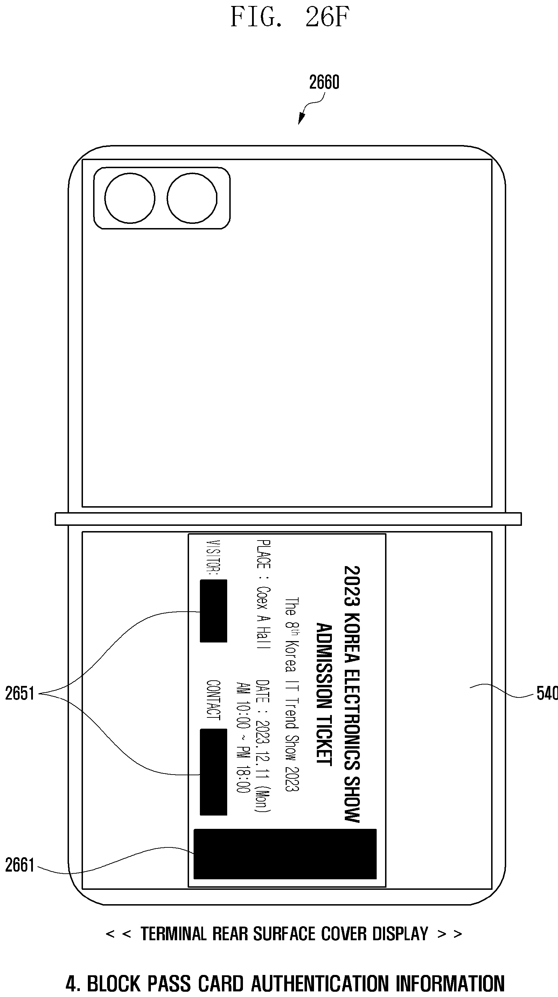

FIGS. 26A to 26F illustrate updating (e.g., changing) an exhibition pass image displayed on a cover display (e.g., a sub-display, an external display).

Referring to FIGS. 5A, 5B, and 26A to 26F, in operation 2610 according to an embodiment, the electronic device 500 may acquire an exhibition pass image by running an application (e.g., an exhibition application). For example, the exhibition pass image may also be acquired by taking a picture of the exhibition pass image. For example, the electronic device 500 may acquire the exhibition pass image by retrieving the exhibition pass image stored in the memory (e.g., the internal storage 530).

According to an embodiment, in operation 2610, the processor 510 may acquire an exhibition pass image by running an application (e.g., an exhibition application). For example, the exhibition pass image may also be acquired by taking a picture of the exhibition pass image. For example, the processor 510 may acquire the exhibition pass image by retrieving the exhibition pass image stored in the memory (e.g., the internal storage 530).

According to an embodiment, in operation 2620, the electronic device 500 may analyze the exhibition pass image for which an update is requested. The exhibition pass image for which an update is requested may be analyzed using the image analysis module 490 (e.g., an image analysis AI module).

For example, the electronic device 500 may analyze the type of the exhibition pass image for which an update is requested. For example, the electronic device 500 may acquire user information by retrieving user's information.

For example, the electronic device 500 may determine whether the exhibition pass image for which an update is requested contains personal information.

For example, the electronic device 500 may determine whether the exhibition pass image for which an update is requested contains additional sensitive information.

For example, the electronic device 500 may identify text contained in the exhibition pass image for which an update is requested.

For example, in case that the exhibition pass image for which an update is requested contains personal information, the electronic device 500 may determine that the exhibition pass image requires an update (e.g., change) when the configured condition is satisfied. For example, when the exhibition pass image for which an update is requested contains personal information, the electronic device 500 may determine that the exhibition pass image corresponds to an image requiring an update.

According to an embodiment, in operation 2620, the processor 510 may analyze the exhibition pass image for which an update is requested. The exhibition pass image for which an update is requested may be analyzed using the image analysis module 490 (e.g., an image analysis AI module).

For example, the processor 510 may analyze the type of the exhibition pass image for which an update is requested. For example, the processor 510 may acquire user information by retrieving user's information.

For example, the processor 510 may determine whether the exhibition pass image for which an update is requested contains personal information.

For example, the processor 510 may determine whether the exhibition pass image for which an update is requested contains additional sensitive information.

For example, the processor 510 may identify text contained in the exhibition pass image for which an update is requested.

For example, in case that the exhibition pass image for which an update is requested contains personal information, the processor 510 may determine that the exhibition pass image requires an update (e.g., change) when the configure condition is satisfied. For example, when the exhibition pass image for which an update is requested contains personal information, the processor 510 may determine that the exhibition pass image is an image requiring an update.

According to an embodiment, the electronic device 500 may be connected to the cloud server 1410 and may request information required for updating the image (e.g., update time point information according to a place and time) according to time information, location information, and place information related to the exhibition pass image. The electronic device 500 may be connected to the cloud server 1410 and may acquire information (e.g., update time point information according to a place and time) for updating (e.g., changing) an image containing sensitive information (e.g., place information, payment-related information, QR code information for entry to and exit from a designated place).

According to an embodiment, in operation 2640, the electronic device 500 may update (e.g., change) the exhibition pass image to an image for the cover display (540, a sub-display, an external display), based on a user's request.

According to an embodiment, the processor 510 may be connected to the cloud server 1410 and may request information (e.g., update time point information according to a place and time) required for updating the image according to time information, location information, and place information related to the exhibition pass image. The processor 510 may be connected to the cloud server 1410 and may acquire information (e.g., update time point information according to a place and time) for updating (e.g., changing) an image containing sensitive information (e.g., place information, payment-related information, QR code information for entry to and exit from a designated place).

According to an embodiment, in operation 2640, the processor 510 may update (e.g., change) the exhibition pass image to an image for the cover display (540, a sub-display, an external display), based on a user's request.

According to an embodiment, in operation 2650, when an update time point for the exhibition pass image displayed on the cover display (540, a sub-display, an external display) occurs (e.g., battery discharge), the electronic device 500 may update (e.g., change) the exhibition pass image displayed on the cover display (540, a sub-display, an external display). For example, the electronic device 500 may conceal (blind) (e.g., block) personal information 2351 in the exhibition pass image.

According to an embodiment, in operation 2650, when an update time point for the exhibition pass image displayed on the cover display (540, a sub-display, an external display) occurs (e.g., battery discharge), the processor 510 may update (e.g., change) the exhibition pass image displayed on the cover display (540, a sub-display, an external display). For example, the electronic device 500 may conceal (blind) (e.g., block) personal information 2351 in the exhibition pass image.

According to an embodiment, in operation 2360, the electronic device 500 may sequentially conceal (e.g., block) authentication information 2361 of the exhibition pass after concealing the personal information 2351 in the exhibition pass image.

According to an embodiment, in operation 2360, the processor 510 may sequentially conceal (e.g., block) the authentication information 2361 of the exhibition pass after concealing the personal information 2351 in the exhibition pass image.

According to an embodiment, the memory (e.g., the memory 130 of FIG. 4) may include (e.g., store) instructions for causing the electronic device 500 to perform the operations of FIGS. 26A to 26F.

According to an embodiment, the memory (e.g., the memory 130 of FIG. 4) may include (e.g., store) instructions for causing the processor 510 to perform the operations of FIGS. 26A to 26F.

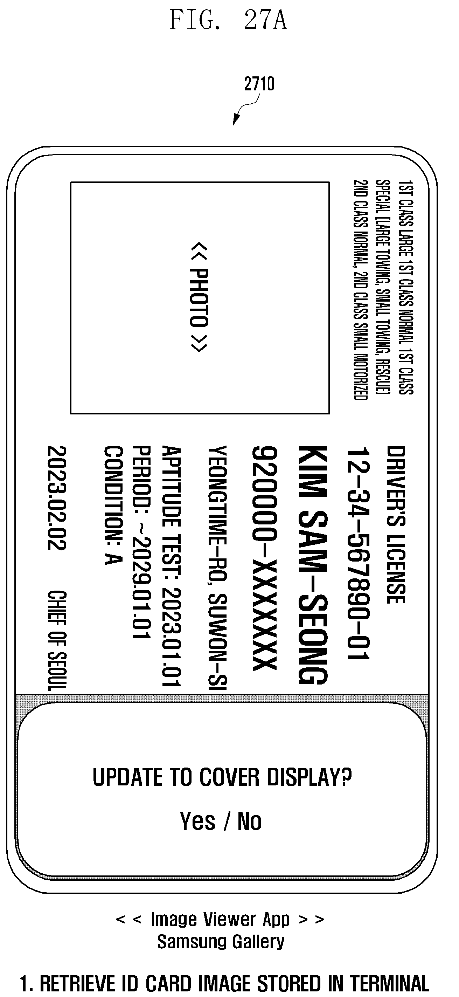

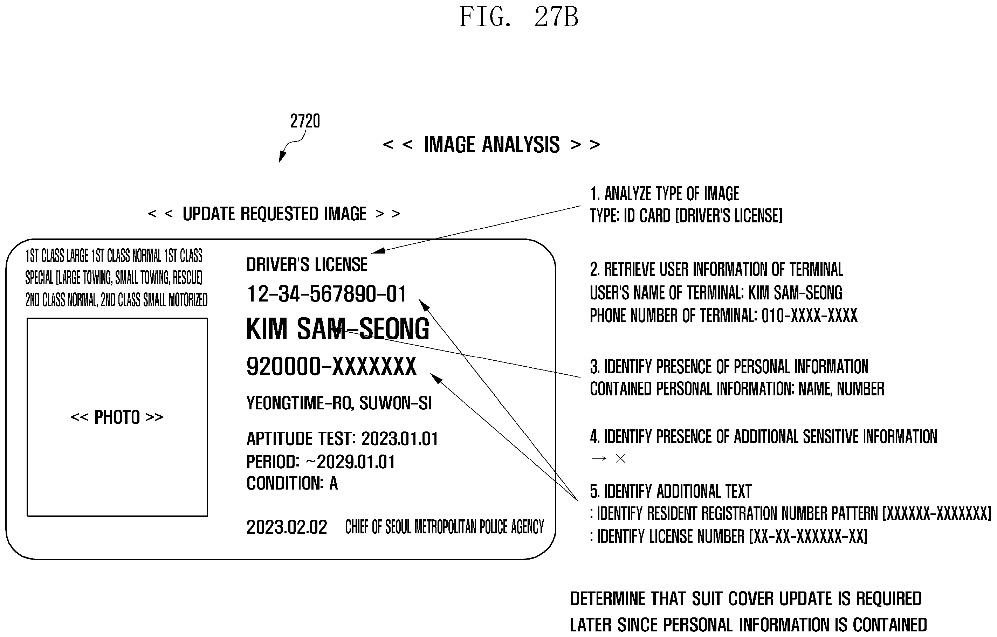

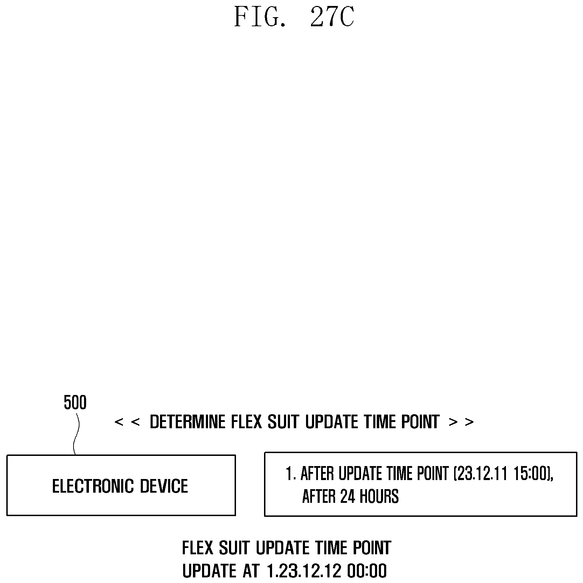

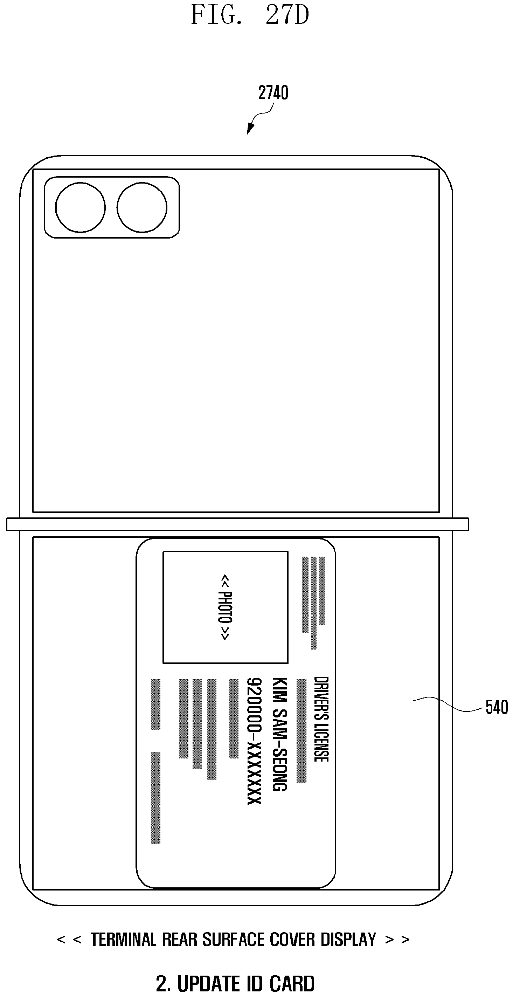

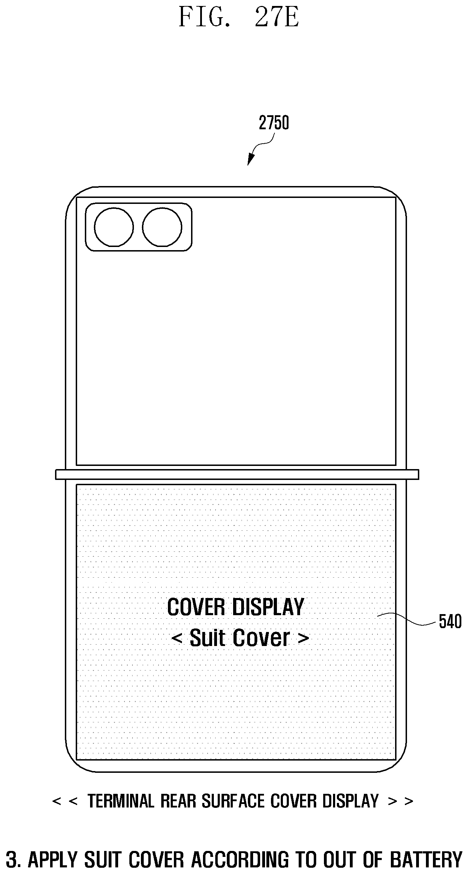

FIGS. 27A to 27E illustrate updating (e.g., changing) a driver's license image displayed on a cover display (e.g., a sub-display, an external display).

Referring to FIGS. 5A, 5B, and 27A to 27E, according to an embodiment, in operation 2710, the electronic device 500 may acquire a driver's license image by running an application (e.g., a gallery application). For example, the driver's license image may also be acquired by taking a picture of the driver's license image. For example, the electronic device 500 may acquire the driver's license image by retrieving the driver's license image stored in the memory (e.g., the internal storage 530).

According to an embodiment, in operation 2710, the processor 510 may acquire the driver's license image by running an application (e.g., a gallery application). For example, the driver's license image may also be acquired by taking a picture of the driver's license image. For example, the processor 510 may acquire the driver's license image by retrieving the driver's license image stored in the memory (e.g., the internal storage 530).

According to an embodiment, in operation 2720, the electronic device 500 may analyze the driver's license image for which an update is requested. The driver's license image for which an update is requested may be analyzed using the image analysis module 490 (e.g., an image analysis AI module).

For example, the electronic device 500 may analyze the type of the driver's license image for which an update is requested. For example, the electronic device 500 may acquire user information by retrieving user's information. For example, the electronic device 500 may determine whether the driver's license image for which an update is requested contains personal information.

For example, the electronic device 500 may determine whether the driver's license image for which an update is requested contains additional sensitive information.

For example, the electronic device 500 may identify text contained in the driver's license image for which an update is requested.

For example, in case that the driver's license image for which an update is requested contains personal information, the electronic device 500 may determine that the driver's license image requires an update (e.g., change) when the configured condition is satisfied. For example, when the driver's license image for which an update is requested contains personal information, the electronic device 500 may determine that the driver's license image is an image requiring an update.

According to an embodiment, in operation 2720, the processor 510 may analyze the driver's license image for which an update is requested. The driver's license image for which an update is requested may be analyzed using the image analysis module 490 (e.g., an image analysis AI module).

For example, the processor 510 may analyze the type of the driver's license image for which an update is requested. For example, the processor 510 may acquire user information by retrieving user's information.

For example, the processor 510 may determine whether the driver's license image for which an update is requested contains personal information.

For example, the processor 510 may determine whether the driver's license image for which an update is requested contains additional sensitive information.

For example, the processor 510 may identify text contained in the driver's license image for which an update is requested. For example, in case that the driver's license image for which an update is requested contains personal information, the processor 510 may determine that the driver's license image requires an update (e.g., change) when the configured condition is satisfied. For example, when the driver's license image for which an update is requested contains personal information, the processor 510 may determine that the driver's license image corresponds to an image requiring an update.

According to an embodiment, the electronic device 500 may be connected to the cloud server 1410 and may request information required for updating the image (e.g., update time point information according to a place and time) according to time information, location information, and place information which are related to the driver's license image. The electronic device 500 may be connected to the cloud server 1410 and may acquire information (e.g., update time point information according to a place and time) for updating (e.g., changing) an image containing sensitive information (e.g., place information, payment-related information, QR code information for entering and exiting a designated place).

According to an embodiment, in operation 2740, the electronic device 500 may update (e.g., change) the driver's license image to an image for the cover display (540, a sub-display, an external display), based on a user's request.

According to an embodiment, the processor 510 may be connected to the cloud server 1410 and may request information (e.g., update time point information according to a place and time) required for updating the image according to time information, location information, and place information related to the driver's license image. The processor 510 may be connected to the cloud server 1410 and may acquire information (e.g., update time point information according to a place and time) for updating (e.g., changing) an image containing sensitive information (e.g., place information, payment-related information, QR code information for entering and exiting a designated place).

According to an embodiment, in operation 2740, the processor 510 may update (e.g., change) the driver's license image to an image for the cover display (540, a sub-display, an external display), based on a user's request.

According to an embodiment, in operation 2750, when an update time point for the driver's license image displayed on the cover display (540, a sub-display, an external display) occurs (e.g., battery discharge), the electronic device 500 may update (e.g., change) the driver's license image displayed on the cover display (540, a sub-display, an external display). For example, the electronic device 500 may conceal (e.g., block) personal information in the driver's license image.

According to an embodiment, in operation 2750, when the update time point for the driver's license image displayed on the cover display (540, a sub-display, an external display) occurs (e.g., battery discharge), the processor 510 may update (e.g., change) the driver's license image displayed on the cover display (540, a sub-display, an external display). For example, the electronic device 500 may conceal (e.g., block) personal information in the driver's license image.

According to an embodiment, the memory (e.g., the memory 130 of FIG. 4) may include (e.g., store) instructions for causing the electronic device 500 to perform the operations of FIGS. 27A to 27E.

According to an embodiment, the memory (e.g., the memory 130 of FIG. 4) may include (e.g., store) instructions for causing the processor 510 to perform the operations of FIGS. 27A to 27E.

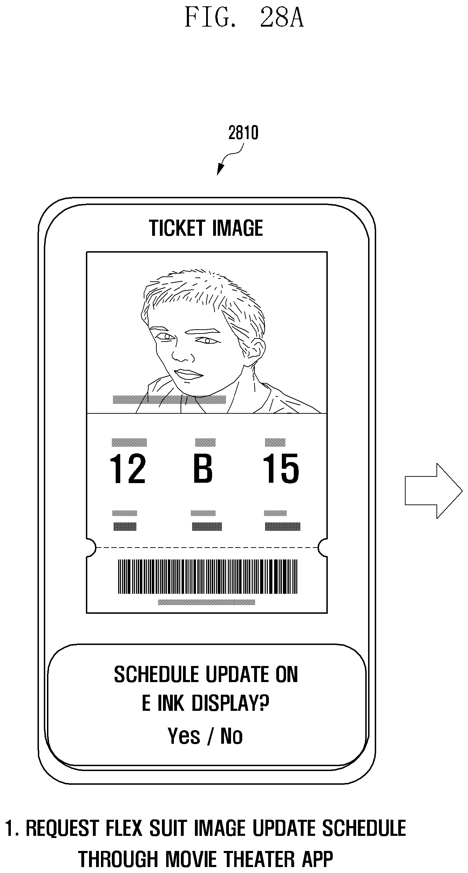

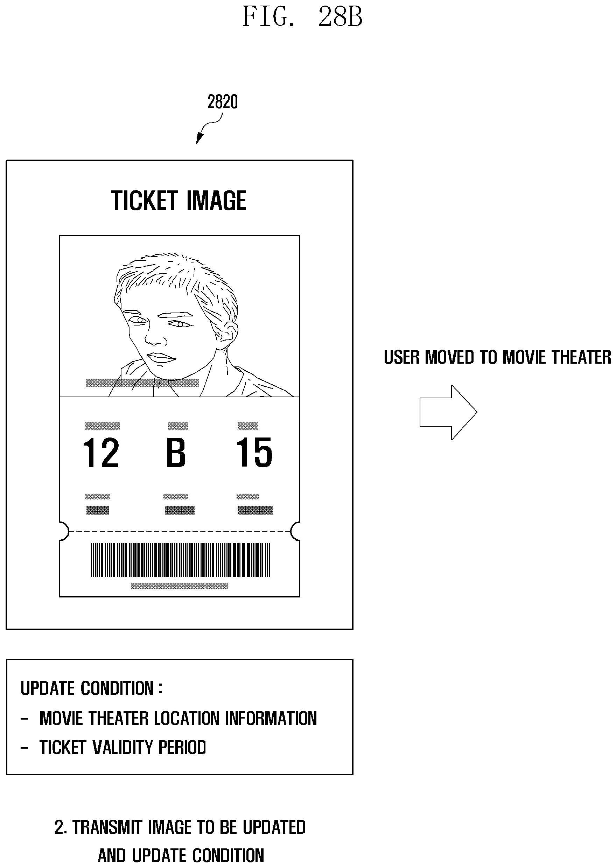

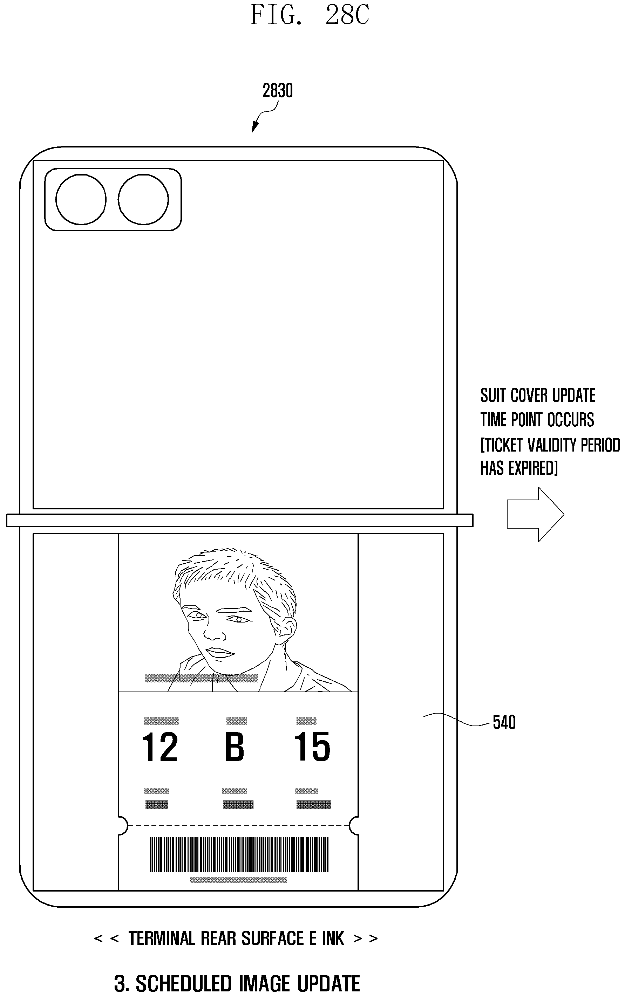

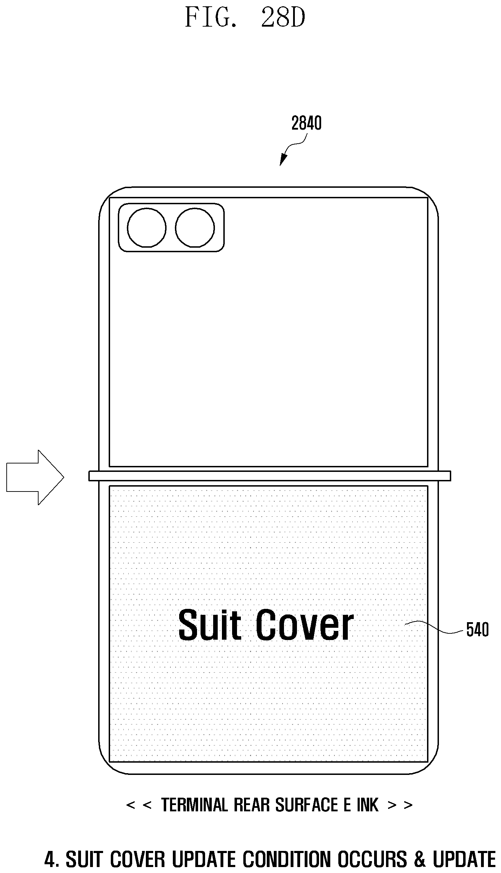

FIGS. 28A to 28D illustrate displaying a movie ticket image on a cover display (e.g., a sub-display, an external display) and changing the movie ticket image displayed on the cover display (e.g., a sub-display, an external display) to a different image, according to a condition.

Referring to FIGS. 5 and 28A to 28D, in operation 2810 according to an embodiment, the electronic device 500 may request a schedule for a movie ticket image by running an application (e.g., a movie ticket application).

According to an embodiment, in operation 2810, the processor 510 may request a schedule for a movie ticket image by running an application (e.g., a movie ticket application).

According to an embodiment, in operation 2820, the electronic device 500 may configure a movie ticket image to be displayed on the cover display 540 (e.g., a sub-display, an external display), and an update condition. For example, the update condition may be configured such that the movie ticket image is displayed on the cover display 540 (e.g., a sub-display, an external display) when the electronic device 500 is in the movie theater.

According to an embodiment, in operation 2820, the processor 510 may configure a movie ticket image to be displayed on the cover display 540 (e.g., a sub-display, an external display), and an update condition. For example, the update condition may be configured such that the movie ticket image is displayed on the cover display 540 (e.g., a sub-display, an external display) when the electronic device 500 enters the movie theater.

The electronic device 500 or the processor 510 may schedule the display of the movie ticket image on the cover display 540 (e.g., sub-display, an external display) by running an application (e.g., a movie ticket application).

For example, the electronic device 500 or the processor 510 may acquire the movie ticket image through the application (e.g., a movie ticket application).

For example, the electronic device 500 or the processor 510 may acquire a movie ticket image through another application (e.g., a messenger application).

For example, in order to configure a condition for displaying a movie ticket image on the cover display 540 (e.g., a sub-display, an external display), the electronic device 500 or the processor 510 may acquire information on the type, amount, location of available theaters, and validity period of the movie ticket.

According to an embodiment, in operation 2830, when the electronic device 500 enters the movie theater, the electronic device 500 may display the movie ticket image on the cover display 540 (e.g., a sub-display, an external display).

According to an embodiment, in operation 2830, when the electronic device 500 enters the movie theater, the processor 510 may display the movie ticket image on the cover display 540 (e.g., a sub-display, an external display).

According to an embodiment, in operation 2840, when the electronic device 500 exits the movie theater, the electronic device 500 may update (e.g., change) the movie ticket image displayed on the cover display (540, a sub-display, an external display) to a different image.

For example, based on the validity period included in the movie ticket image, the electronic device 500 may update (e.g., change) the movie ticket image displayed on the cover display (540, a sub-display, an external display) to a different image when the validity period of the movie ticket has passed.

According to an embodiment, in operation 2840, when the electronic device 500 exits of the movie theater, the processor 510 may update (e.g., change) the movie ticket image displayed on the cover display (540, a sub-display, an external display) to a different image.

For example, based on the validity period included in the movie ticket image, the electronic device 500 may update (e.g., change) the movie ticket image displayed on the cover display (540, a sub-display, an external display) to a different image when the validity period of the movie ticket has expired.

According to an embodiment, in operation 2840, when the electronic device 500 exits of the movie theater, the processor 510 may update (e.g., change) the movie ticket image displayed on the cover display (540, a sub-display, an external display) to a different image.

For example, based on the validity period included in the movie ticket image, the processor 510 may update (e.g., change) the movie ticket image displayed on the cover display (540, a sub-display, an external display) to a different image when the validity period of the movie ticket has expired.

According to an embodiment, the operation of displaying the movie ticket image on the cover display (540, a sub-display, an external display) may be executed in the background.

According to an embodiment, the operation of updating (e.g., changing) the movie ticket image displayed on the cover display (540, a sub-display, an external display) to a different image may be executed in the background.

According to an embodiment, the memory (e.g., the memory 130 of FIG. 4) may include (e.g., store) instructions for causing the electronic device 500 to perform the operations of FIGS. 28A to 28D.

According to an embodiment, the memory (e.g., the memory 130 of FIG. 4) may include (e.g., store) instructions for causing the processor 510 to perform the operations of FIGS. 28A to 28D.

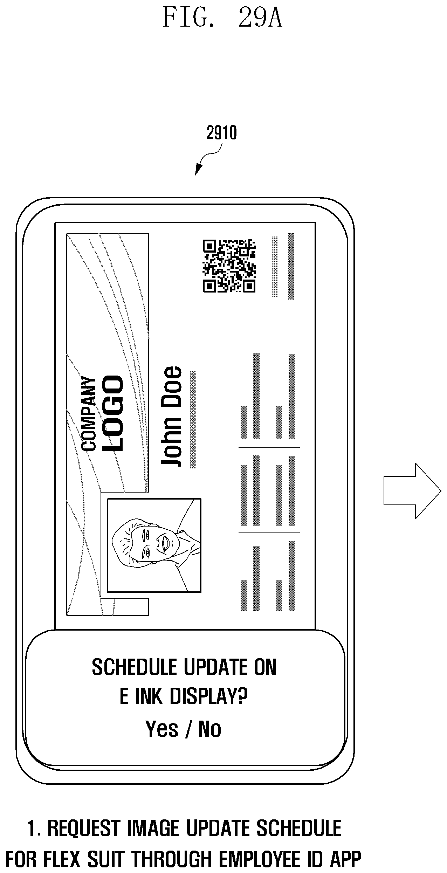

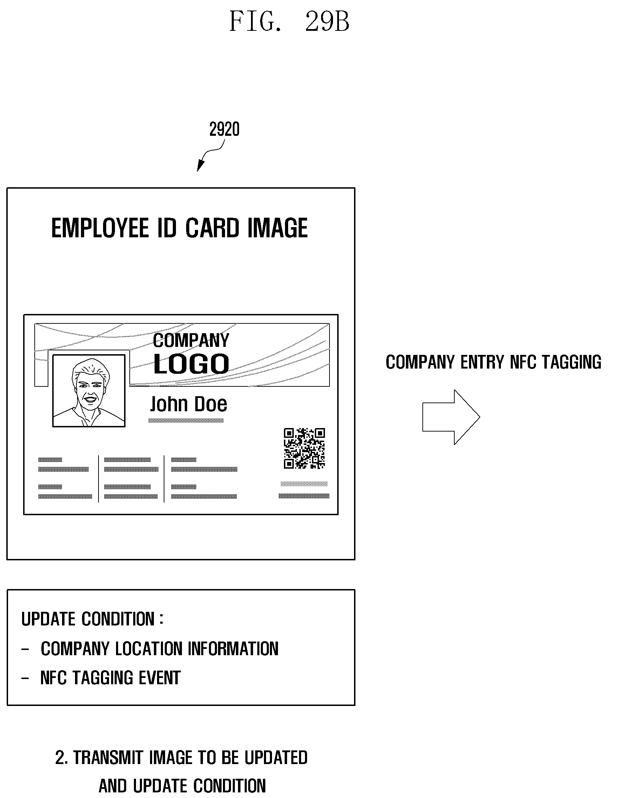

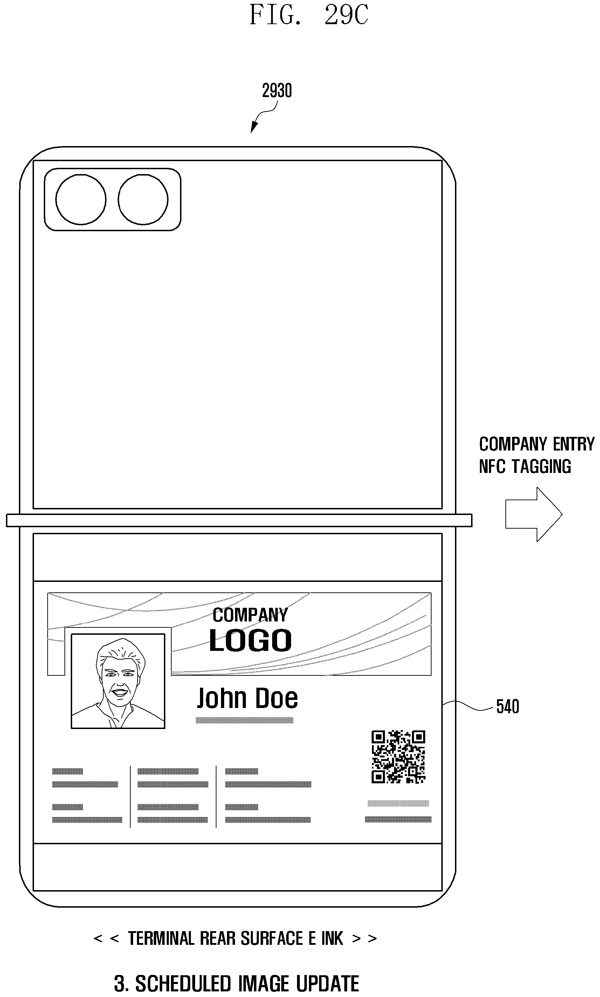

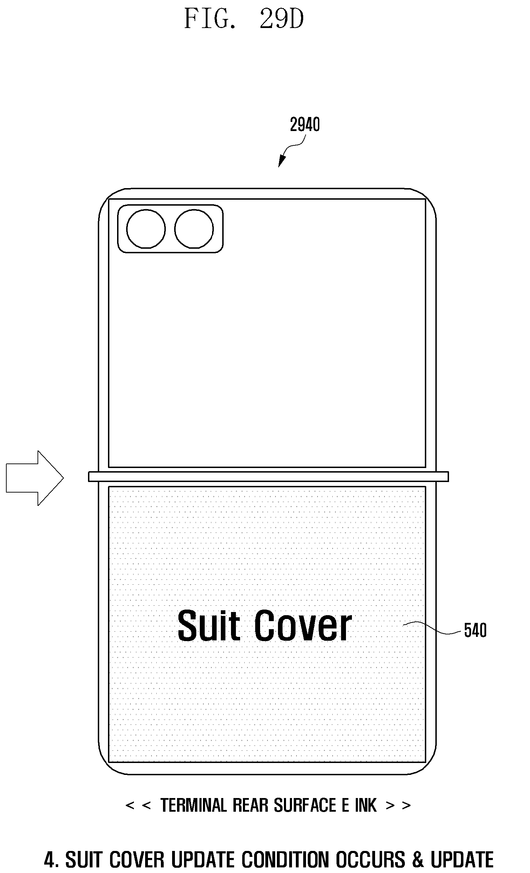

FIGS. 29A to 29D illustrate displaying an employee ID image on a cover display (e.g., a sub-display, an external display) and changing the employee ID image displayed on the cover display (e.g., a sub-display, an external display) to a different image, according to a condition.

Referring to FIGS. 5 and 29A to 29D, in operation 2910 according to an embodiment, the electronic device 500 may request a schedule for an employee ID image by running an application (e.g., an employee application).

According to an embodiment, in operation 2910, the processor 510 may request a schedule for an employee ID image by running an application (e.g., an employee application).

According to an embodiment, in operation 2920, the electronic device 500 may configure an employee ID image to be displayed on the cover display 540 (e.g., a sub-display, an external display), and an update condition. For example, the update condition may be configured such that the employee ID image is displayed on the cover display 540 (e.g., a sub-display, an external display) when the electronic device 500 enters the company.

In order to configure a condition for displaying an employee ID image on the cover display 540 (e.g., a sub-display, an external display), the electronic device 500 or the processor 510 may acquire location information of the company.

According to an embodiment, in operation 2920, the processor 510 may configure an employee ID image to be displayed on the cover display 540 (e.g., a sub-display, an external display), and an update condition. For example, the processor 510 may configure the update condition such that the employee ID image is displayed on the cover display 540 (e.g., a sub-display, an external display) when the electronic device 500 enters the company (e.g., NFC tagging for entering the company).

According to an embodiment, in operation 2930, when the electronic device 500 enters the company, the processor 510 may display the employee ID image on the cover display 540 (e.g., a sub-display, an external display).

According to an embodiment, in operation 2930, when the electronic device 500 enters the company, the processor 510 may display the employee ID image on the cover display 540 (e.g., a sub-display, an external display).

According to an embodiment, in operation 2940, when the electronic device 500 exits the company (e.g., NFC tagging to leave the company), the electronic device 500 may update (e.g., change) the image (e.g., an employee ID image) displayed on the cover display (540, a sub-display, an external display) to a different image.

According to an embodiment, in operation 2140, when the electronic device 500 exits the company, the processor 510 may update (e.g., change) the image (e.g., an employee ID image) displayed on the cover display (540, a sub-display, an external display) to a different image.

According to an embodiment, the operation of displaying the employee ID image on the cover display (540, a sub-display, an external display) may be executed in the background.

According to an embodiment, the operation of updating (e.g., changing) the employee ID image displayed on the cover display (540, a sub-display, an external display) to a different image may be executed in the background.

According to an embodiment, the memory (e.g., the memory 130 of FIG. 4) may include (e.g., store) instructions for causing the electronic device 500 to perform the operations of FIGS. 29A to 29D.

According to an embodiment, the memory (e.g., the memory 130 of FIG. 4) may include (e.g., store) instructions for causing the processor 510 to perform the operations of FIGS. 29A to 29D.

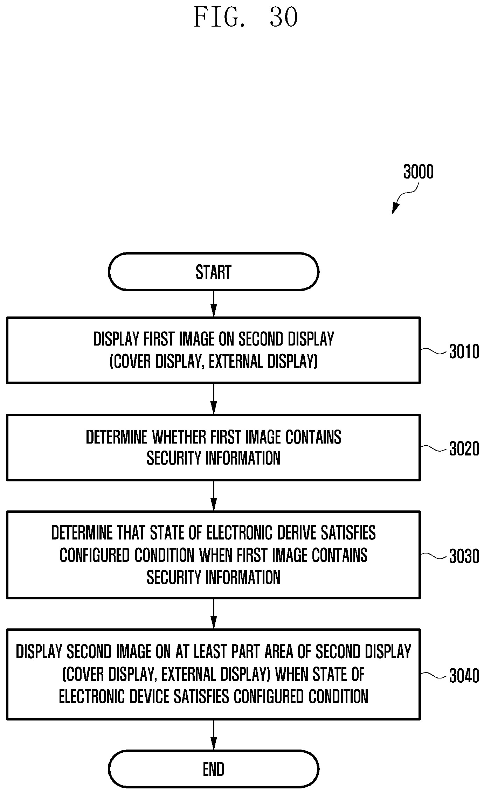

FIG. 30 is a flowchart 3000 illustrating an operation method of an electronic device according to an embodiment of the disclosure.

Referring to FIGS. 5A and 30, in operation 3010 according to one embodiment, the electronic device 500 may display a first image on a second display (e.g., the cover display 540, a sub-display, an external display).

According to an embodiment, in operation 3010, the processor 510 may cause to display the first image on the second display (e.g., the cover display 540, a sub-display, an external display).

For example, the first image to be displayed on the second display (e.g., the cover display 540, a sub-display, an external display) may include a student ID image (e.g., the student ID image of FIGS. 20A to 20G). For example, the first image to be displayed on the second display (e.g., the cover display 540, a sub-display, an external display) may include a flight ticket image. For example, the first image to be displayed on the second display (e.g., the cover display 540, a sub-display, an external display) may include a gift card image. For example, the first image to be displayed on the second display (e.g., the cover display 540, a sub-display, an external display) may include an exhibition pass image. For example, the first image to be displayed on the second display (e.g., the cover display 540, a sub-display, an external display) may include a driver's license image.

For example, the second display (e.g., the cover display 540, a sub-display, an external display) may maintain the display of the first image (e.g., a final screen) for a predetermined period of time even without power supply.

According to an embodiment, in operation 3020, the electronic device 500 may determine whether the first image to be displayed on the second display (e.g., the cover display 540, a sub-display, an external display) contains security information.

According to an embodiment, in operation 3020, the processor 510 may determine whether the first image to be displayed on the second display (e.g., the cover display 540, a sub-display, an external display) contains security information.

For example, the security information may include at least one of the user's sensitive information, personal information, and invalid information. For example, the invalid information may include information, the validity of which has been lost due to a time (e.g., a time, a period), and/or information, the validity of which has been lost due to a location (e.g., a location of the electronic device).

According to an embodiment, in operation 3030, when the first image contains security information, it may be determined whether the state of the electronic device 500 satisfies a configure condition.

For example, the electronic device 500 may determine whether the remaining capacity of the battery 189 is less than or equal to a predetermined capacity (e.g., 10%). When the remaining capacity of the battery 189 is less than or equal to the predetermined capacity (e.g., 10%), it may be determined that the state of the electronic device 500 satisfies a configured condition.

For example, the processor 510 may determine whether the battery 189 is discharged. When the battery 189 is discharged, it may be determined that the state of the electronic device 500 satisfies a configured condition.

According to an embodiment, in operation 3040, when the state of the electronic device 500 satisfies a configured condition, the electronic device 500 may update the first image to be displayed on the second display (e.g., the cover display 540, a sub-display, an external display) to display a second image. For example, the electronic device 500 may display the second image on at least a part of the second display (e.g., the cover display 540, a sub-display, an external display) by replacing the first image. For example, the electronic device 500 may update the content of the first image to display the second image on at least a part of the second display (e.g., the cover display 540, a sub-display, an external display).

According to an embodiment, in operation 3040, when the state of the electronic device 500 satisfies the configured condition, the processor 510 may update the first image to be displayed on the second display (e.g., the cover display 540, a sub-display, an external display) to display a second image. For example, the processor 510 may display the second image on at least a part of the second display (e.g., the cover display 540, a sub-display, an external display) by replacing the first image. For example, the processor 510 may update the contents of the first image to display the second image on at least a part of the second display (e.g., the cover display 540, a sub-display, an external display).

According to an embodiment, the memory (e.g., the memory 130 of FIG. 4) may include (e.g., store) instructions for causing the electronic device 500 to perform the operations of FIG. 30.

According to an embodiment, the memory (e.g., the memory 130 of FIG. 4) may include (e.g., store) instructions for causing the processor 510 to perform the operations of FIG. 30.

According to an embodiment, at least some of the operations illustrated in FIG. 30 may be performed sequentially.

According to an embodiment, at least some of the operations illustrated in FIG. 30 may be performed in parallel (simultaneously).

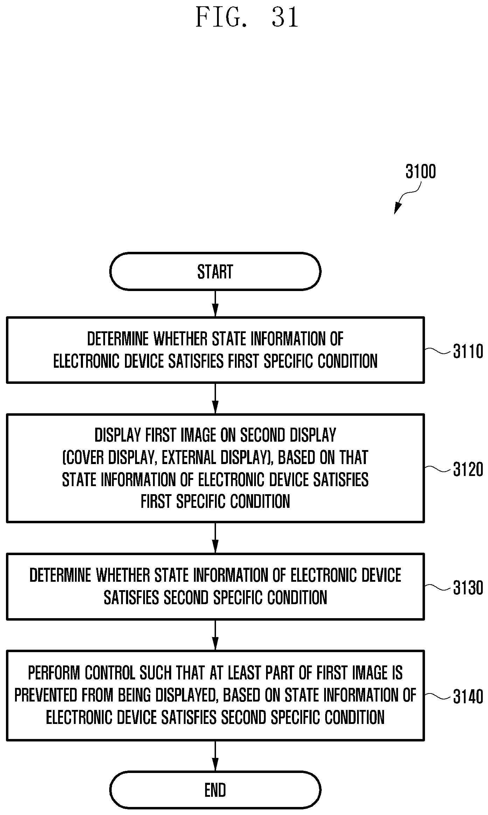

FIG. 31 is a flowchart 3100 illustrating an operation method of an electronic device according to an embodiment of the disclosure.

Referring to FIG. 5 and FIG. 31, in operation 3110, the electronic device 500 may determine whether state information (e.g., state information of the electronic device) satisfies a first specific condition.

According to an embodiment, in operation 3110, the processor 510 may determine whether the state information of the electronic device 500 satisfies the first specific condition.

For example, the first specific condition may include entry of the electronic device 500 to a designated location. For example, the first specific condition may include the arrival of a designated time.

According to an embodiment, in operation 3120, when the state information of the electronic device 500 satisfies the first specific condition, the electronic device 500 may display the first image on the second display 540, based on that the state information satisfies the first specific condition.

According to an embodiment, in operation 3120, when the state information of the electronic device 500 satisfies the first specific condition, the processor 510 may cause to display the first image on the second display 540, based on that the state information of the electronic device 500 satisfies the first specific condition.

According to an embodiment, in operation 3130, the electronic device 500 may determine whether the state information (e.g., the state information of the electronic device) satisfies a second specific condition.

According to an embodiment, in operation 3130, the processor 510 may determine whether the state information of the electronic device 500 (e.g., the state information of the electronic device) satisfies the second specific condition.

For example, the second specific condition may include the exit of the electronic device 500 from a designated location. For example, the second specific condition may include the arrival of the time point at which the image becomes invalid.

According to an embodiment, in operation 3140, when the state information of the electronic device 500 satisfies the second specific condition, the electronic device 500 may perform control such that at least a part of the first image is not displayed, based on that the state information satisfies the second specific condition.

According to an embodiment, in operation 3140, when the state information of the electronic device 500 satisfies the second specific condition, the processor 510 may perform control such that at least a part of the first image is not displayed, based on that the state information of the electronic device 500 satisfies the second specific condition.

According to an embodiment, the memory (e.g., the memory 130 of FIG. 4) may include (e.g., store) instructions for causing the electronic device 500 to perform the operations of FIG. 31.

According to an embodiment, the memory (e.g., the memory 130 of FIG. 4) may include (e.g., store) instructions for causing the processor 510 to perform the operations of FIG. 31.

According to an embodiment, at least some of the operations illustrated in FIG. 31 may be performed sequentially.

According to an embodiment, at least some of the operations illustrated in FIG. 31 may be performed in parallel (simultaneously).

According to an embodiment, each operation of the embodiments described with reference to FIGS. 5A to 31 may be performed independently as one embodiment.

According to an embodiment, operation may be performed in combination of at least two embodiments of the embodiments described with reference to FIGS. 5A to 31.

According to an embodiment, when operation is performed in combination of at least two embodiments, at least some configurations and/or at least some operations included in each embodiment may be omitted.

An electronic device (e.g., the electronic device 400 of FIG. 4, the electronic device 500 of FIG. 5A) according to an embodiment of the disclosure may include a first housing (e.g., the first housing 310 of FIG. 3A) and a second housing (e.g., the second housing 320 of FIG. 3A) connected to each other through a hinge, a first display (e.g., the flexible display 330 of FIG. 3A) supported on the hinge, a first surface of the first housing 310, and a first surface of the second housing 320, a second display (e.g., the cover display 540 of FIG. 5A) supported on a second surface of the first housing 310 or a second surface of the second housing 320, a processor (e.g., the processor 510 of FIG. 5A) operatively connected to the first display 330 and the second display 540, a memory (e.g., the memory 130 of FIG. 4, the internal storage 530 of FIG. 5A) operatively connected to the processor and including instructions, and a battery (e.g., the battery 189 of FIG. 5A) configured to supply power to the first display 330, the second display 540, and the processor 510. The second display 540 may display content, based on data transmitted from the processor 510, and the second display 540 may maintain a final screen display for a predetermined period of time even without power supply. In case that a first image displayed on the second display 540 contains security information, the instructions, when executed by the processor 510, may cause the electronic device 400, 500 to determine whether the state information of the flexible electronic device 400, 500 satisfies a configured condition. In case that the state information of the flexible electronic device 400, 500 satisfies the configured condition, the instructions, when executed by the processor 510, may cause the electronic device 400, 500 such that a configured second image is displayed on at least a part of the second display 540.

According to an embodiment, the security information may contain user's private information and payment information.

According to an embodiment, the state information of the flexible electronic device 400, 500 may include location information, operation time information of the second display 540, and information on a remaining capacity of the battery.

According to an embodiment, the instructions, when executed by the processor 510, may cause the electronic device 400, 500 to determine based on the location information whether the electronic device 400, 500 has exited from the location at which the first image should be displayed. In case that the electronic device 400, 500 exited from the location at which the first image should be displayed, the instructions, when executed by the processor 510, may cause the electronic device 400, 500 to prevent the display of the security information contained in the first image to be displayed on the second display 540.

According to an embodiment, the instructions, when executed by the processor 510, may cause the electronic device 400, 500 to determine based on the location information whether the electronic device 400, 500 has exited from the location at which the first image should be displayed. In case that the electronic device 400, 500 exited from the location at which the first image should be displayed, the instructions, when executed by the processor 510, may cause the electronic device 400, 500 to replace the first image such that the second image is displayed on the second display 540.

According to an embodiment, the instructions, when executed by the processor 510, may cause the electronic device 400, 500 to determine based on the location information whether a time at which the electronic device 400, 500 should display the first image has elapsed. In case that the time point at which the first image should be displayed elapsed, the instructions, when executed by the processor 510, may cause the electronic device 400, 500 to prevent the display of the security information contained in the first image to be displayed on the second display 540.

According to an embodiment, the instructions, when executed by the processor 510, may cause the electronic device 400, 500 to determine based on the location information whether the time point at which the first image should be displayed has elapsed. In case that the time point at which the first image should be displayed elapsed, the instructions, when executed by the processor 510, may cause the electronic device 400, 500 to replace the first image such that the second image is displayed on the second display 540.

According to an embodiment, the second display 540 may include an outer cover that is partially open such that the same is exposed to the outside. In case that the remaining capacity of the battery is less than a reference value, the instructions, when executed by the processor 510, may cause the electronic device 400, 500 to replace the first image such that an image substantially identical to the outer cover is displayed on the second display 540.

According to an embodiment, a user interface for replacing an image may be displayed on the first display 330 or the second display 540. Based on a user's image change input, the first image may be replaced such that the second image is displayed on the second display 540.

In an operation method of an electronic device 400, 500 according to an embodiment, the electronic device 400, 500 may include a first housing 310 and a second housing 320 connected to each other through a hinge, a first display 330 supported on the hinge, a first surface of the first housing 310, and a first surface of the second housing 320, a second display 540 supported on a second surface of the first housing 310 or a second surface of the second housing 320, a processor 510 operatively connected to the first display 330 and the second display 540, a memory 130, 530 operatively connected to the processor and including instructions, and a battery configured to supply power to the first display 330, the second display 540, and the processor 510. In the operation method, the second display 540 may display content, based on data transmitted from the processor 510, and the second display 540 may maintain a final screen display for a predetermined period of time without power supply. The operation method may include determining whether the state information of the flexible electronic device 400, 500 satisfies a configured condition when security information is contained in the first image displayed on the second display 540. The operation method may include displaying a configured second image on at least a part of the second display 540 when the state information of the flexible electronic device 400, 500 satisfies the configured condition.

According to an embodiment, the security information may include the user's private information and payment information.

According to an embodiment, the state information of the flexible electronic device 400, 500 may include location information, operation time information of the second display 540, and information on a remaining capacity of the battery.

According to an embodiment, the operation method may determine based on the location information whether the electronic device 400, 500 has exited from the location at which the first image should be displayed. In the operation method, the security information contained in the first image to be displayed on the second display 540 may not be displayed when the electronic device exited from the location at which the first image should be displayed.

According to an embodiment, the operation method may include, based on the location information, whether the electronic device 400, 500 has exited from the location at which the first image should be displayed. The operation method may include, when the electronic device exited from the location at which the first image should be displayed, replacing the first image such that the second image is displayed on the second display 540.

According to an embodiment, the operation method may include, based on the location information, whether the time point at which the first image should be displayed by the electronic device 400, 500 has elapsed. In the operation method, when the time point at which the first image should be displayed has elapsed, the security information contained in the first image on the second display 540 may not be displayed.

According to an embodiment, the operation method may include, based on the location information, determining whether the time point at which the first image should be displayed by the electronic device 400, 500 has elapsed. The operation method may include, when the time point at which the first image should be displayed elapsed, replacing the first image such that the second image is displayed on the second display 540.

According to an embodiment, in the operation method, when the remaining capacity of the battery is less than a reference value, the first image may be replaced such that an image substantially identical to an outer cover of the electronic device 400, 500 is displayed on the second display 540.

According to an embodiment, in the operation method, a user interface for replacing an image may be displayed on the first display 330 or the second display 540. In the operation method, based on a user's image change input, the first image may be replaced such that the second image is displayed on the second display 540.

In a non-transitory computer-readable recording medium storing instructions readable by the processor 510 of an electronic device 400, 500, the instructions, when executed by the processor 510, may cause the electronic device 400, 500 to display content, based on data transmitted from the processor 510 on the second display 540 and to maintain a final screen display for a predetermined period of time without power supply. In case that the first image displayed on the second display 540 contains security information, the instructions, when executed by the processor 510, may cause the electronic device 400, 500 to determine whether the state information of the flexible electronic device 400, 500 satisfies a configured condition. In case that the state information of the flexible electronic device 400, 500 satisfies the configured condition, the instructions, when executed by the processor 510, may cause the electronic device 400, 500 to display the configured second image on at least a part of the second display 540.

According to an embodiment, in case that the remaining capacity of the battery of the electronic device 400, 500 is less than a reference value, the instructions stored in the recording medium, when executed by the processor 510, may cause the electronic device 400, 500 to replace the first image such that an image substantially identical to the outer cover of the electronic device 400, 500 is displayed on the second display 540.

An electronic device according to an embodiment of the disclosure (e.g., the electronic device 400 of FIG. 4, the electronic device 500 of FIG. 5A) may include a housing, a hinge unit, a first display (e.g., the flexible display 330 of FIG. 3A), a second display (e.g., the cover display 540 of FIG. 5A), a battery (e.g., the battery 189 of FIG. 5A), at least one processor (e.g., the processor 510 of FIG. 5A), and a memory (e.g., the memory 130 of FIG. 4). The housing may include a first housing (e.g., the first housing 310 of FIG. 3A) and a second housing (the second housing 320 of FIG. 3A). The hinge unit may rotatably connect the first housing 310 and the second housing 320 to each other. The first display 330 may be disposed on a first surface of the first housing 310 and a firs surface of the second housing 320. The second display 540 may be disposed on a second surface of the second housing 320 and/or a second surface of the second housing 320. The battery 189 may supply power to the first display 330 and the second display 540. The memory 130 may store instructions. The instructions, when individually or collectively executed by the at least one processor 510, may cause the electronic device 400, 500 to determine whether the state information of the electronic device satisfies a first specific condition. Based on that the state information of the electronic device satisfies the first specific condition, the instructions, when individually or collectively executed by the at least one processor 510, the electronic device 400, 500 may display a first image on the second display 540. The instructions, when individually or collectively executed by the at least one processor 510, may cause the electronic device 400, 500 to determine whether the state information of the electronic device 400, 500 satisfies a second specific condition, while the first image is displayed on the second display 540. Based on that the state information of the electronic device 400, 500 satisfies the second specific condition, the instructions, when individually or collectively executed by the at least one processor 510, may cause the electronic device 400, 500 to prevent at least a part of the first image from being displayed.

According to an embodiment, the state information of the electronic device 400, 500 may include information on the remaining capacity of the battery, location information of the electronic device 400, 500, current time information, and operation time information of the second display 540.

According to an embodiment, in case that the electronic device 400, 500 enters a designated location, the instructions, when executed by the processor 510, may cause the electronic device 400, 500 to display the first image on the second display 540.

According to an embodiment, in case that the electronic device 400, 500 exits from the designated location, the instructions, when executed by the processor 510, may cause the electronic device 400, 500 to prevent at least a part of the first image from being displayed.

According to an embodiment, in case that the electronic device 400, 500 exits from the designated location, the instructions, when executed by the processor 510, may cause the electronic device 400, 500 to replace the first image such that a second image is displayed on the second display 540.

According to an embodiment, when a scheduled time arrives, the instructions, when executed by the processor 510, may cause the electronic device 400, 500 to display the first image on the second display 540.

According to an embodiment, when a designated time arrives after the first image is displayed for a predetermined period of time, the instructions, when executed by the processor 510, may cause the electronic device 400, 500 to prevent at least a part of the first image from being displayed.

According to an embodiment, when a designated time arrives after the first image is displayed for a predetermined period of time, the instructions, when executed by the processor 510, may cause the electronic device 400, 500 to replace the first image such that a second image is displayed on the second display 540.

According to an embodiment, the instructions, when executed by the processor 510, may cause the electronic device 400, 500 to display the first image on the second display 540, based on a user's image display request.

According to an embodiment, based on a user's image change request, the instructions, when executed by the processor 510, may cause the electronic device 400, 500 to replace the first image display such that the second image is displayed on the second display 540.

According to an embodiment, in case that the remaining capacity of the battery is less than a reference value, the instructions, when executed by the processor 510, may cause the electronic device 400, 500 to prevent at least a part of the first image from being displayed.

According to an embodiment, in case that the remaining capacity of the battery is less than a reference value, the instructions, when executed by the processor 510, may cause the electronic device 400, 500 to replace the first image such that the second image is displayed on the second display 540.

According to an embodiment, the instructions, when executed by the processor 510, may cause the electronic device 400, 500 to determine whether the first image to be displayed on the second display contains the user's personal information. In case that the first image contains the user's personal information, the instructions, when executed by the processor 510, may cause the electronic device 400, 500 to prevent the user's personal information from being displayed in the first image.

According to an embodiment, the instructions, when executed by the processor 510, may cause the electronic device 400, 500 to determine whether the first image to be displayed on the second display contains the user's personal information. In case that the first image contains the user's personal information, the instructions, when executed by the processor 510, may cause the electronic device 400, 500 to replace the first image such that the second image is displayed on the second display 540.

In an operation method of an electronic device 400, 500 according to an embodiment of the disclosure, the electronic device 400, 500 may include a housing including a first housing 310 and a second housing 320, a hinge unit configured to rotatably connect the first housing and the second housing to each other, a first display 330 disposed on a first surface of the first housing 310 and a first surface of the second housing 320, a second display 540 disposed on a second surface of the first housing 310 and/or a second surface of the second housing 320, a battery 189 configured to supply power to the first display 330 and the second display 540, at least one processor 510, and the memory 130 configured to store instructions. The operation method may include determining whether state information of the electronic device 400, 500 satisfies a first specific condition. Based on that the state information of the electronic device satisfies the first specific condition, the first image may be displayed on the second display 540. The operation method may include determining whether the state information of the electronic device 400, 500 satisfies a second specific condition while the first image is displayed on the second display 540. The operation method may include, based on that the state information of the electronic device 400, 500 satisfies the second specific condition, preventing at least a part of the first image from being displayed.

According to an embodiment, in the operation method, the state information of the electronic device 400, 500 may include information on a remaining capacity of the battery, location information of the electronic device 400, 500, current time information, and operation time information of the second display 540.

According to an embodiment, the operation method may include displaying the first image on the second display 540 when the electronic device 400, 500 enters a designated location.

According to an embodiment, the operation method may include preventing at least a part of the first image from being displayed when the electronic device 400, 500 exits from the designated location.

According to an embodiment, the operation method may include, when the electronic device 400, 500 exits from the designated location, displaying the second image on the second display 540 by replacing the first image.

According to an embodiment, the operation method may include displaying the first image on the second display 540 when a scheduled time arrives.

According to an embodiment, the operation method may include preventing at least a part of the first image from being displayed when a designated time arrives after the first image is displayed for a predetermined period of time.

According to an embodiment, the operation method may include, when a designated time arrives after the first image is displayed for a predetermined period of time, displaying the second image on the second display 540 by replacing the first image.

According to an embodiment, the operation method may include displaying the first image on the second display 540, based on a user's image display request.

According to an embodiment, the operation method may include, based on a user's image change request, displaying the second image on the second display 540 by replacing the first image.

According to an embodiment, the operation method may include preventing at least a part of the first image from being displayed when the remaining capacity of the battery is less than a reference level.

According to an embodiment, the operation method may include, when the remaining capacity of the battery is less than a reference level, displaying the second image on the second display 540 by replacing the first image.

According to an embodiment, the operation method may include determining whether the first image to be displayed on the second display contains the user's personal information. The operation method may include preventing the user's personal information from being displayed in the first image when the first image contains the user's personal information.

According to an embodiment, the operation method may include determining whether the first image to be displayed on the second display contains the user's personal information.

The operation method may include, when the first image contains the user's personal information, displaying the second image on the second display 540 by replacing the first image.

In a non-transitory computer-readable recording medium storing instructions readable by the processor 510 of the electronic device 400, 500, the instructions, when executed by the processor 510, may cause the electronic device 400, 500 to determine whether state information of the electronic device 400, 500 satisfies a first specific condition. The instructions, when executed by the processor 510, may cause the electronic device 400, 500 to display a first image on the second display 540, based on that the state information of the electronic device 400, 500 satisfies the first specific condition. The instructions, when executed by the processor 510, may cause the electronic device 400, 500 to determine whether state information of the electronic device 400, 500 satisfies a second specific condition, while the first image is displayed on the second display 540. The instructions, when executed by the processor 510, may cause at least a part of the first image to be prevented from being displayed, based on that the state information of the electronic device 400, 500 satisfies the second specific condition.

An electronic device and an operation method thereof according to an embodiment of the disclosure, on image on a display (e.g., a nonvolatile display, an electronic ink (E-ink) display, an electrophoretic display) capable of maintaining a screen without power may be updated (e.g., changed) according to a configured condition.

An electronic device and an operation method thereof according to an embodiment of the disclosure, a final image (e.g., a final screen) to be displayed on a display (e.g., a nonvolatile display, an electronic ink (E-ink) display, an electrophoretic display) capable of maintaining a screen without power may be updated (e.g., changed) to a different image when the final image contains the user sensitive information, personal information, and/or invalid information.

In an electronic device and an operation method thereof according to an embodiment of the disclosure, when a final image to be displayed on a display (e.g., a non-volatile display, an electronic ink (E-ink) display, an electrophoretic display) capable of maintaining a screen without power contains the user's sensitive information, personal information, and/or invalid information, the user's sensitive information, personal information, and/or invalid information contained in the final image (e.g., a final screen) may be concealed (blinded) (e.g., blocked).

In an electronic device and an operation method thereof according to an embodiment of the disclosure, an image displayed on a cover display (e.g., a sub-display, an external display) may be updated (e.g., changed) using power charged in an auxiliary battery (e.g., an image update battery, an image update cap) even when a battery is completely discharged.

Advantageous effects obtainable from the disclosure may not be limited to the above-mentioned effects, and other effects which are not mentioned may be clearly understood, through the descriptions, by those skilled in the art to which the disclosure pertains.

According to an aspect of the disclosure, an electronic device may include a housing, a hinge unit, a first display, a second display, a battery, at least one processor, and a memory. The housing may include a first housing and a second housing. The hinge unit may rotatably connect the first housing and the second housing to each other. The first display may be disposed on a first surface of the first housing and a first surface of the second housing. The second display may be disposed on a second surface of the first housing and/or a second surface of the second housing. The battery may supply power to the first display and the second display. The memory may store instructions. When the instructions are individually or collectively executed by the at least one processor, the electronic device may determine whether state information of the electronic device satisfies a first specific condition. The electronic device may display a first image on the second display, based on that state information of the electronic device satisfies the first specific condition. The electronic device may determine whether state information of the electronic device satisfies a second specific condition, while displaying the first image on the second display. The electronic device may prevent at least a part of the first image from being displayed, based on that state information of the electronic device satisfies the second specific condition.

According to an aspect of the disclosure, the state information of the electronic device may comprise information representing at least one of a remaining capacity of the battery, location information of the electronic device, current time information, and operation time information of the second display.

According to an aspect of the disclosure, the instructions, when executed by the processor, cause the electronic device to display the first image on the second display when or in case that the electronic device enters a designated location. Thus, when or in case that the electronic device enters the designated location, the first image may be displayed on the second display, and when or in case that the electronic device does not enter the designated location, the first image may not be displayed on the second display. The first specific condition may be that the electronic device enters a designated location.

According to an aspect of the disclosure, the instructions, when executed by the processor, cause the electronic device to prevent at least a part of the first image from being displayed when or in case that the electronic device exits from a designated location. Thus, when or in case that the electronic device exits from the designated location, at least a part of the first image may be prevented from being displayed, and when or in case that the electronic device does not exit from the designated location, at least a part of the first image may not be prevented from being displayed. The second specific condition may be that the electronic device exits from a designated location.

According to an aspect of the disclosure, the instructions, when executed by the processor, cause the electronic device to display a second image on the second display in place of the first image when or in case that the electronic device exits from a designated location. Thus, when or in case that the electronic device exits from the designated location, the second image may be displayed on the second display in place of the first image, and when or in case that the electronic device does not exit from the designated location, the second image may not be displayed on the second display in place of the first image. The second specific condition may be that the electronic device exits from a designated location.

According to an aspect of the disclosure, the instructions, when executed by the processor, cause the electronic device to display the first image on the second display when a scheduled time arrives. Thus, when the scheduled time arrives, the first image may be displayed on the second display, and before the scheduled time arrives, the first image may not be displayed on the second display. The first specific condition may be that a scheduled time arrives.

According to an aspect of the disclosure, the instructions, when executed by the processor, cause the electronic device to prevent at least a part of the first image from being displayed when a designated time arrives after the first image is displayed for a predetermined period of time. Thus, when the designated time arrives after the first image is displayed for a predetermined period of time, at least a part of the first image may be prevented from being displayed, and before the designated time arrives after the first image is displayed for a predetermined period of time, at least a part of the first image may not be prevented from being displayed, such that the first image may be displayed completely. The second specific condition may be that a designated time arrives after the first image is displayed for a predetermined period of time.

According to an aspect of the disclosure, the instructions, when executed by the processor, cause the electronic device to display a second image on the second display in place of the first image when a designated time arrives after the first image is displayed for a predetermined period of time. Thus, when the designated time arrives after the first image is displayed for a predetermined period of time, the second image may be displayed on the second display in place of the first image, and before the designated time arrives after the first image is displayed for the predetermined period of time, the second image may not be displayed on the second display in place of the first image. The second specific condition may be that a designated time arrives after the first image is displayed for a predetermined period of time.

According to an aspect of the disclosure, the instructions, when executed by the processor, cause the electronic device to display the first image on the second display, based on a user's image display request. The first specific condition may be that a user's image display request is received by the electronic device.

According to an aspect of the disclosure, the instructions, when executed by the processor, cause, based on a user's image change request, the electronic device may display a second image on the second display in place of the first image. The second specific condition may be that a user's image change request is received by the electronic device.

According to an aspect of the disclosure, the instructions, when executed by the processor, cause the electronic device to prevent at least a part of the first image from being displayed when or in case that a remaining capacity of the battery is less than or sinks below a reference value. Thus, when or in case that the remaining capacity of the battery is less than or sinks below a reference value, at least a part of the first image may be prevented from being displayed, and when or in case that the remaining capacity of the battery is higher than or above a reference value, at least a part of the first image may not be prevented from being displayed. The second specific condition may be that a remaining capacity of the battery is less than or sinks below a reference value.

According to an aspect of the disclosure, the instructions, when executed by the processor, cause the electronic device to display a second image on the second display in place of the first image when or in case that a remaining capacity of the battery is less than or sinks below a reference value. Thus, when or in case that the remaining capacity of the battery is less than or sinks below a reference value, the second image may be displayed on the second display in place of the first image, and when or in case that the remaining capacity of the battery is higher than or above a reference value, the second image may not be displayed on the second display in place of the first image. The second specific condition may be that a remaining capacity of the battery is less than or sinks below a reference value.

According to an aspect of the disclosure, the instructions, when executed by the processor, cause the electronic device to determine whether the first image to be displayed on the second display contains user's personal information; and in case that or if the first image contains the user's personal information, prevent the user's personal information from being displayed in the first image. Thus, in case that or if the first image contains the user's personal information, displaying the user's personal information may be prevented from being displayed in the first image, and in case that or if the first image does not contain the user's personal information, displaying the user's personal information may not be prevented from being displayed in the first image. The first and/or second specific condition may be that the first image contains the user's personal information.

According to an aspect of the disclosure, the instructions, when executed by the processor, cause the electronic device to determine whether the first image to be displayed on the second display contains user's personal information; and in case that or if the first image contains the user's personal information, display a second image on the second display in place of the first image. Thus, in case that or if the first image contains the user's personal information, the second image may be displayed on the second display in place of the first image, and in case that or if the first image does not contain the user's personal information, the second image may not be displayed on the second display in place of the first image. The first and/or second specific condition may be that the first image contains the user's personal information.

In an operation method of an electronic device according to an aspect of the disclosure, the electronic device may include a housing including a first housing and a second housing, a hinge unit configured to rotatably connect the first housing and the second housing to each other, a first display disposed on a first surface of the first housing and a first surface of the second housing, a second display disposed on a second surface of the first housing and/or a second surface of the second housing, a battery configured to supply power to the first display and the second display, at least one processor, and a memory configured to store instructions. The operation method may include determining whether state information of the electronic device satisfies a first specific condition. Based on that state information of the electronic device satisfies the first specific condition, a first image may be displayed on the second display. The operation method may include determining whether the state information of the electronic device satisfies a second specific condition while the first image is displayed on the second display. The operation method may include preventing at least a part of the first image from being displayed, based on that state information of the electronic device satisfies the second specific condition.

According to an aspect of the disclosure, in a non-transitory computer-readable recording medium storing instructions readable by the processor of an electronic device, the instructions, when executed by the processor, may cause the electronic device to determine whether state information of the electronic device satisfies a first specific condition. The instructions, when executed by the processor, may cause the electronic device to display a first image on a second display, based on that state information of the electronic device satisfies the first specific condition. The instructions, when executed by the processor, may cause the electronic device to determine whether state information of the electronic device satisfies a second specific condition while the first image is displayed on the second display. Based on that state information of the electronic device satisfies the second specific condition, the instructions, when executed by the processor, may cause the electronic device to prevent at least a part of the first image from being displayed.

According to an aspect of the disclosure, the image analysis AI module may be trained with data that is deemed to represent or be personal information and data that is deemed to represent or be impersonal information. Personal information may be the user's name, the user's birthday, the user's address, the user's health data and the like, e.g. as defined in table 1. According to an aspect of the disclosure, the image analysis AI module may be trained with data that is deemed to represent or be sensitive information and data that is deemed to represent or be insensitive information. Sensitive information may be information that is impersonal, but that the user may not wish to readily share with third parties like place information, payment-related information, QR(quick response) code information for entry to and exit from a designated place and the like, e.g. as defined in table 1. According to an aspect of the disclosure, the image analysis AI module may be trained with data that is deemed to represent or be invalid information and data that is deemed to represent or be valid information. Invalid information may be a time, e.g. a start time of an event or a period of an event, wherein the current time is after that time. Alternatively, invalid information may concern a location, wherein the information become invalid e.g. when the user with the device leaves the location.

According to an aspect of the disclosure, the suit-cover can be an image.

According to an aspect of the disclosure, an electronic device may include a housing, a first display (330) disposed on a first portion of the housing, wherein the first display comprising OLED or LCD, a second display (540) disposed on a second portion of the housing, wherein after an image on the second display has been updated, no power is required to maintain the image on the second display, wherein the second display comprising electronic ink and electrophoretic display, a battery (189), at least one processor (510), and a memory (130). the memory (130) configured to store instructions that, when executed by the at least one processor (510) individually or collectively, cause the electronic device (400, 500) to identify if state information of the electronic device (400, 500) satisfies a defined condition. the memory (130) configured to store instructions that, when executed by the at least one processor (510) individually or collectively, cause the electronic device (400, 500) to control the second display to change at least a portion of the first image, based on identifying that the state information of the electronic device (400, 500) satisfies the defined condition.

According to an aspect of the disclosure, wherein the state information of the electronic device (400, 500) comprises information representing at least one of a remaining capacity of the battery, location information of the electronic device (400, 500), current time information, and operation time information of the second display (540). The instructions, when executed by the at least one processor, cause the electronic device to obtain a second image to be displayed on the second display before the electronic device is shut down due to a low battery level. The instructions, when executed by the at least one processor, cause the electronic device to control the second display to display the second image before the electronic device is shut down due to a low battery level.

According to an aspect of the disclosure, wherein the electronic device is configured to, when the instructions are executed by the at least one processor 510, in case that the electronic device 400, 500 enters a designated location, display the first image on the second display 540, in case that the electronic device 400, 500 enters a designated location. The instructions, when executed by the at least one processor 510, cause the electronic device 400, 500 to after an image on the second display 540 has been updated, no power is required to maintain the image on the second display 540.

According to an aspect of the disclosure, wherein the electronic device 400, 500 comprises a capacitor storing an electrical charge. After the battery is discharged and the electronic device 400, 500 is turned off, the electronic device 400, 500 using the capacitor to update the image on the second display.

## Claims

1. An electronic device (400, 500) comprising:
a housing;
a first display (330) disposed on a first portion of the housing, wherein the first display comprising OLED or LCD;
a second display (540) disposed on a second portion of the housing, wherein after an image on the second display has been updated, no power is required to maintain the image on the second display; wherein the second display comprising electronic ink and electrophoretic display;
a battery (189);
at least one processor (510); and
a memory (130) configured to store instructions that, when executed by the at least one processor (510) individually or collectively, cause the electronic device (400, 500) to:
identify if state information of the electronic device (400, 500) satisfies a defined condition; and
control the second display to change at least a portion of the first image, based on identifying that the state information of the electronic device (400, 500) satisfies the defined condition.

2. The electronic device (400, 500) of claim 1, wherein the state information of the electronic device (400, 500) comprises information representing at least one of a remaining capacity of the battery, location information of the electronic device (400, 500), current time information, and operation time information of the second display (540),
obtain a second image to be displayed on the second display before the electronic device is shut down due to a low battery level,
control the second display to display the second image before the electronic device is shut down due to a low battery level.

3. The electronic device (400, 500) of claim 1 or 2, wherein the electronic device (400, 500) is configured to, when the instructions are executed by the at least one processor (510), in case that the electronic device (400, 500) enters a designated location, display the first image on the second display (540), in case that the electronic device (400, 500) enters a designated location,
wherein, after an image on the second display has been updated, no power is required to maintain the image on the second display.

4. The electronic device (400, 500) of claim 3, wherein the instructions, when executed by the processor (510), cause the electronic device (400, 500) to prevent at least a part of the first image from being displayed in case that the electronic device (400, 500) exits from a designated location.

5. The electronic device (400, 500) of claim 3, wherein the instructions, when executed by the processor (510), cause the electronic device (400, 500) to display a second image on the second display (540) in place of the first image in case that the electronic device (400, 500) exits from a designated location.

6. The electronic device (400, 500) of claim 1 or 2, wherein the instructions, when executed by the processor (510), cause the electronic device (400, 500) to display the first image on the second display (540) when a scheduled time arrives.

7. The electronic device (400, 500) of claim 6, wherein the instructions, when executed by the processor (510), cause the electronic device (400, 500) to prevent at least a part of the first image from being displayed when a designated time arrives after the first image is displayed for a predetermined period of time.

8. The electronic device (400, 500) of claim 6, wherein the instructions, when executed by the processor (510), cause the electronic device (400, 500) to display a second image on the second display (540) in place of the first image when a designated time arrives after the first image is displayed for a predetermined period of time.

9. The electronic device (400, 500) of claim 1 or 2, wherein the instructions, when executed by the processor (510), cause the electronic device (400, 500) to display the first image on the second display (540), based on a user's image display request.

10. The electronic device (400, 500) of claim 9, wherein the instructions, when executed by the processor (510), cause, based on a user's image change request, the electronic device (400, 500) to display a second image on the second display (540) in place of the first image.

11. The electronic device (400, 500) of claim 1, or 2, wherein the instructions, when executed by the processor (510), cause the electronic device (400, 500) to prevent at least a part of the first image from being displayed in case that a remaining capacity of the battery is less than a reference value, or cause the electronic device (400, 500) to display a second image on the second display (540) in place of the first image.

12. The electronic device (400, 500) of claim 1, or 2, wherein the electronic device(400, 500) comprises a capacitor storing an electrical charge, after the battery is discharged and the electronic device (400, 500) is turned off, the electronic device (400, 500) using the capacitor to update the image on the second display.

13. The electronic device (400, 500) of claim 3, 6, or 9, wherein the instructions, when executed by the processor (510), cause the electronic device (400, 500) to:
determine whether the first image to be displayed on the second display (540) contains user's personal information; and
in case that the first image contains the user's personal information, prevent the user's personal information from being displayed in the first image or display a second image on the second display (540) in place of the first image.

14. An operation method of an electronic device (400, 500),
the electronic device (400, 500) including a housing including a first housing (310) and a second housing (320), a hinge unit configured to rotatably connect the first housing (310) and the second housing (320) to each other, a first display (330) disposed on a first surface(311) of the first housing (310) and the second housing (320), a second display (540) disposed on a second surface of the first housing (310) and/or of the second housing (320), a battery (189) configured to supply power to the first display (330) and the second display (540), at least one processor (510), and a memory configured to store instructions,
wherein the operation method includes:
determining (3110) whether state information of the electronic device (400, 500) satisfies a first specific condition, wherein, based on that the state information of the electronic device (400, 500) satisfies a first specific condition,
displaying (3120) a first image on the second display (540),
determining (3130) whether the state information of the electronic device (400, 500) satisfies a second specific condition while the first image is displayed on the second display (540),
and
preventing (3140) at least a part of the first image from being displayed, based on that state information of the electronic device (400, 500) satisfies the second specific condition.

15. A non-transitory computer-readable recording medium storing instructions executable by a processor (510) of an electronic device (400, 500), the electronic device (400, 500) including a housing including a first housing (310) and a second housing (320), a hinge unit configured to rotatably connect the first housing (310) and the second housing (320) to each other, a first display (330) disposed on a first surface(311) of the first housing (310) and the second housing (320), a second display (540) disposed on a second surface of the first housing (310) and/or of the second housing (320), a battery (189) configured to supply power to the first display (330) and the second display (540), at least one processor (510), and a memory configured to store the instructions,
wherein the instructions, when executed by the processor, cause the electronic device (400, 500) to:
determine whether state information of the electronic device (400, 500) satisfies a first specific condition,
display a first image on a second display, based on that state information of the electronic device satisfies the first specific condition,
determine whether state information of the electronic device satisfies a second specific condition while the first image is displayed on the second display, and,
based on that state information of the electronic device satisfies the second specific condition, prevent at least a part of the first image from being displayed.
